# EUROPEAN PATENT SPECIFICATION

(11) **EP 4 523 357 B1**
(45) Date of publication and mention of the grant of the patent: **25.02.2026**
(21) Application number: 23725448.7
(22) Date of filing: 26.04.2023
(51) Int. Cl.: H04L 1/1607

(54) **WIRELESS COMMUNICATION CONTROL DEVICE AND METHOD, AND PROGRAM**
VORRICHTUNG UND VERFAHREN ZUR STEUERUNG VON DRAHTLOSER KOMMUNIKATION UND PROGRAMM
DISPOSITIF ET PROCÉDÉ DE COMMANDE DE COMMUNICATION SANS FIL, ET PROGRAMME

(30) Priority: 11.05.2022 JP 2022078387
(43) Date of publication of application: 19.03.2025
(60) Divisional application: 26151261.0
(73) Proprietor: Sony Group Corporation, Tokyo 108-0075 (JP)
(72) Inventor: SUGAYA Shigeru, Tokyo 108-0075 (JP); TANAKA Yusuke, Tokyo 108-0075 (JP); AIO Kosuke, Tokyo 108-0075 (JP); HIRATA Ryuichi, Tokyo 108-0075 (JP)
(74) Representative: D Young & Co LLP
(86) International application number: PCT/JP2023/016378
(87) International publication number: WO 2023/218950

(56) References cited:
- EP-A1- 3 764 702
- EP-A1- 3 902 348
- US-B2- 8 817 809

## Description

### Technical Field

The present technology relates to a wireless communication control device and method, and a program, and more particularly, to a wireless communication control device and method, and a program that are capable of more reliably performing data transmission, as defined by the appended claims.

### <CROSS REFERENCE TO RELATED APPLICATIONS>

This application claims the benefit of Japanese Priority Patent Application JP 2022-078387 filed on May 11, 2022.

### Background Art

Currently, in the IEEE working group, technical discussion is being advanced toward the IEEE 802.11be (Extremely High Throughput) (EHT) standard, designated as Wi-Fi 7, as a successor to the IEEE 802.11ax standard, and the operation of extended multi-link single radio (EMLSR) is being defined therein.

EMLSR is a method for simplifying the operation of multi-link multi radio that operates independently in all preset links (pre-configure link).

That is, in EMLSR, exchange of a control frame is performed on the multi radio link, and the operation related to actual data transmission and reception is performed on the single radio link. Note that EMLSR is described in PTL 1.

Adoption of EMLSR as Release 1, which is an initial version of the IEEE 802.11be standard, is recognized to have an advantage of being capable of implementation with the circuit scale being reduced from the original plan, and an advantage of being capable of early introduction of a product equipped with these technologies to the market.

However, in a case where EMLSR is adopted, there are more newly defined portions operating with single radio than those in the configuration of multi radio originally assumed at the beginning of IEEE 802.11be standardization, and therefore there are restrictions regarding the access control method and transmission and reception of data.

### Citation List

### Patent Literature

[PTL 1] JP 2021-150786A
[PTL 2] EP 3 902 348 A1 discloses a communication device and method.
[PTL 3] US8817809 B2 discloses selection of a single communication link among a plurality of available links.

### Summary of Invention

### Technical Problem

When the communication terminal (EMLSR STA) compatible with EMLSR once terminates reception of data, it is necessary to wait for a control frame (Multi-STA RTS) sent from an access point (AP) or the like in all pre-configure links. Thereafter, EMLSR STA returns a responding control frame (CTS) on the link where Multi-STA RTS is received, specifies the single radio to operate next, and transitions to the specified single radio.

That is, in a case where EMLSR STA cannot detect Multi-STA RTS in any link of pre-configure link, it has been difficult to specify a single radio link that operates next.

The present technology has been made in view of such a situation, and enables more reliable data transmission.

### Solution to Problem

A wireless communication control device according to one aspect of the present technology includes a communication control unit that performs control to receive first information from a wireless communication device via one link of a plurality of links preset with the wireless communication device, and to transmit second information indicating an available link of the plurality of links.

A wireless communication control device according to another aspect of the present technology includes a communication control unit that performs control to transmit first information to a wireless communication device via one link of a plurality of links preset with the wireless communication device, acquires second information indicating an available link of the plurality of links, and specifies a link to be used for communication performed after reception of the second information on the basis of the second information.

In one aspect of the present technology, control is performed to receive first information from a wireless communication device via one link of a plurality of links preset with the wireless communication device, and to transmit second information indicating an available link of the plurality of links.

In another aspect of the present technology, control is performed to transmit first information to a wireless communication device via one link of a plurality of links preset with the wireless communication device, second information indicating an available link of the plurality of links is acquired, and a link to be used for communication performed after reception of the second information is specified on the basis of the second information.

### Brief Description of Drawings

[Fig.1]Fig. 1 is a view illustrating a configuration example of a wireless communication system according to a first embodiment of the present technology.
[Fig.2]Fig. 2 is a view illustrating an operation example for each block of a device compatible with EMLSR.
[Fig.3]Fig. 3 is a view illustrating an operation sequence of past AP and EMLSR STA.
[Fig.4]Fig. 4 is a view illustrating an operation sequence of AP and EMLSR STA in the first embodiment of the present technology.
[Fig.5]Fig. 5 is a block diagram illustrating a configuration example of a wireless communication device.
[Fig.6]Fig. 6 is a block diagram illustrating a configuration example of a wireless communication module of Fig. 5.
[Fig.7]Fig. 7 is a block diagram illustrating another configuration example of the wireless communication module of Fig. 5.
[Fig.8]Fig. 8 is a view illustrating a configuration example of a frame of the first embodiment of the present technology.
[Fig.9]Fig. 9 is a view illustrating a first configuration example of a single radio block ACK frame.
[Fig.10]Fig. 10 is a view illustrating a second configuration example of a single radio block ACK frame.
[Fig.11]Fig. 11 is a view illustrating a configuration of capability information including a link identifier (link ID) that needs exchange in a case where information in bitmap format is described.
[Fig.12]Fig. 12 is a view illustrating a third configuration example of a single radio block ACK frame.
[Fig.13]Fig. 13 is a flowchart explaining data transmission processing in the first embodiment.
[Fig.14]Fig. 14 is a flowchart following Fig. 13, explaining data transmission processing.
[Fig.15]Fig. 15 is a flowchart explaining data reception processing of EMLSR STA in the first embodiment.
[Fig.16]Fig. 16 is a flowchart following Fig. 15, explaining data reception processing of EMLSR STA.
[Fig.17]Fig. 17 is a view illustrating another operation sequence of a communication device (AP) on a data transmission side and EMLSR STA in the first embodiment of the present technology.
[Fig.18]Fig. 18 is a view illustrating an operation sequence of a communication device (AP) on a data transmission side and EMLSR STA in a second embodiment of the present technology.
[Fig.19]Fig. 19 is a view illustrating a configuration example of a frame of the second embodiment of the present technology.
[Fig.20]Fig. 20 is a view illustrating a first configuration example of an A-MPDU frame of the second embodiment of the present technology.
[Fig.21]Fig. 21 is a view illustrating a second configuration example of the A-MPDU frame of the second embodiment of the present technology.
[Fig.22]Fig. 22 is a view illustrating a first configuration example of an A-control field of a discretionary frame.
[Fig.23]Fig. 23 is a view illustrating a second configuration example of an A-control field of a discretionary frame.
[Fig.24]Fig. 24 is a view illustrating a configuration example of an aggregation frame.
[Fig.25]Fig. 25 is a flowchart explaining data transmission processing of a communication device (AP) on a data transmission side in the second embodiment of the present technology.
[Fig.26]Fig. 26 is a flowchart following Fig. 25, explaining the data transmission processing of the communication device (AP) on the data transmission side.
[Fig.27]Fig. 27 is a flowchart explaining data reception processing of EMLSR STA in the second embodiment of the present technology.
[Fig.28]Fig. 28 is a flowchart following Fig. 27, explaining the data reception processing of EMLSR STA.
[Fig.29]Fig. 29 is a view illustrating an operation sequence of AP and EMLSR STA in a third embodiment of the present technology.
[Fig.30]Fig. 30 is a view illustrating a fourth configuration example of a single radio block ACK frame.
[Fig.31]Fig. 31 is a flowchart explaining data reception processing of EMLSR STA in the third embodiment of the present technology.
[Fig.32]Fig. 32 is a flowchart following Fig. 31, explaining the data reception processing of EMLSR STA.
[Fig.33]Fig. 33 is a view illustrating an operation sequence of EMLSR STA in a fourth embodiment of the present technology.
[Fig.34]Fig. 34 is a view illustrating an operation sequence of AP in the fourth embodiment of the present technology.
[Fig.35]Fig. 35 is a view illustrating a configuration example of a quick reserve single radio control frame.
[Fig.36]Fig. 36 is a view illustrating a configuration example of an open reserve single radio control frame.
[Fig.37]Fig. 37 is a view illustrating a configuration example of a frame of the fourth embodiment of the present technology.
[Fig.38]Fig. 38 is a view illustrating the fourth configuration example of the single radio block ACK frame.
[Fig.39]Fig. 39 is a view illustrating a configuration example of an A-MPDU frame of the fourth embodiment of the present technology.
[Fig.40]Fig. 40 is a flowchart explaining data transmission processing of a communication device (AP) on a data transmission side in the fourth embodiment of the present technology.
[Fig.41]Fig. 41 is a flowchart following Fig. 40, explaining the data transmission processing of the communication device (AP) on the data transmission side.
[Fig.42]Fig. 42 is a flowchart explaining data reception processing of EMLSR STA in the fourth embodiment of the present technology.
[Fig.43]Fig. 43 is a flowchart following Fig. 42, explaining the data reception processing of EMLSR STA.
[Fig.44]Fig. 44 is a flowchart following Fig. 42, explaining the data reception processing of EMLSR STA.
[Fig.45]Fig. 45 is a block diagram illustrating a configuration example of a computer.
[Fig.46]Fig. 46 is a block diagram illustrating a schematic configuration example of a smartphone to which the present technology is applied.
[Fig.47]Fig. 47 is a block diagram illustrating a schematic configuration example of an in-vehicle device to which the present technology is applied.
[Fig.48]Fig. 48 is a block diagram illustrating a schematic configuration example of a wireless AP to which the present technology is applied.

### Description of Embodiments

Embodiments for carrying out the present technology will be described below. The description will be given in the following order.
1. First Embodiment (Available Single Radio Link Information)
2. Second Embodiment (Next Single Radio Link Information)
3. Third Embodiment (Combination of First Embodiment and Second Embodiment)
4. Fourth Embodiment (quick reserve single radio control frame)
5. Others

### <<1. First Embodiment (Available Single Radio Link Information)>>

### <Configuration of Wireless LAN System>

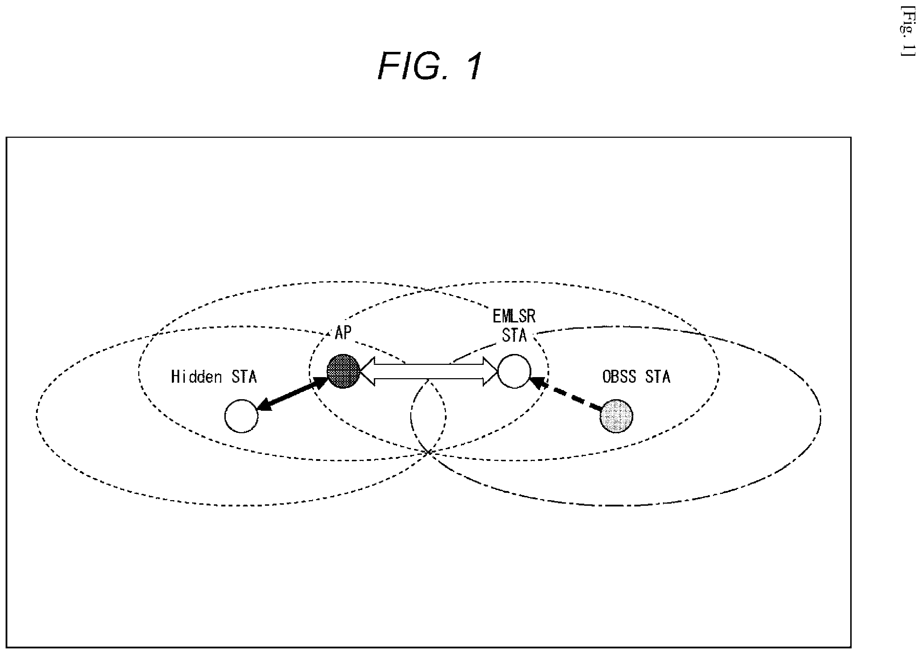

Fig. 1 is a view illustrating a configuration example of a wireless communication system according to the first embodiment of the present technology.

The wireless communication system of Fig. 1 includes an AP, an EMLSR STA, and a hidden terminal (Hidden STA) that form one network of a wireless local area network (LAN) as a basic service set (BSS).

In Fig. 1, the AP, the EMLSR STA, and the hidden STA are in a state capable of communicating with a communication device existing in radio wave reach. The radio wave reach is indicated by a broken line ellipse centered on the marks representing the AP, the EMLSR STA, and the hidden STA.

The AP is a device that operates as an access point. The EMLSR STA is a device that operates as a terminal compatible with the EMLSR. The AP and the EMLSR STA implement data transmission as indicated by the white arrow.

The Hidden STA is a device that operates as a terminal, and exists at a position hidden with respect to the EMLSR STA. The Hidden STA implements data transmission with the AP as indicated by the black arrow.

An O (Overlap) BSS (OBSS) STA, which is an STA forming another communication network (OBSS), exists around the EMLSR STA. The OBSS STA is a device that operates as a terminal, and can communicate with a communication device (EMLSR STA in a case of Fig. 1) existing within radio wave reach indicated by the one-dot chain line ellipse.

Accordingly, as indicated by the dashed arrow, in a case where the EMLSR STA detects a signal from the OBSS STA, the EMLSR STA can no longer correctly detect a control frame such as an RTS from the AP.

### <Operation of Device Compatible with EMLSR>

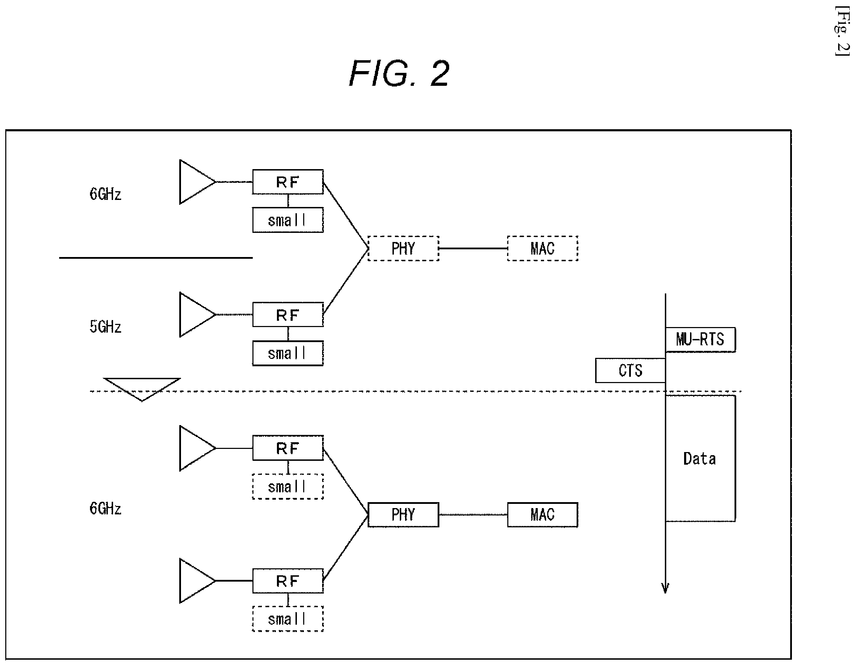

Fig. 2 is a view illustrating an operation example for each block of the device compatible with the EMLSR.

In the upper part of Fig. 2, blocks such as an MU RTS and a CTS illustrated on the right side that operate in a case where control frames are exchanged are indicated by solid lines. Note that blocks that do not operate are indicated in Fig. 2 by broken lines.

Control frame exchange is performed on a plurality of radios. In a case of operation using multi radio, for example, a 5 GHz band and a 6 GHz band, a high-frequency wave processing unit (RF) that operates using a link (radio) of the 5 GHz band and a block (Small) capable of processing a control frame with respect to the RF are configured. Similarly, an RF that operates using a link (radio) of the 6 GHz band and a small that capable of processing a control frame with respect to the RF are configured. Accordingly, the plurality of radios is in a state of being able to receive the control frame.

In the lower part of Fig. 2, blocks that operate in a case where a data frame illustrated on the right side is transmitted and received are indicated by solid lines.

In transmission and reception of the data frame, only an operation using the single radio, for example, the 6 GHz band radio is possible. In a case of operating using the radio of the 6 GHz band, the two RFs operate with the radio of the 6 GHz band, and data transmission and reception via the two RFs are performed by a physical layer block (PHY) and a medium control block (MAC).

Note that in Fig. 2, a simple block configuration is illustrated for explaining the minimum EMLSR operation, and the block configuration of the wireless communication device according to the present technology is not limited to this block configuration.

### <Operation of Past AP and EMLSR STA>

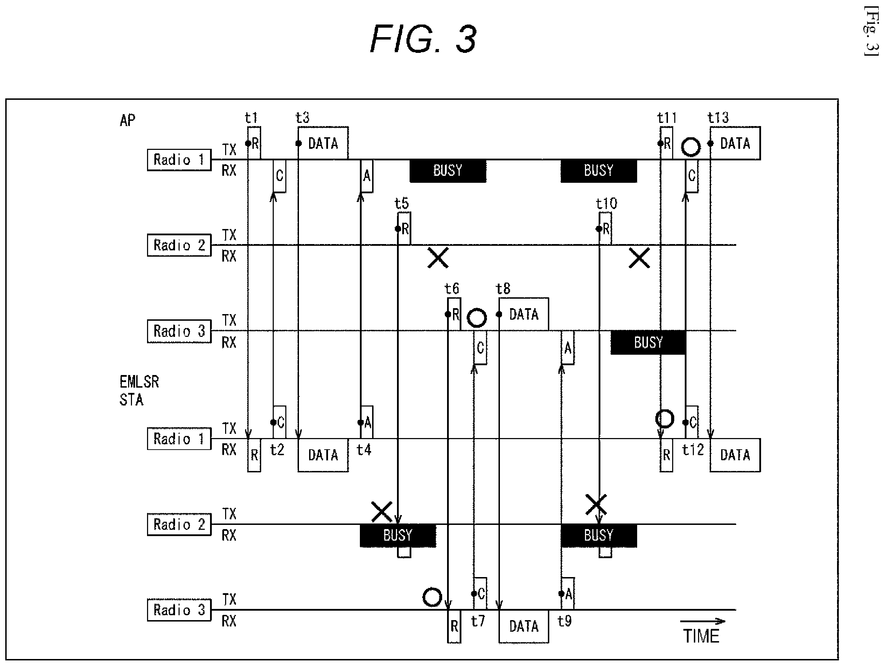

Fig. 3 is a view illustrating the operation sequence of past AP and EMLSR STA.

Note that the EMLSR STA performs EMLSR operation of operating using multi radio when exchanging control frames, and operating using single radio after exchanging control frames.

In Fig. 3, it is assumed that an AP or a communication device (AP in the figure) that performs multi-link multi-radio operation and an EMLSR STA that performs multi-link single radio operation exchange predetermined data and operate using pre-configure links (Radio 1 to Radio 3), which are preset links.

Furthermore, in Fig. 3, the solid arrow represents signal transmission, the rectangle on the horizontal axis represents a signal being transmitted (TX), and the rectangle below the horizontal axis represents a signal being received (RX).

At timing t1, the AP transmits a multi-user RTS frame (hereinafter, RTS frame (R in the figure)) as a control frame, for example, by using Radio 1, and notifies the EMLSR STA of the start of data transmission. The EMLSR STA receives the RTS frame.

At timing t2, in a case of responding to the RTS frame, the EMLSR STA returns a CTS frame (C in the figure) to the AP. The AP receives the CTS frame.

At timing t3, the AP starts data (DATA in the figure) transmission. The EMLSR STA starts data reception.

After the end of the data transmission, at timing t4, the EMLSR STA transmits, as necessary, an ACK frame (A in the figure), which is a response frame for data reception acknowledgement. The AP receives the ACK frame. Therefore, the data transmission in Radio 1 ends.

Note that since the communication device can occupy each radio only for a predetermined time, it is not possible to use the same radio for a period based on a predetermined back-off. Accordingly, in a case where data transmission is not completed within a predetermined time or in a case where there is undelivered data, the communication device needs to continue the data transmission.

Here, in order to continue the data transmission by the AP, the AP transmits the RTS frame using, for example, Radio 2 at timing t5. However, the EMLSR STA is in the busy state because a signal is transmitted from another communication device by using Radio 2, and the EMLSR STA is interfered with a signal and cannot correctly receive the RTS frame.

In this case, a CTS frame responsive to this RTS is not returned from the EMLSR STA to the AP. Since the CTS frame from the STA does not arrive, the AP selects another link among the pre-configure links and retransmits the RTS frame.

In Fig. 3, at timing t6, the AP transmits the RTS frame to the EMLSR STA by using Radio 3.

In a case where the RTS frame can be correctly received by using Radio 3, the EMLSR STA returns the CTS frame to the AP at timing t7.

The AP can perform data transmission at timing t8 by receiving the CTS frame transmitted from the STA using Radio 3. Furthermore, the EMLSR STA also performs data reception using Radio 3.

After the end of the data transmission, at timing t9, the EMLSR STA transmits the ACK frame as necessary. The AP receives the ACK frame. Therefore, the data transmission using Radio 3 ends.

Similarly, after data transmission using Radio 3, in a case where the AP desires to perform data transmission addressed to the EMLSR STA, the AP transmits an RTS frame to the EMLSR STA by using Radio 2 that is an available link at timing t10.

Here, since the EMLSR STA is in the busy state due to a signal from another communication device or the like and cannot correctly decode the RTS frame by using Radio 2, the EMLSR STA cannot return the CTS frame.

Since there is no return of the CTS frame from the EMLSR STA, the AP transmits the RTS frame by using Radio 1 at timing t11 in order to use another pre-configure link (Radio 1).

In a case where the RTS frame can be correctly received by using Radio 1, at timing t12, the EMLSR STA returns a CTS frame to the AP.

By detecting the CTS frame from the STA by using Radio 1, the AP can perform data transmission by using Radio 1 at timing t13, and the EMLSR STA can also perform data reception by using Radio 1.

As described above, if the EMLSR STA cannot detect the RTS frame by using the pre-configure link, it is difficult to specify the link of the single radio to operate next.

Furthermore, if there is no response of the CTS frame in a certain pre-configure link, it is difficult to use the channel, and thus the AP needs to retransmit the RTS frame using another pre-configure link. For this reason, access control delay for retransmission of the RTS frame occurs, and it takes time to perform data transmission.

### <Operation of AP and EMLSR STA in First Embodiment of Present Technology>

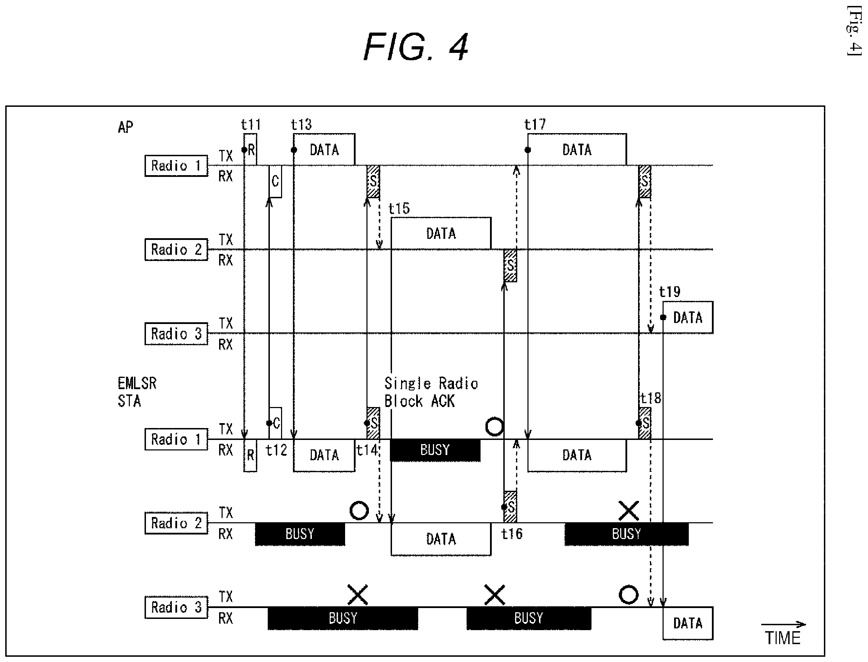

Fig. 4 is a view illustrating an operation sequence of AP or a communication device (AP in the figure) on the data transmission side and EMLSR STA in the first embodiment of the present technology.

Since timings t11 to t13 in Fig. 4 are the same as timings t1 to t3 in Fig. 3 in terms of processing, the description on that will be omitted.

Note that in Fig. 4, the solid arrow indicates signal transmission, and the broken arrow indicates control signal transmission between links.

In the case of Fig. 4, after the end of the data transmission at timing t13, at timing t14, the EMLSR STA detects the usage status of the pre-configure link, generates information regarding an available link (available single radio link information) among the pre-configure links, and includes and transmits, to the AP, the information in an ACK frame (S in the figure). The ACK frame including the available single radio link information will hereinafter be referred to as single radio block ACK frame.

Specifically, at the timing when the data transmission using Radio 1 ends, the EMLSR STA refrains from using Radio 3 that is interfered with by another OBSS STA due to the presence of a predetermined noise level or the like, and determines that Radio 2 whose noise level is equal to or less than the predetermined level is available.

At timing t14 immediately after data transmission, the EMLSR STA can notify the AP of information on the available link by transmitting a single radio block ACK frame including the available single radio link information to the AP.

On the other hand, in a case of receiving a single radio block ACK frame including the available single radio link information, for example, the AP can learn that the EMLSR STA is currently in a state where Radio 2 is available.

At timing t15, in a case where the AP itself is also capable of using Radio 2 and has transmission data addressed to the EMLSR STA, the AP can again perform data transmission to the EMLSR STA using Radio 2.

Similarly, in a case where the data transmission using Radio 2 is terminated, at timing t16, the EMLSR STA determines that it is difficult to use Radio 3 and it is possible to use Radio 1 at the next transmission timing (timing t17), and includes and transmits, to the AP, the available single radio link information in the single radio block ACK frame.

The AP receives the single radio block ACK frame including the available single radio link information, and learns that the EMLSR STA is in a state where Radio 1 is available.

At timing t17, in a case where the AP itself is also capable of using Radio 1 and has transmission data addressed to the EMLSR STA, the AP can again perform data transmission to the EMLSR STA using Radio 1.

Similarly, in a case where the data transmission using Radio 1 is terminated, at timing t18, the EMLSR STA determines that it is difficult to use Radio 2 and it is possible to use Radio 3 at the next transmission timing (timing t19), and includes and transmits, to the AP, the available single radio link information in the single radio block ACK frame.

The AP receives the single radio block ACK frame including the available single radio link information, and learns that the EMLSR STA is in a state where Radio 3 is available.

At timing t19, in a case where the AP itself is also capable of using Radio 3 and has transmission data addressed to the EMLSR STA, the AP can again perform data transmission to the EMLSR STA using Radio 3.

As described above, since the frame including the available single radio link information based on the latest pre-configure link usage status is transmitted from the device on the data reception side, the device on the data reception side can specify a link for waiting for data transmission to perform next, and redundant information exchange can be reduced. Here, in the present technology, to perform next means performing temporally after transmission of the available single radio link information, and the timing may be immediately after the transmission of the available single radio link information or needs not be immediately after as long as the timing is temporally after the transmission.

Specifically, available single radio link information, which is information on an available link among pre-configure links, is transmitted by using a block ACK frame, which is one of the control frames. Note that the frame to be used is not limited to the control frame, and may be a data frame or another frame.

Furthermore, the EMLSR STA may construct a new frame, include the available single radio link information in the constructed frame, and transmit the constructed frame immediately before or immediately after the return timing of the block ACK frame.

In the available single radio link information, information indicating a link whose noise level to be interfered with is the lowest that is selected from preset pre-configure links is expressed by about 4 bits.

Alternatively, the available single radio link information may include, by using a bitmap format, information indicating a link whose noise level to be interfered with is equal to or less than a predetermined threshold, the link being determined to be available from the preset pre-configure links.

Based on the above description, details of the first embodiment of the present technology will be described below.

### <Configuration of Wireless Communication Device>

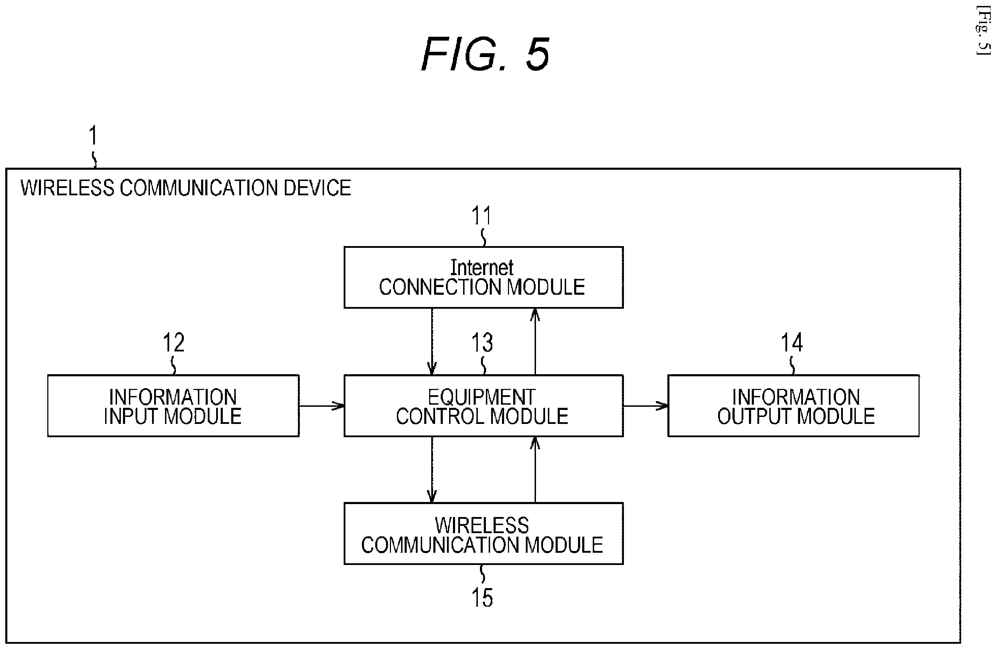

Fig. 5 is a block diagram illustrating a configuration example of a wireless communication device of the present technology.

A wireless communication device 1 in Fig. 5 is a wireless communication device that operates as an AP or an STA.

The wireless communication device 1 includes an Internet connection module 11, an information input module 12, an equipment control module 13, an information output module 14, and a wireless communication module 15.

Note that the wireless communication device may include only necessary modules.

The Internet connection module 11 is configured to implement, as an AP, a function such as a communications modem for connecting to an Internet network in a case of operating in accordance with control of the equipment control module 13. The Internet connection module 11 connects a public communication line and the Internet via an Internet service provider.

The information input module 12 outputs information indicating an instruction input by the user to the equipment control module 13. The information input module 12 includes a press button, a keyboard, and a touchscreen.

The equipment control module 13 includes a central processing unit (CPU), a read only memory (ROM), and a random access memory (RAM). The equipment control module 13 executes a program stored in the ROM or the like, causes an application to function in an upper layer, and performs control to operate as an AP or an STA.

The information output module 14 outputs information regarding the operating state of the wireless communication device 1 supplied from the equipment control module 13 or information obtained via the Internet. The information output module 14 includes a display element such as a light emitting diode (LED), a liquid crystal panel, or an organic display, and a speaker that outputs sound or music. The information output module 14 performs display and notification of necessary information to the user.

The wireless communication module 15 transmits, to another wireless communication device 1, data supplied from the equipment control module 13 by performing wireless communication. The wireless communication module 15 receives data transmitted from another wireless communication device 1 by performing wireless communication, and outputs the received data to the equipment control module 13.

### <Configuration of Wireless Communication Module>

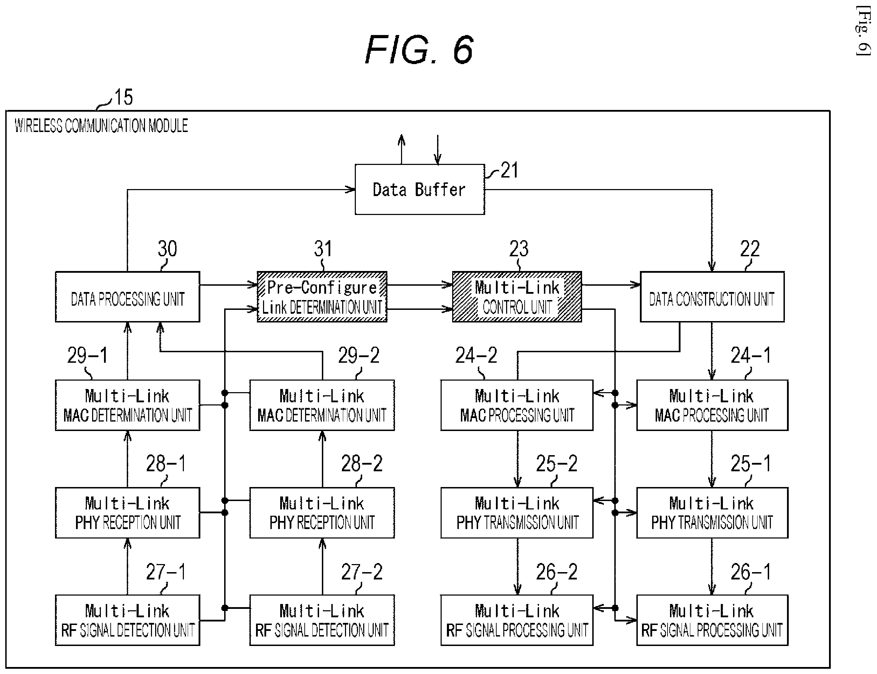

Fig. 6 is a block diagram illustrating a configuration example of the wireless communication module 15 in a case of operating as an AP.

The configuration of the wireless communication module 15 in Fig. 6 is, for example, the configuration of an AP in a network in which an EMLSR STA exists or the configuration of an STA of a multi-link device compatible with extended multi-link multi radio (EMLMR).

The wireless communication module 15 is configured to include a data buffer 21, a data construction unit 22, a multi-link control unit 23, multi-link MAC processing units 24-1 and 24-2, multi-link PHY processing units 25-1 and 25-2, and multi-link RF signal processing units 26-1 and 26-2. Each of these blocks is configured to have the number corresponding to the number of radios that can be configured by multi link, but here, in order to simplify the description, the blocks are described as minimum two blocks.

Furthermore, the wireless communication module 15 is configured to include multi-link RF detection units 27-1 and 27-2, multi-link PHY reception units 28-1 and 28-2, multi-link MAC determination units 29-1 and 29-2, a data processing unit 30, and a pre-configure link determination unit 31.

The data buffer 21 receives transmission data from the equipment control module 13 and temporarily stores the transmission data.

The data construction unit 22 constructs data to be processed at the time of data transmission. That is, the wireless communication module 15 of Fig. 6 is configured to be operable in multi link by the data construction unit 22 delivering data to be transmitted to the data transmission block of each radio.

The multi-link control unit 23 performs communication control using each radio at the time of data transmission of the wireless communication module 15 compatible with the multi link.

The multi-link MAC processing unit 24-1, the multi-link PHY processing unit 25-1, and the multi-link RF signal processing unit 26-1 are configured as a first data transmission block to be processed using Radio 1. The multi-link MAC processing unit 24-2, the multi-link PHY processing unit 25-2, and the multi-link RF signal processing unit 26-2 are configured as a second data transmission block to be processed using Radio 2.

Hereinafter, the multi-link MAC processing units 24-1 and 24-2, the multi-link PHY processing units 25-1 and 25-2, and the multi-link RF signal processing units 26-1 and 26-2 will be referred to as multi-link MAC processing unit 24, multi-link PHY processing unit 25, and multi-link RF signal processing unit 26, respectively, in a case where there is no particular need for distinguishing them.

The multi-link MAC processing unit 24 performs access control on data to be transmitted.

The multi-link PHY processing unit 25 converts transmission data into a baseband signal.

The multi-link RF signal processing unit 26 performs high-frequency processing on the baseband signal converted by the multi-link PHY processing unit 25, and transmits the baseband signal from an antenna.

The multi-link RF detection unit 27-1, the multi-link PHY reception unit 28-1, and the multi-link MAC determination unit 29-1 are configured as a first data reception block to be processed with Radio 1. The multi-link RF detection unit 27-2, the multi-link PHY reception unit 28-2, and the multi-link MAC determination unit 29-2 are configured as a second data reception block to be processed with Radio 2.

Hereinafter, the multi-link RF detection units 27-1 and 27-2, the multi-link PHY reception units 28-1 and 28-2, and the multi-link MAC determination units 29-1 and 29-2 will be referred to as multi-link RF detection unit 27, multi-link PHY reception unit 28, and multi-link MAC determination unit 29, respectively, in a case where there is no particular need for distinguishing them.

The multi-link RF detection unit 27 detects a waveform of a received data portion from a signal received by the antenna.

The multi-link PHY reception unit 28 extracts the baseband signal from the waveform detected by the multi-link RF detection unit 27.

The multi-link MAC determination unit 29 detects a predetermined frame in a channel from the baseband signal extracted by the multi-link PHY reception unit 28, and performs access control.

The data processing unit 30 centrally processes data received by the data reception block of each radio.

In a case of performing communication with the EMLSR STA, the pre-configure link determination unit 31 controls the setting of the radio used for communication. By collecting, for example, information on received field strength, a value of noise level of individual links, and the like in each radio link, the pre-configure link determination unit 31 determines availability of the link. The pre-configure link determination unit 31 outputs a determination result on availability of the link to the multi-link control unit 23.

Note that in the first embodiment of the present technology, the processing of receiving the single radio block ACK frame is performed by the first data reception block in a case where the single radio block ACK frame is received on the link of Radio 1, for example.

In this case, the waveform of the signal is detected by the multi-link RF detection unit 27-1, the baseband signal is extracted by the multi-link PHY reception unit 28-1 from the detected waveform, and a predetermined frame in the channel of the baseband signal is detected by the multi-link MAC determination unit 29-1. Through the above processing, the multi-link control unit 23 recognizes that the single radio block ACK frame has been received as one of the control frames.

Furthermore, in a case where the information of the available single radio link is included in the single radio block ACK frame, the multi-link control unit 23 is notified of that effect via the pre-configure link determination unit 31. The multi-link control unit 23 specifies a link (radio) available to the EMLSR STA, and controls communication on the link (radio).

### <Another Configuration of Wireless Communication Module>

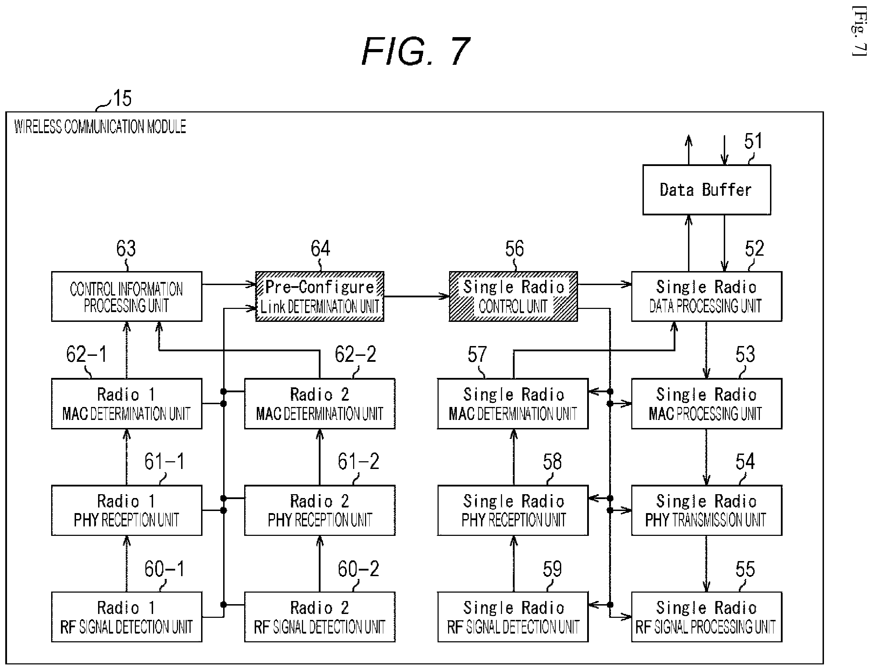

Fig. 7 is a block diagram illustrating another configuration example of the wireless communication module 15.

The wireless communication module 15 in Fig. 7 is a wireless communication module of the wireless communication device 1 compatible with EMLSR, for example.

The wireless communication module 15 is configured to include a data buffer 51, a single radio data processing unit 52, a single radio MAC processing unit 53, a single radio PHY transmission unit 54, a single radio RF signal processing unit 55, a single radio control unit 56, a single radio MAC determination unit 57, a single radio PHY reception unit 58, and a single radio RF detection unit 59.

Furthermore, the wireless communication module 15 is configured to include radio RF detection units 60-1 and 60-2, radio PHY reception units 61-1 and 61-2, and radio MAC determination units 62-1 and 62-2. In the wireless communication module 15, each block is configured to have the number corresponding to the number of radios that can be configured by multi link, but here, in order to simplify the description, the blocks are described as minimum two blocks. Moreover, the wireless communication module 15 is configured to include a control information processing unit 63 and a pre-configure link determination unit 64.

The data buffer 51 receives, from the equipment control module 13, data to be transmitted and temporarily stores the data.

The single radio data processing unit 52 processes data at the time of data transmission.

The single radio MAC processing unit 53, the single radio PHY transmission unit 54, and the single radio RF signal processing unit 55 are configured as a data transmission block.

The single radio MAC processing unit 53 performs access control on data to be transmitted.

The single radio PHY transmission unit 54 converts transmission data into a baseband signal.

The single radio RF signal processing unit 55 performs high-frequency processing on the baseband signal converted by the single radio PHY transmission unit 54, and transmits the baseband signal from an antenna.

The single radio control unit 56 performs communication control using each radio at the time of data transmission of the wireless communication module 15.

The single radio MAC determination unit 57, the single radio PHY reception unit 58, and the single radio RF detection unit 59 are configured as a data reception block.

The single radio MAC determination unit 57 detects a predetermined frame in the channel of the baseband signal extracted by the single radio PHY reception unit 58, and performs access control.

The single radio PHY reception unit 58 extracts the baseband signal from the waveform detected by the single radio RF detection unit 59.

The single radio RF detection unit 59 detects a waveform of a received data portion from a signal received by the antenna.

The radio RF detection unit 60-1, the radio PHY reception unit 61-1, and the radio MAC determination unit 62-1 are configured as a first control information reception block that processes control information such as an RTS frame with Radio 1. The radio RF detection unit 60-2, the radio PHY reception unit 61-2, and the radio MAC determination unit 62-2 are configured as a second control information reception block that processes control information with Radio 2.

Hereinafter, the radio RF detection units 60-1 and 60-2, the radio PHY reception units 61-1 and 61-2, and the radio MAC determination units 62-1 and 62-2 will be referred to as radio RF detection unit 60, radio PHY reception unit 61, and radio MAC determination unit 62, respectively, in a case where there is no particular need for distinguishing them.

The radio RF detection unit 60 detects a waveform of an RF signal.

The radio PHY reception unit 61 extracts a baseband signal from the detected waveform.

The radio MAC determination unit 62 detects a predetermined control frame from the extracted baseband signal, and performs access control.

The control information processing unit 63 collects control information on control frames detected in a plurality of radios, and sequentially determines in which radio link a control frame addressed to itself, for example, has been received. The control information processing unit 63 outputs the control information on the control frame addressed to itself to the pre-configure link determination unit 64.

By collecting, for example, information on received field strength, a value of noise level of individual links, and the like in each radio link, the pre-configure link determination unit 64 determines availability of the link. The pre-configure link determination unit 64 outputs a determination result on availability of the link to the single radio control unit 56.

Note that in the first embodiment of the present technology, the processing of transmitting the single radio block ACK frame is executed by the data transmission block under the control of the single radio control unit 56.

That is, the transmission data is constructed as a control frame by the single radio MAC processing unit 53, converted into a baseband signal by the single radio PHY transmission unit 54, subjected to high-frequency processing by the single radio RF signal processing unit 55, and transmitted from the antenna.

Similarly, the processing of receiving the A-MPDU frame is executed by the data reception block under the control of the single radio control unit 56.

That is, the single radio RF signal detection unit 69 detects the waveform of the received data portion from the signal received by the antenna, and the single radio PHY reception unit 68 executes reception processing of a predetermined A-MPDU frame in the single radio channel with respect to the baseband signal extracted from the detected waveform. Thereafter, the single radio MAC determination unit 67 analyzes delimiter information and separates the MPDU portion.

Note that in order to simplify the description, Figs. 6 and 7 illustrate an example in which the link includes two blocks of Radio 1 and Radio 2, but in reality, blocks of radio of the number corresponding to the number of links that can be simultaneously processed in the EMLSR are prepared.

### <Configuration of Frame of First Embodiment>

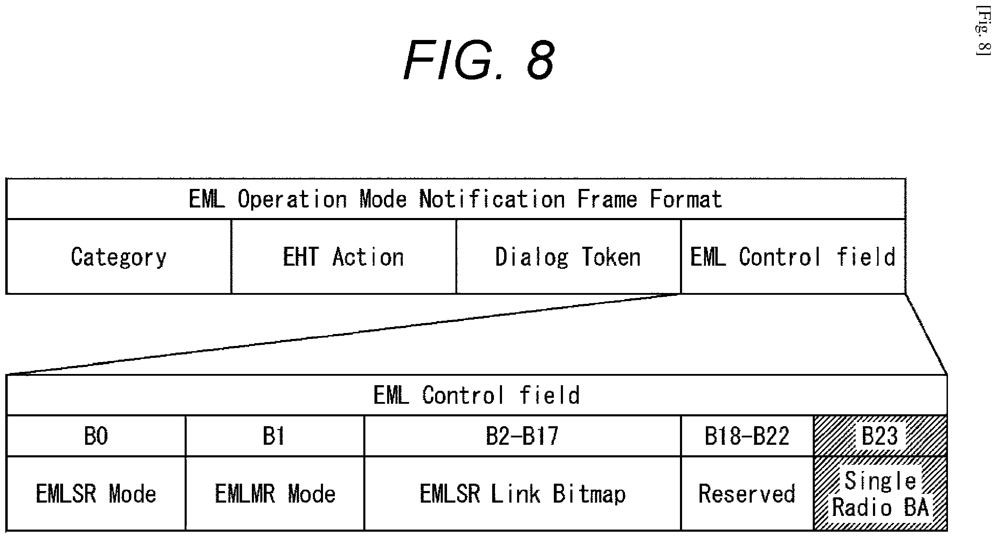

Fig. 8 is a view illustrating a frame configuration example of the first embodiment of the present technology.

In Fig. 8, changes and additional portions according to the present technology are hatched. The same applies to the subsequent drawings.

The frame in Fig. 8 is a frame configured as an action frame or a management frame indicative of being compatible with a sequence for notifying information on available links.

Note that the frame in Fig. 8 is defined as an EML operation mode notification frame. Furthermore, the frame in Fig. 8 is appropriately transmitted in a case where the EMLSR STA performs an association operation with the AP, or the like.

In Fig. 8, the EML operation mode notification frame is configured to include category, EHT action, dialog token, and EML control field.

The EML control field is configured to include an EMLSR mode bit (0th bit), an EMLMR mode bit (1st bit), an EMLSR link bitmap bit (2nd bit to 17th bit), a reserved bit (18th bit to 22nd bit), and a single radio BA bit (23rd bit).

The single radio BA bit is a bit indicating whether or not notification of information on an available link according to the present technology is possible.

Note that the configuration of the frame including the single radio BA bit is not limited to the configuration of the frame in Fig. 8. For example, the single radio BA bit may be set as necessary in a frame other than the action frame or the management frame.

### <First Frame Configuration of Single Radio Block Acknowledgement (ACK) Frame>

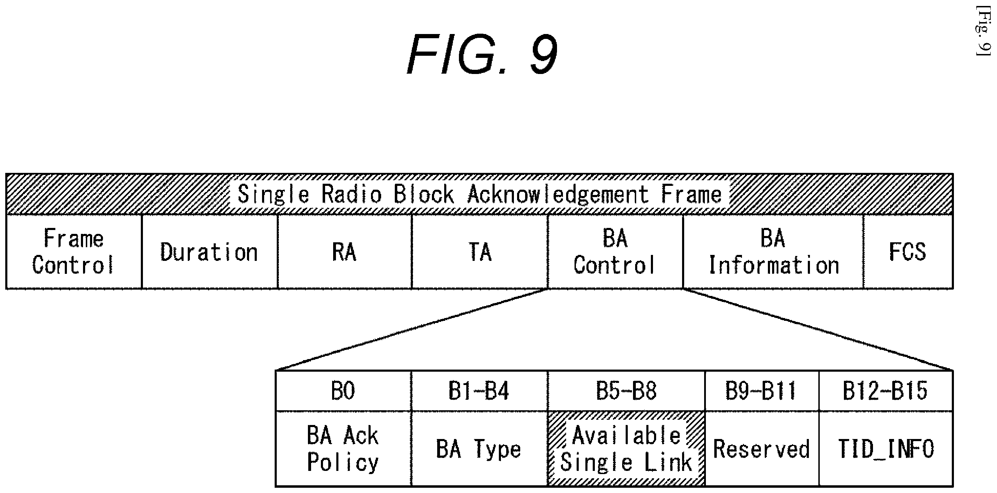

Fig. 9 is a view illustrating the first configuration example of the single radio block ACK frame.

The single radio block ACK frame in Fig. 9 is configured to include each field of frame control, duration, RA (received address), TA (transport address), BA control, BA information, and file check sequence (FCS).

The frame control is information indicating the type and format of the frame.

The duration is information indicating duration of the frame.

The RA is identification information for identifying a device on the reception side.

The TA is identification information for identifying a device on the transmission side.

The BA control field is configured to include a BA ACK policy bit (0th bit), a BA type bit (1st bit to 4th bit), an available single link bit (5th bit to 8th bit), a reserved bit (9th bit to 11th bit), and a TID_INFO bit (12th bit to 15th bit).

The available single link bit included in the BA control field is available single radio link information indicating an available link.

The BA information is information regarding the BA.

The FCS is a frame check sequence of error detection.

That is, the single radio block ACK frame in Fig. 9 is configured to be able to designate one available link by using, as the available single link bit, the 5th bit to the 8th bit, which have been set as the reserved bits of the BA control field, with the format of the past block ACK frame remaining. The reserved bit is a bit that is not defined as a bit representing specific information on the 802.11 standard.

Note that in Fig. 9, the 5th bit to 8th bit, which have been set as the reserved bits of the BA control field, are used as the available single link bits, but other reserved bits may be used.

### <Second Configuration of Single Radio Block ACK Frame>

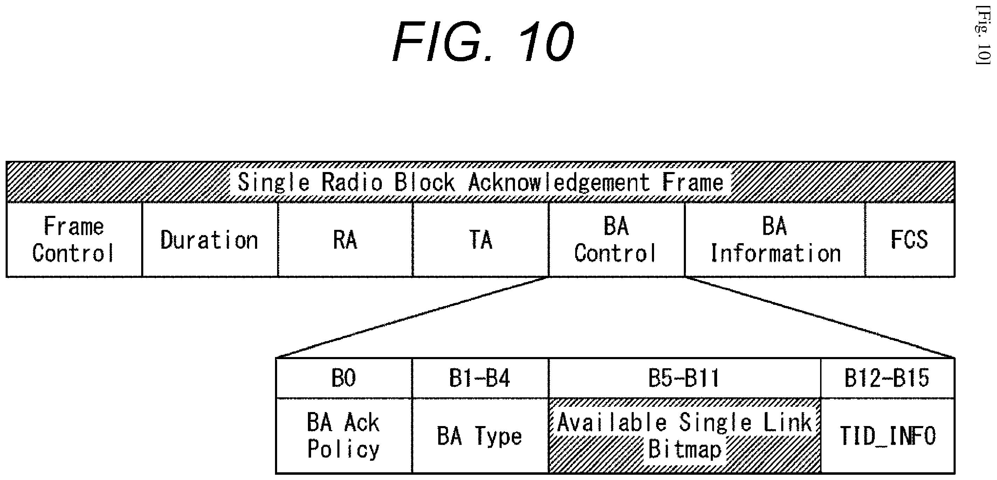

Fig. 10 is a view illustrating a second frame configuration example of a single radio block ACK frame.

The single radio block ACK frame in Fig. 10 is different from the single radio block ACK frame in Fig. 9 in the configuration of the BA control field.

In Fig. 10, the BA control field is configured to include a BA ACK policy bit (0th bit), a BA type bit (1st bit to 4th bit), an available single link bitmap bit (5th bit to 11th bit), and a TID_INFO bit (12th bit to 15th bit).

The available single link bitmap bit included in the BA control field is information indicating an available link.

That is, the single radio block ACK frame in Fig. 10 is configured such that all the available links except for the current link can be designated in bitmap format by using the 5th bit to the 11th bit, which have been set as the reserved bits of the BA control field, with the format of the past block ACK frame remaining.

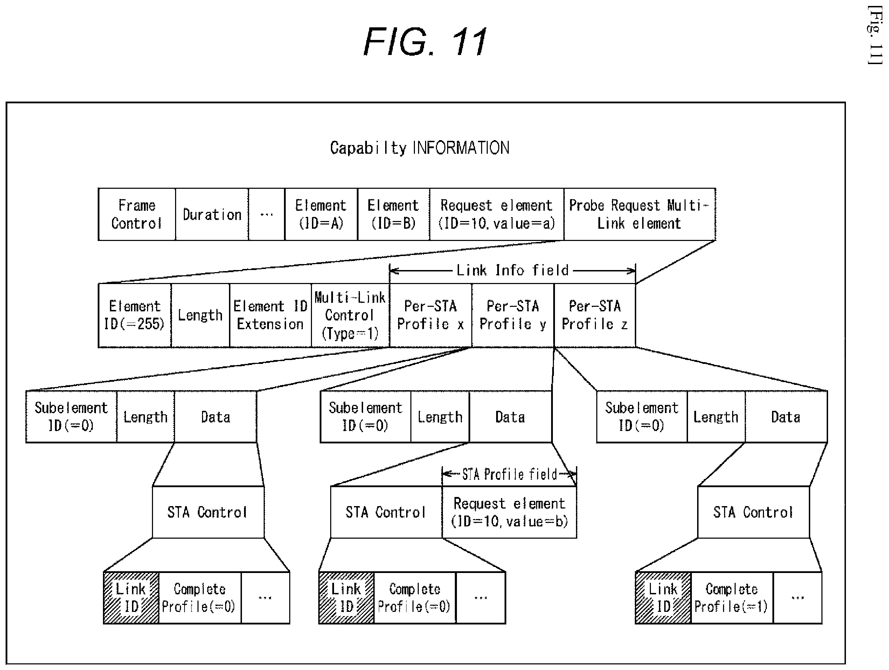

Here, as illustrated in Fig. 10, in a case where information indicating an available link is described as information in bitmap format, for example, when executing association processing, it is necessary to exchange the capability information illustrated in Fig. 11. Note that the same applies to cases where other information is described in bitmap format in Fig. 10 and subsequent drawings.

### <Information in Bitmap Format>

Fig. 11 is a view illustrating the configuration of capability information including a link identifier (link ID) that needs to be exchanged in a case where information in bitmap format is described as an available link.

In Fig. 11, the capability information is configured to include frame control, duration,..., a plurality of elements, request element, and probe multi-link element.

The probe multi-link element is configured to include element ID, length, element ID extension, multi-link control, and a plurality of pre-STA profiles.

Each pre-STA profile is configured to include subelement ID, length, and data.

The data includes STA control. Note that the data may include request element.

The STA control is configured to include link ID, which is a link identifier, complete profile, which is attribute information on a link,....

In the capability information configured as described above, information on a frequency channel for operating using multi-link and the like are described as attribute information (complete profile) of individual links for each link identifier (link ID).

Accordingly, by exchanging the capability information of Fig. 11, information on a frequency channel for operating using multi-link and the like are acquired for each link identifier (link ID). Therefore, in the information in bitmap format in Fig. 10, each bit can be allocated and described on the basis of the link identifier (link ID).

For example, in the information in bitmap format in Fig. 10, the first bit is allocated from a smaller numerical value of the link identifier (link ID), and one having a larger numerical value of the link identifier (link ID) is allocated to the final bit. In this case, a necessary bit size may be set in the link identifier (link ID) in accordance with the number of multi-links compatible with the communication device of itself.

Note that information on a frequency channel and a bandwidth used in each link operating in the multi-link may each be defined by the link identifier (link ID). Furthermore, determination as to whether or not one link is being used may be performed on the basis of attribute information of the link.

### <Third Configuration of Single Radio Block ACK Frame>

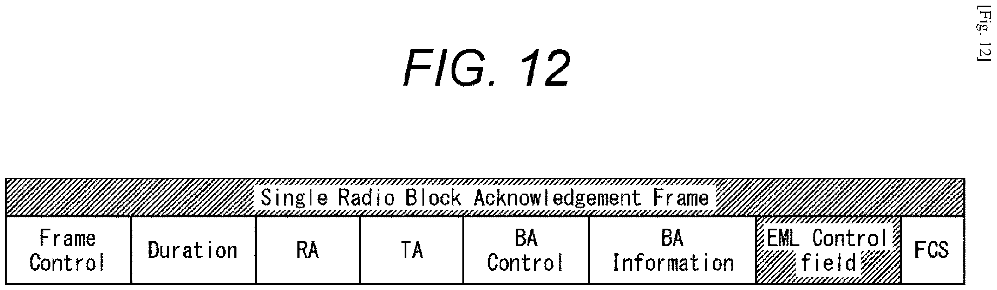

Fig. 12 is a view illustrating a third frame configuration example of a single radio block ACK frame.

The single radio block ACK frame in Fig. 12 is different from the single radio block ACK frame in Fig. 9 in that an EML control field, which is a new field, is added.

The EML control field is an area transmitted after an existing area (BA information in the case of Fig. 12) of the 802.11be standard. The EML control field includes information indicating an available link and information indicating whether or not operation in the EMLSR mode is possible.

That is, the single radio block ACK frame in Fig. 12 is configured to be able to include and notify information indicating an available link and information indicating whether or not operation in the EMLSR mode is possible, in addition to the format of a past block ACK frame.

### <Processing of AP in First Embodiment>

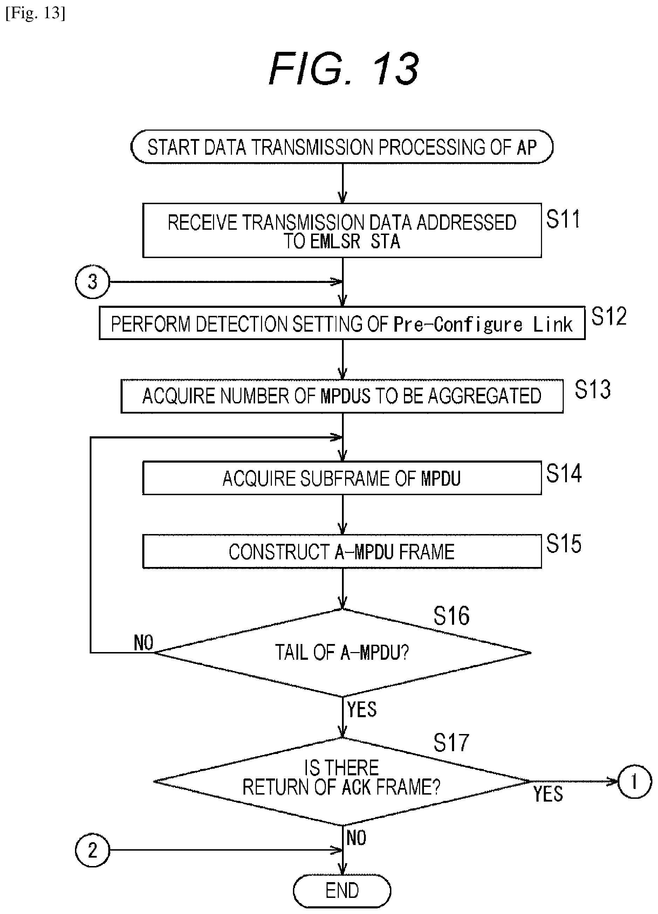

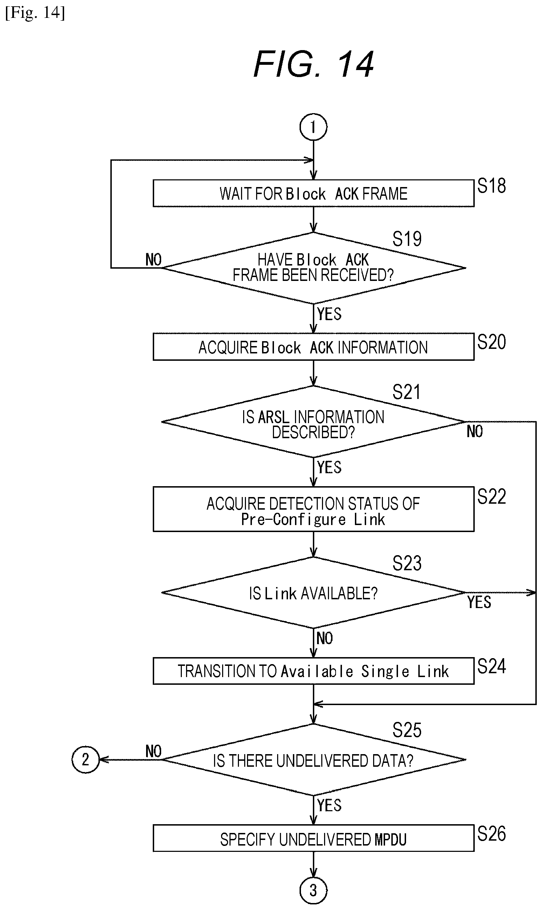

Figs. 13 and 14 are flowcharts explaining data transmission processing in the first embodiment.

Although Figs. 13 and 14 describe the operation in the AP to which the EMLSR STA is connected, the data transmission processing in Figs. 13 and 14 can also be applied to a case where a communication device (STA) having data for transmitting an available link to the EMLSR STA determines and transmits the data.

Furthermore, in Figs. 13 and 14, it is assumed that a link that is preset as a pre-configure link has been specified, for example, by exchanging a predetermined action frame with the EMLSR STA.

In step S11, the data construction unit 22 (Fig. 6) receives, from the equipment control module 13 via the data buffer 21, transmission data addressed to the EMLSR STA.

In step S12, the multi-link control unit 23 performs detection setting for learning the usage status of the EMLSR STA in the pre-configure link.

In step S13, the multi-link control unit 23 acquires the number of MPDUs to be aggregated (number of A-MPDUs) from the acquisition status of the transmission opportunity in single radio for transmitting data and the transmittable time in one access control.

In step S14, the data construction unit 22 acquires a subframe of MPDU.

In step S15, the data construction unit 22 constructs an A-MPDU frame.

In step S16, the data construction unit 22 determines whether or not to be a tail of the A-MPDU (frame) on the basis of the acquired number of A-MPDUs. In a case where it is determined in step S16 that it is not the tail of the A-MPDU, the process returns to step S14, and the subsequent processing is repeated.

In a case where it is determined in step S16 that it is the tail of the A-MPDU, the process proceeds to step S17.

The multi-link control unit 23 collectively sets the A-MPDUs as an A-MPDU frame up to a predetermined number of A-MPDUs, and controls the first data transmission block or the second data transmission block to transmit the A-MPDU frame.

After transmitting the A-MPDU frame, in step S17, the multi-link control unit 23 determines whether or not there is a return of the ACK frame. In a case where it is determined that there is no return of the ACK frame, the data transmission processing of the AP ends.

In a case where it is determined in step S17 that there is return of the ACK frame, the process proceeds to step S18 in Fig. 14.

In step S18, the multi-link control unit 23 waits for a block ACK frame.

In step S19, the multi-link control unit 23 determines whether or not to have received the block ACK frame. In a case where it is determined in step S19 that the block ACK frame has not been received, the process returns to step S18, and the subsequent processing is repeated.

In a case where the block ACK frame has been received in the first data reception block or the second data reception block, it is determined in step S19 that the block ACK frame has been received, and the process proceeds to step S20.

In step S20, the multi-link control unit 23 acquires block ACK information from the block ACK frame received in the first data reception block or the second data reception block.

In step S21, the multi-link control unit 23 determines whether or not available single radio link (ASRL) information indicating an available link is described in the acquired block ACK information. In a case where it is determined in step S21 that the available single radio link information is described, the process proceeds to step S22.

In step S22, the pre-configure link determination unit 31 acquires the detection status of the pre-configure link of itself from the available single radio link information.

In step S23, the multi-link control unit 23 determines whether or not the available single radio link described in the available single radio link information is available on the basis of the detection status of the pre-configure link. In a case where it is determined in step S23 that the link can be used, the process proceeds to step S24.

In step S24, the multi-link control unit 23 transitions to the available single radio link described in the available single radio link information, and continues to perform the data transmission. Note that in the present description, transitioning to a specified radio (link) is synonymous with setting a specified radio as a link for performing operation.

In a case where it is determined in step S21 that the available single radio link information is not described, the process in steps S22 to S24 is skipped, and the process proceeds to step S25.

Furthermore, in a case where it is determined in step S23 that the available single radio link described in the available single radio link information is not available, the process of step S24 is skipped, and the process proceeds to step S25.

In step S25, on the basis of the block ACK information acquired in step S20, the multi-link control unit 23 determines whether or not there is undelivered data. In a case where it is determined in step S25 that there is undelivered data, the process proceeds to step S26.

In step S26, the multi-link control unit 23 specifies undelivered MPDU. Thereafter, the process returns to step S12 in Fig. 13, and the subsequent processing is repeated.

In a case where it is determined in step S25 that there is no undelivered data, the data transmission processing of the AP of Figs. 13 and 14 ends.

### <Processing of EMLSR STA>

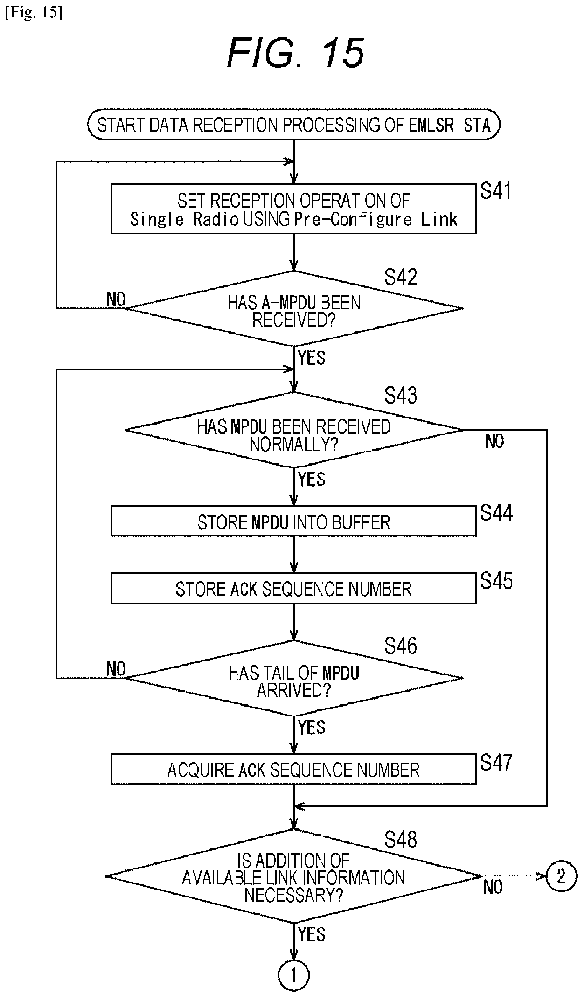

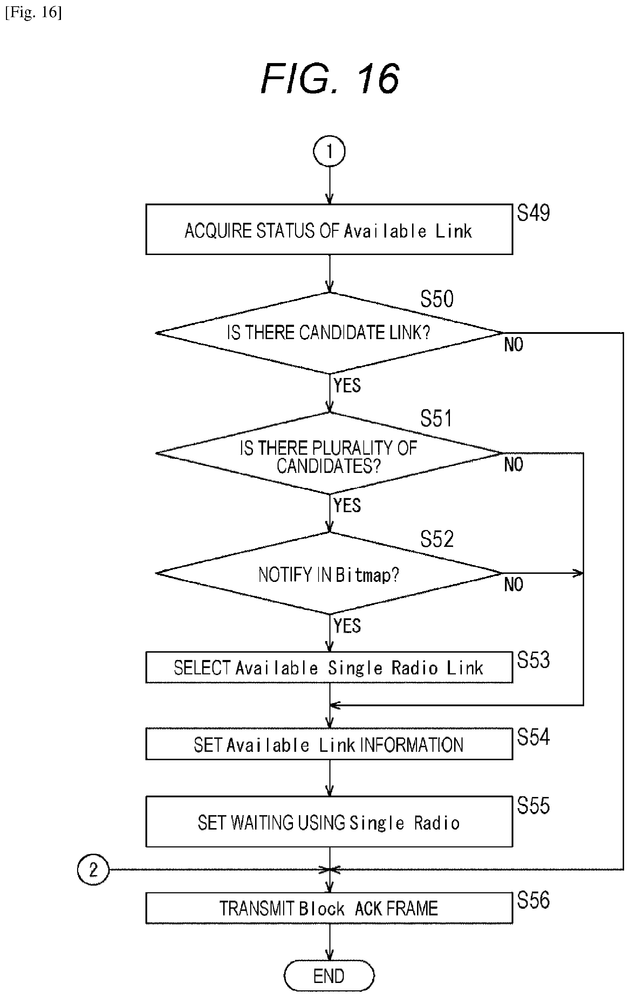

Figs. 15 and 16 are flowcharts explaining the data reception processing of EMLSR STA in the first embodiment.

Although Figs. 15 and 16 describe the operation in the EMLSR STA, the processing in Figs. 15 and 16 can also be applied to a case where the AP or the communication device (STA) on the data transmission side determines an available link and notifies information on the available link.

In step S41, by exchanging, for example, a predetermined action frame with an AP or the like, the single radio control unit 56 (Fig. 7) of the EMLSR STA operates a link defined as a pre-configure link, thereby setting single radio reception operation.

In step S42, the single radio data processing unit 52 determines whether or not to have received the A-MDPU. In a case where it is determined in step S42 that the A-MDPU has not been received, the process returns to step S41, and the subsequent processing is repeated.

In a case where it is determined in step S42 that the A-MDPU has been received, the process proceeds to step S43.

In step S43, the single radio data processing unit 52 determines whether or not individual MDPUs have been normally received. In a case where it is determined in step S43 that the individual MDPUs have been normally received, the process proceeds to step S44.

In step S44, the single radio data processing unit 52 stores the normally received MDPU in the data buffer 51.

In step S45, the single radio data processing unit 52 stores the ACK sequence number of the normally received MDPU.

In step S46, the single radio data processing unit 52 determines whether or not the tail of the MPDU has arrived. In a case where it is determined in step S46 that the tail of the MPDU has not arrived, the process returns to step S43, and the subsequent processing is repeated.

In a case where it is determined in step S46 that the tail of the MPDU has arrived, the process proceeds to step S47.

In step S47, the single radio data processing unit 52 acquires the stored ACK sequence number and constructs the block ACK frame. Thereafter, the process proceeds to step S48.

In a case where it is determined in step S43 that the individual MDPUs are not normally received, the process in steps S44 to S47 is skipped, and the process proceeds to step S48.

In step S48, the single radio control unit 56 determines whether or not addition of available link information is necessary. In a case where it is determined in step S48 that addition of available link information is necessary, the process proceeds to step S49 in Fig. 16.

In step S49, the pre-configure link determination unit 64 acquires the status of the available link that is available on the basis of the reception field strength, noise level, and the like at the present time point of the pre-configure link.

In step S50, the pre-configure link determination unit 64 determines whether or not there is a candidate link. In a case where it is determined in step S50 that there is a candidate link, the process proceeds to step S51.

In step S51, the pre-configure link determination unit 64 determines whether or not there is a plurality of candidate links. In a case where it is determined in step S51 that there is a plurality of candidate links, the process proceeds to step S52.

In step S52, the single radio control unit 56 determines whether or not to notify information regarding a plurality of candidate links in bitmap (in bitmap format). In a case where it is determined in step S52 not to notify the information regarding the plurality of candidate links in bitmap, the process proceeds to step S53.

In step S53, the pre-configure link determination unit 64 selects one link desired to operate as the available single radio link. In this case, in step S54, the single radio control unit 56 sets the available single radio link information in which the information indicating the desired link is described.

In a case where it is determined in step S51 that there is not a plurality of candidates, the process in steps S52 and S53 is skipped, and the process proceeds to step S54. In this case, in step S54, the single radio control unit 56 sets the available single radio link information in which the information indicating the candidate link is described.

In a case where it is determined in step S52 to make notification in bitmap, the process proceeds to step S54. In step S54, the single radio control unit 56 sets the available single radio link information in bitmap format.

In step S55, in order to perform single radio operation, the single radio control unit 56 transitions to the link described in the available single radio link information, and sets waiting using single radio. That is, the link described in the available single radio link information is set as a link for waiting for a data frame using single radio.

In step S56, the single radio control unit 56 transmits a block ACK frame to which information (available single radio link information) indicating an available link is added.

In a case where it is determined in step S48 that addition of available link information is not necessary, or in a case where it is determined in step S50 that there is no candidate link, the process proceeds to step S56. In this case, in step S56, the single radio control unit 56 transmits a normal block ACK frame.

After the processing of step S56, the processing of EMLSR STA in Figs. 15 and 16 ends.

### <Modifications>

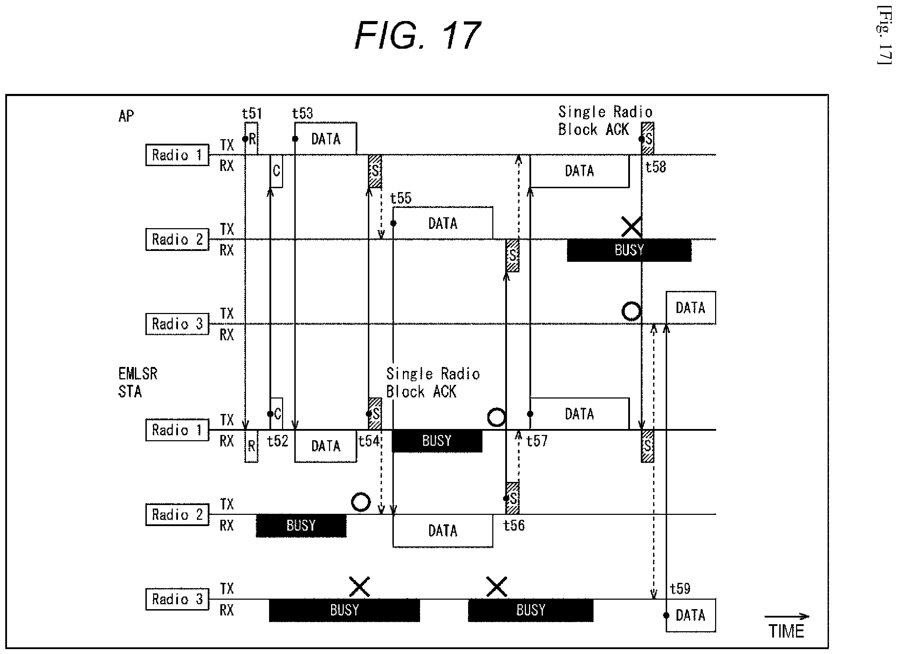

Fig. 17 is a view illustrating another operation sequence of AP or the communication device (AP in the figure) on the data transmission side and EMLSR STA in the first embodiment of the present technology.

Since timings t51 to t55 in Fig. 17 are the same as timings t1 to t5 in Fig. 4 in terms of processing, the description on that will be omitted.

In the case of Fig. 17, after the end of the data transmission using Radio 2 at timing t55, at timing t56, the EMLSR STA determines that it is difficult to use Radio 3 and it is possible to use Radio 1 at the next transmission timing (timing t57), and includes and transmits, to the AP, the available single radio link information in the single radio block ACK frame.

The AP receives the single radio block ACK frame including the available single radio link information, and learns that the EMLSR STA is in a state where Radio 1 is available.

For example, in a case where data transmission from the AP to the EMLSR STA is not necessary and data transmission from the EMLSR STA to the AP using Radio 1 is necessary, data transmission from the EMLSR to the AP can be performed on the basis of a predetermined access control procedure, and thus the AP waits for data from the STA using Radio 1.

Note that the EMLSR STA determines whether or not undelivered data from the AP or data to be transmitted by the EMLSR STA exists, and in a case where, as a determination result, either data is determined to "exist", the EMLSR STA may transmit the available single radio link information to the AP. At this time, the EMLSR STA may determine only one of whether or not there is undelivered data from the AP or whether or not there is data to be transmitted by the EMLSR STA.

At timing t57 after the predetermined access control procedure has passed, the EMLSR STA performs data transmission to the AP using Radio 1. In a case where the data transmission using Radio 1 ends, at timing t58, the AP determines that it is difficult to use Radio 2 and it is possible to use Radio 3 at the next transmission timing (timing t59), and includes and transmits, to the EMLSR STA by using Radio 1, the available single radio link information in the single radio block ACK frame.

The EMLSR STA receives the single radio block ACK frame including the available single radio link information, and the AP learns that the Radio 3 is in an available state.

At timing t59, in a case where data transmission to the EMLSR STA is required, the AP performs the data transmission to the EMLSR STA again using Radio 3 similarly on the basis of the predetermined access control procedure.

As described above, for example, in a case where there is a need for data transmission from the AP to the EMLSR STA, the AP can transmit data by using Radio 3, and thus, can transmit data after receiving the block ACK frame.

That is, the EMLSR STA having received the available single radio link information from the AP can more reliably receive and transmit data from the AP by waiting using Radio 3 described in the available single radio link information.

### <Effects of First Embodiment>

As described above, in the first embodiment of the present technology, the STA of the EMLSR notifies the available single radio link information, whereby it is possible to specify a link that waits and it is possible to reduce redundant information exchange.

In particular, it is possible to immediately notify the latest state of a transmission path at the timing of returning the block ACK frame.

That is, by describing the information of the available radio link in the block ACK frame, it is not necessary to use another frame for notification of information.

Furthermore, by selecting an optimum link capable of stable communication on the data reception side, it is possible to immediately designate the link without waiting for an RTS frame from the data transmission side as in the past.

Since the link for continuing the communication of the EMLSR can be selected from the data reception side, data transmission can be reliably performed.

In a case where the available single radio link information indicating a plurality of available links exists, the information of the plurality of links can be notified by including the information in bitmap format into the single radio block ACK frame. Therefore, it is possible to give room for selection to the data transmission side, and it is possible to select a link to be more reliably used.

Since it is possible to save the time required for exchanging a redundant RTS frame and a CTS frame for the data transmission sequence of the EMLSR of the past system, it is possible to effectively utilize the time required for exchanging the RTS frame and the CTS frame for a transmission opportunity (TXOP) for data transmission.

The number of aggregates of A-MPDU can be optimized in a limited TXOP on a certain link.

Furthermore, in a case where there is undelivered data (that is, retransmission data) or in a case where data needs to be continuously received, even when all data transmission is not completed in a TXOP of one link, it is possible to immediately switch to another link. Therefore, seamless data transmission can be performed.

Moreover, even in a case where there is transmission data from the EMLSR STA to the AP, it is possible to perform bidirectional data transmission in a short time by notifying the available single radio link.

As described above, since a plurality of links can be continuously used, real-time application data can be seamlessly transmitted.

### <<2. Second Embodiment (Next Single Radio Link Information)>>

In the first embodiment, an example in which the link information available for data transmission is notified from the EMLSR STA on the data reception side has been described. Next, as the second embodiment, an example in which the link information available for next data transmission is notified from the communication device (AP) on the data transmission side will be described.

Note that the system configuration of the second embodiment is similar to the system configuration of the first embodiment. Accordingly, hereinafter, the system configuration of the first embodiment described above with reference to Fig. 1 will also be used as the system configuration of the second embodiment.

### <Operation of AP and EMLSR STA in Second Embodiment of Present Technology>

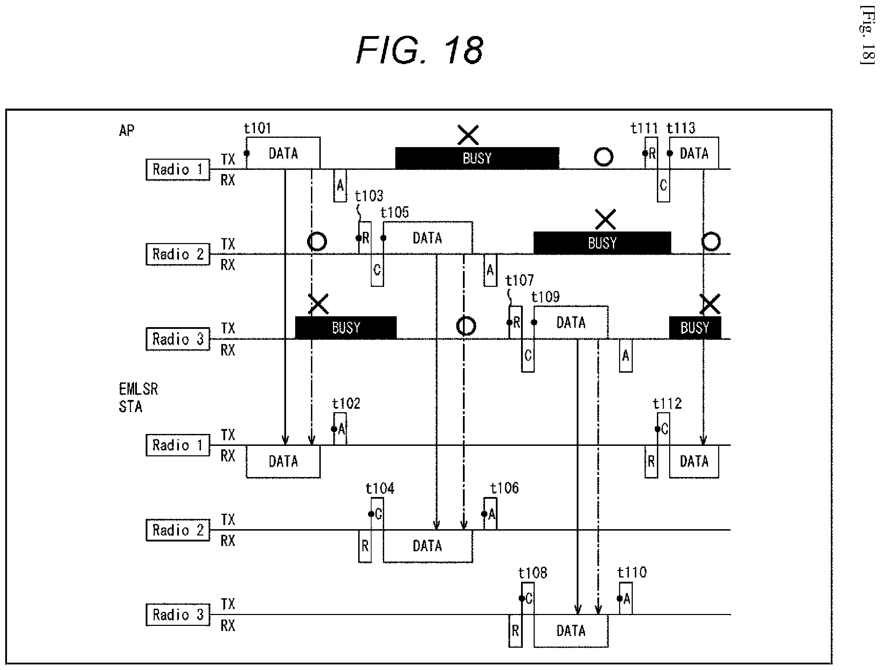

Fig. 18 is a view illustrating an operation sequence of AP or a communication device (AP in the figure) on the data transmission side and EMLSR STA in the second embodiment of the present technology.

Note that in Fig. 18, the solid arrow represents transmission of control information included in a delimiter at the rear of a signal, and the one-dot chain line arrow represents transmission of control information included in padding of a signal.

The processing at timing t101 in Fig. 18 is the same as the processing at timing t3 in Fig. 3. That is, as the control frame, for example, a multi-user RTS frame (hereinafter, RTS frame) and a CTS frame are exchanged, and the AP starts data transmission at timing t101. The EMLSR STA starts data reception.

Before ending the data transmission using Radio 1, the AP acquires the state of the link immediately before the end of the transmission of the A-MPDU by, for example, learning the usage status of pre-configure link, and determines the link available in the next data transmission.

In Fig. 18, Radio 3 is being used in other transmission (busy state), and data transmission using Radio 2 can be performed. At this time, if padding is available at the tail of the A-MPDU during data transmission, the AP includes, into the padding, next single radio link information indicating a link available in the next data transmission, and transmits the padding as indicated by the one-dot chain line arrow.

Note that the fact that the next single radio link information is included in the padding is described in a delimiter at the rear in the data, and is transmitted as indicated by the solid arrow.

For example, in the AP on the transmission side capable of operating in the multi-link, there is a possibility that transmission to another STA is performed in any of the links, and in that case, transmission to the EMLSR STA becomes difficult. Therefore, it is necessary to notify the EMLSR STA in advance of the busy state.

Furthermore, in a case where the next single radio link information is included at the tail of the received A-MPDU (such as padding), the EMLSR STA on the data reception side can specify, on the basis of the next single radio link information, the link (Radio 2) used for data transmission to be performed next. Therefore, the EMLSR STA on the data reception side can wait for the RTS frame, for example, using the link of Radio 2 having been set. Here, to perform next means performing temporally after reception of the next single radio link information, and the timing may be immediately after the reception of the next single radio link information or needs not be immediately after as long as the timing is temporally after the transmission.

After the end of the data transmission, the EMLSR STA transmits the ACK frame by using Radio 1 at timing t102. The AP receives the ACK frame by using Radio 1.

At timing t103, the AP transmits an RTS frame using Radio 2 and notifies the EMLSR STA of the start of data transmission. The EMLSR STA waits for the RTS frame by using Radio 2 based on the next single radio link information, and receives the RTS frame.

At timing t104, the EMLSR STA returns a CTS frame to the AP using Radio 2. The AP receives the CTS frame by using Radio 2.

Due to this, at timing t105, the AP can continue, by using Radio 2, the data transmission to the EMLSR STA. The EMLSR STA continues, by using Radio 2, data reception.

Before the end of data transmission in Radio 2, the AP learns the usage status of the pre-configure link, acquires the state of each link immediately before the end of transmission of the A-MPDU, and determines the link available for the next data transmission.

Here, Radio 1 is being used by another transmission (busy state), and data transmission using Radio 3 can be performed. At this time, the AP has data to be transmitted to the EMLSR STA, and if padding is available at the tail of the A-MPDU during data transmission, the AP includes, into the padding, a link next single radio link information, and transmits the padding as indicated by the one-dot chain line arrow.

In a case where the tail (padding) of the received A-MPDU includes the next single radio link information, the EMLSR STA can specify, on the basis of the next single radio link information, the link (Radio 3) on which data transmission is subsequently performed. Accordingly, the EMLSR STA can wait for the RTS frame by using the link of Radio 3, for example.

After the end of the data transmission, the EMLSR STA transmits the ACK frame by using Radio 2 at timing t106. The AP receives the ACK frame by using Radio 2.

At timing t107, the AP transmits an RTS frame using Radio 3 and notifies the EMLSR STA of the start of data transmission. The EMLSR STA waits for the RTS frame by using Radio 3 based on the next single radio link information, and receives the RTS frame.

At timing t108, the EMLSR STA returns a CTS frame to the AP with Radio 3. The AP receives the CTS frame in Radio 3.

Due to this, at timing t109, the AP can continue, by using the link (Radio 3), the data transmission to the EMLSR STA. The EMLSR STA continues, by using Radio 3, data reception.

Before the end of data transmission using Radio 3, the AP learns the usage status of the pre-configure link, acquires the state of each link immediately before the end of transmission of the A-MPDU, and determines the link available for the next data transmission.

Here, Radio 2 is being used by another transmission (busy state), and data transmission using Radio 1 can be performed. At this time, if padding is available at the tail of the A-MPDU during data transmission, next single radio link information is included into the padding a link, and the padding is transmitted as indicated by the one-dot chain line arrow.

In a case where the tail (padding) of the A-MPDU includes the next single radio link information, the EMLSR STA can specify, on the basis of the next single radio link information, the link (Radio 1) on which data transmission is subsequently performed. Accordingly, the EMLSR STA can wait for the RTS frame by using the link of Radio 1, for example.

After the end of the data transmission, the EMLSR STA transmits the ACK frame by using Radio 3 at timing t110. The AP receives the ACK frame by using Radio 3.

At timing t111, the AP transmits an RTS frame by using Radio 1, and notifies the EMLSR STA of the start of data transmission. The EMLSR STA waits for the RTS frame by using Radio 1 based on the next single radio link information, and receives the RTS frame.

At timing t112, the EMLSR STA returns a CTS frame to the AP using Radio 1. The AP receives the CTS frame by using Radio 1.

At timing t113, the AP can continue, by using the link (Radio 1), the data transmission to the EMLSR STA. The EMLSR STA continues, by using Radio 1, data reception.

In this way, by continuing to specify the link available for the next transmission during data transmission, it is possible to seamlessly use the transmission path in a case of transmitting real-time data.

As described above, since the device on the data transmission side notifies of the next single radio link information based on the latest usage status of pre-configure link during data transmission, the device on the data reception side can learn the pre-configure link capable of continuing communication in the subsequent single radio. Therefore, it is possible to perform data transmission using the link (radio) that performs data transmission next (temporally later).

For example, in the data (A-MPDU) frame being transmitted, the next single radio link information available at that time point in the device on the data transmission side is transmitted among the pre-configure link.

Furthermore, for example, a control frame may be constructed so that a header includes next single radio link information, and the latest status may be transmitted at a discretionary timing.

In this next single radio link information, information indicating a link whose noise level to be interfered with is the lowest that is selected from preset pre-configure links is expressed by about 4 bits.

Alternatively, this next single radio link information may include, by a bitmap format, information indicating a link whose noise level to be interfered with is equal to or less than a predetermined threshold, the link being determined to be available from the preset pre-configure links.

Based on the above description, details of the second embodiment of the present technology will be described below.

### <Configuration of Wireless Communication Device>

The device configuration of the second embodiment is similar to the device configuration of the first embodiment. Accordingly, hereinafter, the device configuration of the first embodiment described above with reference to Figs. 5, 6, and 7 will also be used as the device configuration of the second embodiment.

Note that in the configuration (Fig. 6) of the wireless communication module of the device operating as the communication device (AP) on the data transmission side of the second embodiment of the present technology, the processing of receiving the block ACK frame, in particular, is performed by the first data reception block, for example, in a case where the block ACK frame is received on the link of Radio 1.

In this case, the waveform of the signal is detected by the multi-link RF detection unit 27-1, the baseband signal is extracted by the multi-link PHY reception unit 28-1 from the detected waveform, and a predetermined frame in the channel of the baseband signal is detected by the multi-link MAC determination unit 29-1. Through the above processing, the multi-link control unit 23 recognizes that the block ACK frame has been received as one of the control frames.

In a case where the next single radio link information is included in the padding of the A-MPDU frame, the multi-link control unit 23 constructs (generates) the next single radio link information on the basis of the information on the available link supplied from the pre-configure link determination unit 31, replaces the padding, and transmits the next single radio link information.

Furthermore, in a case where information indicating that the next single radio link information is included in the padding is described in the final delimiter of the A-MPDU frame, the multi-link control unit 23 constructs information indicating that the next single radio link information is included in the padding, replaces the final delimiter, and transmits the information.

In particular, in the configuration (Fig. 7) of the wireless communication module of the device operating as the EMLSR STA of the second embodiment of the present technology, the processing of transmitting the block ACK frame is executed by the data transmission block under the control of the single radio control unit 56.

That is, the transmission data is constructed as a control frame by the single radio MAC processing unit 53, converted into a baseband signal by the single radio PHY transmission unit 54, subjected to high-frequency processing by the single radio RF signal processing unit 55, and transmitted from the antenna.

The processing of receiving the A-MPDU frame is executed by the data reception block under the control of the single radio control unit 56.

That is, the single radio RF signal detection unit 69 detects the waveform of the received data portion from the signal received by the antenna, and the single radio PHY reception unit 68 executes reception processing of a predetermined A-MPDU frame in the single radio channel with respect to the baseband signal extracted from the detected waveform. Then, the single radio MAC determination unit 67 analyzes delimiter information and separates the MPDU portion.

Here, in a case where the next single radio link information is included in the delimiter or the padding transmitted from the AP, the next single radio link information is supplied to the single radio control unit 56.

### <Configuration of Frame of Second Embodiment>

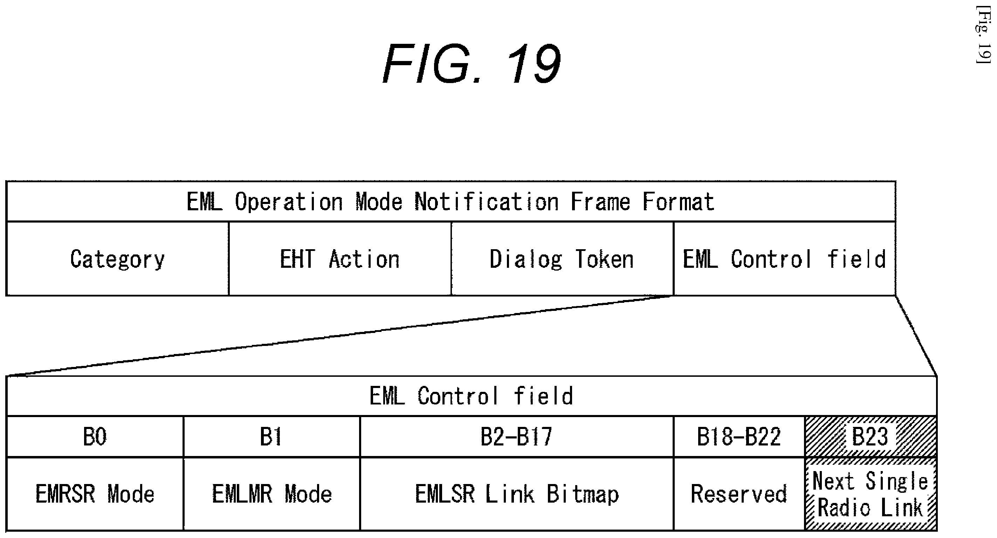

Fig. 19 is a view illustrating a configuration example of the frame of the second embodiment of the present technology.

The frame in Fig. 19 is a frame configured as an action frame or a management frame indicative of being compatible with a sequence for notifying information on available links.

Note that the frame in Fig. 19 is defined as an EML operation mode notification frame. Furthermore, the frame in Fig. 19 is appropriately transmitted in a case where the EMLSR STA compatible with the EMLSR performs an association operation on the AP, or the like.

In Fig. 19, the EML operation mode notification frame is configured to include the category, the EHT action, the dialog token, and the EML control field.

The EML control field is configured to include an EMLSR mode bit (0th bit), an EMLMR mode bit (1st bit), an EMLSR link bitmap bit (2nd bit to 17th bit), a reserved bit (18th bit to 22nd bit), and a next single radio link bit (23rd bit).

The next single radio link bit included in the EML control field is a bit indicating whether or not notification of link information available for next data transmission according to the present technology is possible.

Note that the configuration of the frame including the next single radio link bits is not limited to the configuration of the action frame in Fig. 19. For example, the next single radio link bit may be set in a frame other than the frame of Fig. 19 as necessary.

### <First Configuration of A-MPDU Frame>

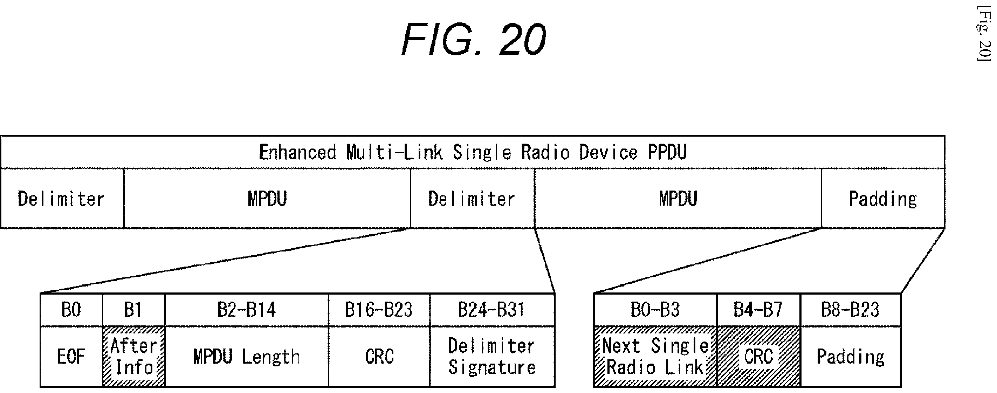

Fig. 20 is a view illustrating the first configuration example of the A-MPDU frame of the second embodiment of the present technology.

The A-MPDU frame in Fig. 20 is configured by alternately aggregating (concatenating) a delimiter indicating a frame boundary and a MAC protocol data unit (MPDU) including actual data and adding padding to the tail.

The delimiter is configured to include an EOF bit (0th bit), an after info bit (1st bit), an MPDU length bit (2nd bit to 14th bit), a CRC bit (16th bit to 23rd bit), and a delimiter signature bit (24th bit to 31st bit).

The after info bit is a portion that is reserved in the past delimiter, and is information for identifying that the next single radio link information is included in the subsequent padding.

That is, by this after info bit being 1, the device on the data reception side can learn that the next single radio link information is included in the padding.

Note that the delimiter including the after info bit is preferably a delimiter before the final MDPU (that is, the final delimiter) as illustrated in Fig. 20, but the after info bit may be included in a delimiter at another position.

A past A-MPDU frame needs to be aligned in units of 4 bytes, and therefore the padding is configured to be added to the tail of the A-MPDU with 0 bytes to 3 bytes.

The configuration of a new padding portion according to the present technology includes a next single radio link bit (0th bit to 3rd bit), a CRC bit (4th bit to 7th bit), and a padding bit (8th bit to 23rd bit) as necessary.

The next single radio link bit is next single radio link information.

The CRC may be added as necessary to reliably send the next single radio link information.

The normal padding has a length of 0 bytes to 3 bytes as described above, but in a case where the past padding is 0 bytes or 1 byte, the MPDU length may be adjusted to extend the length of the padding, and the next single radio link information according to the present technology may be included.

Furthermore, the next single radio link bit may be included not in the padding but in the final delimiter.

### <Second Configuration of A-MPDU Frame>

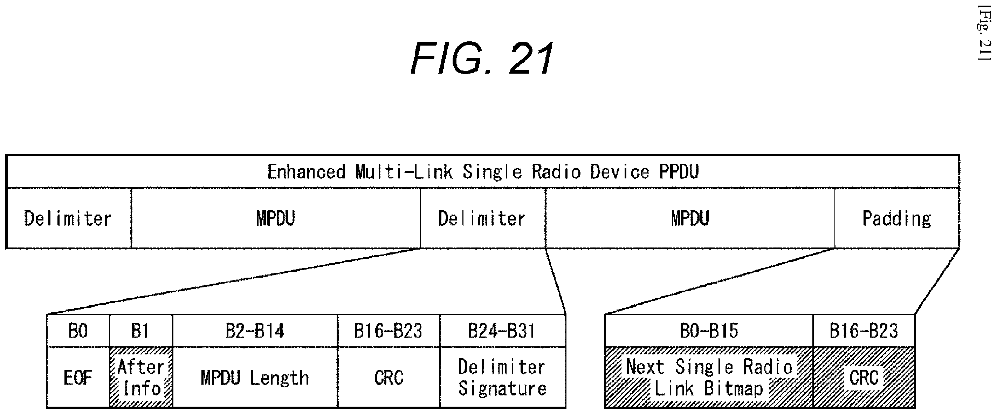

Fig. 21 is a view illustrating the second configuration example of the A-MPDU frame of the second embodiment of the present technology.

The A-MPDU frame in Fig. 21 is different from the A-MPDU frame in Fig. 20 in the configuration of padding.

In Fig. 21, the padding is configured to include a next single radio link bitmap bit (0th bit to 15th bit) and a CRC bit (16th bit to 23rd bit).

The next single radio link bitmap bit in Fig. 21 is next single radio link information in bitmap format, and can notify the data reception side of up to 16 links at maximum.

That is, according to the configuration of Fig. 21, since all states of the pre-configure link can be notified in bitmap format, the device on the data reception side that receives the next single radio link information can optimally select the link.

Note that similarly to the example of Fig. 20, the CRC may be added as necessary in order to reliably transmit the next single radio link information of Fig. 21.

Furthermore, when the next single radio link information and the CRC are included, the information is configured as total of 24 bits (3 bytes) information. In a case where this information length is longer than the bit length of the past padding, that is, the past padding is not included, and in a case where the padding is 1 byte to 2 bytes, the MPDU length of the delimiter may be added such that the next single radio link information and the CRC fall within the padding.

### <First Configuration of A-Control Field of Discretionary Frame>

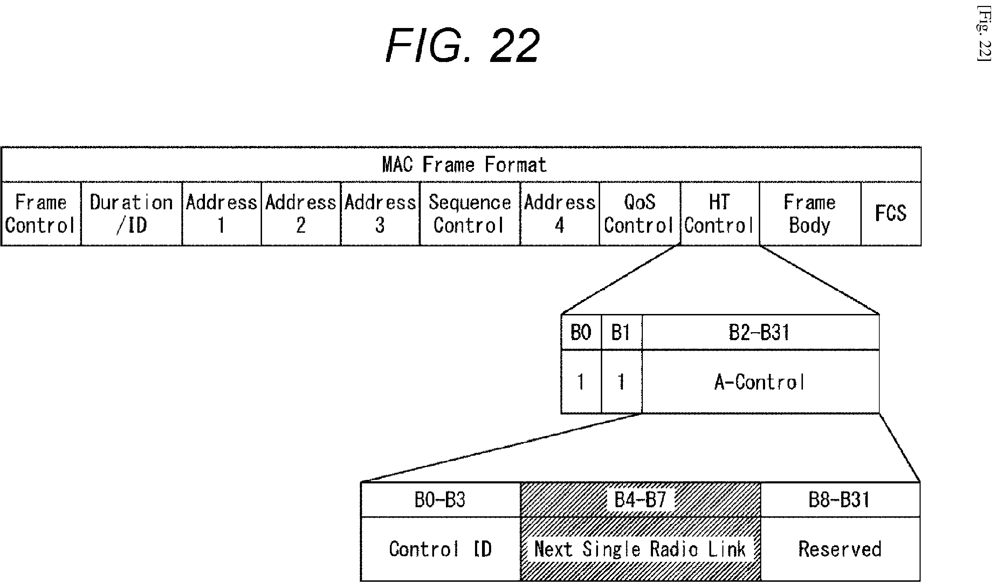

Fig. 22 is a view illustrating the first configuration example of the A-control field of a discretionary frame.

Fig. 22 illustrates a configuration example of a frame in a case where the next single radio link information is notified by a discretionary frame including control information other than the A-MPDU frame.

The frame in Fig. 22 is configured to include each field of a frame control, a duration/ID, Address 1 to Address 4, a sequence control, a QoS control, an HT control, a frame body, and an FCS. Each field of the frame control, the duration/ID, Address 1 to Address 4, the sequence control, the QoS control, and the HT control is a MAC header part.

The frame control field is information indicating the type of a frame.

The duration/ID field is information indicating the duration or the identifier of a frame.

Address 1 to Address 4 fields are a plurality of address fields indicating a transmission source and a reception destination.

The sequence control field is information indicating the sequence number of a frame.

The QoS Control field is a control parameter for QoS guarantee.

The HT control field is a control parameter for high throughput.

The HT control field is configured to include the 0th bit, the 1st bit, and the A-control bits (2nd bit to 31st bit).

The A-control field is defined in the HT control field for future extension, and in a case where the 0th bit and the 1st bit are 1, the 2nd bit to the 31st bit can be used as the A-control field.

The A-control field is configured to include a control ID bit (0th bit to 3rd bit), a next single radio link bit (4th bit to 7th bit), and a reserved bit (8th bit to 31st bit).

The control ID bit is information indicating that the next single radio link information is included.

The next single radio link bit is next single radio link information.

Note that the reserved bits (8th bit to 31st bit), which are other portions, are reserved areas for future extension at the present time point.

### <Second Configuration of A-Control Field of Discretionary Frame>

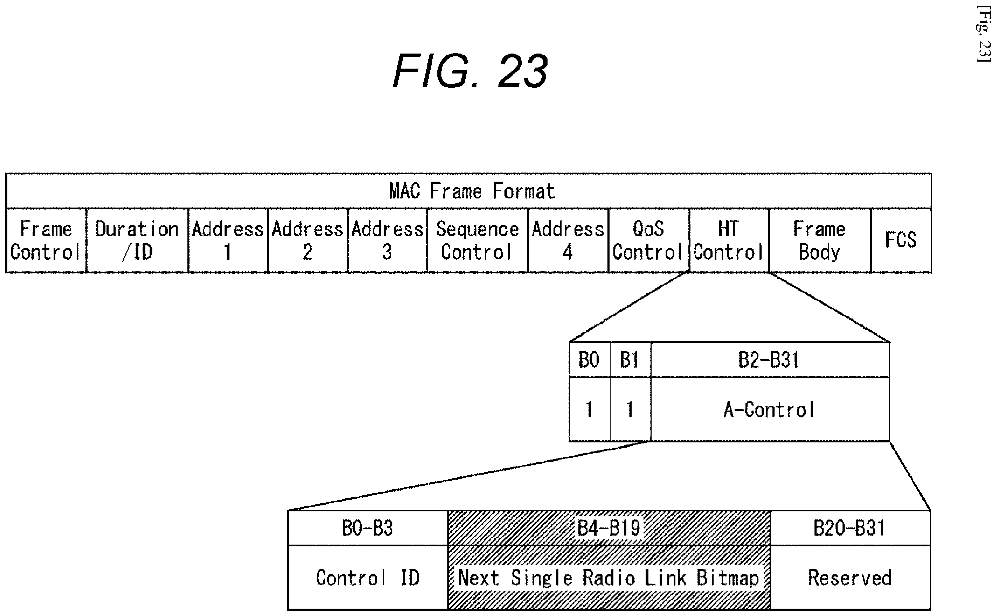

Fig. 23 is a view illustrating the second configuration example of the A-control field of a discretionary frame.

The discretionary frame in Fig. 23 is different from the discretionary frame in Fig. 22 in the configuration of the A-control field.

In Fig. 23, the A-control field is configured to include a control ID bit (0th bit to 3rd bit), a next single radio link bitmap bit (4th bit to 19th bit), and a reserved bit (20th bit to 31st bit).

The control ID bit is information indicating that the next single radio link information is included.

The next single radio link bitmap bit is next single radio link information in bitmap format.

Note that the reserved bits (20th bit to 31st bit) in Fig. 23 are reserved areas for future extension at the present time point.

### <Configuration of Action Frame of Second Embodiment>

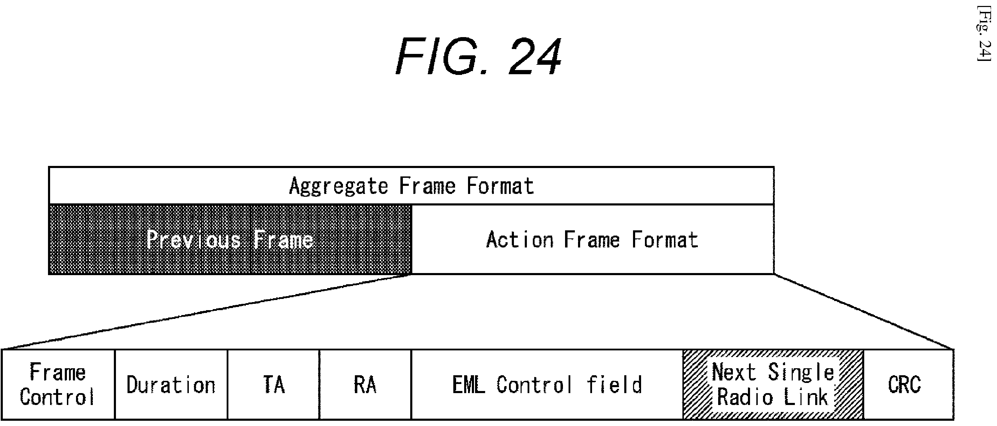

Fig. 24 is a view illustrating a configuration example of the aggregation frame of the second embodiment of the present technology.

Fig. 24 illustrates a configuration example of an aggregation frame in which, for example, an action frame is added to a discretionary frame (previous frame).

The action frame is added to the discretionary frame. The frame in Fig. 24 is configured as an aggregation frame in which an action frame including, for example, an EML control field and the next single radio link information of the present technology are combined with a past control frame.

The action frame includes each field of a frame control, a duration, a TA, a RA, an EML control field, a next single radio link, which is a new field, and an CRC.

The frame control, the duration, the TA, and the RA are similar to the frame control, the duration, the TA, and the RA included in the single radio block ACK frame in Fig. 9.

The EML control field includes the pre-configure link information of the EMLSR.

The next single radio link is next single radio link information of the present technology.

The CRC is an error detection code.

Note that the next single radio link information in Fig. 24 may be notified as a format for designating one link as described above, or may be notified of all available links in bitmap format.

Alternatively, the next single radio link information may be notified as the next single radio link information in which information of one link of the most likely candidate and the information in bitmap format indicating other available links.

Note that other than the example of Fig. 24, necessary information may be appropriately added to configure an action frame.

Furthermore, the aggregation frame in Fig. 24 may be added not to the control frame but to a data frame including the A-MPDU in the format of action frame. Moreover, the action frame may independently notify of the next single radio link information without adding the action frame to a discretionary frame as illustrated in Fig. 24.

### <Processing of AP in Second Embodiment>

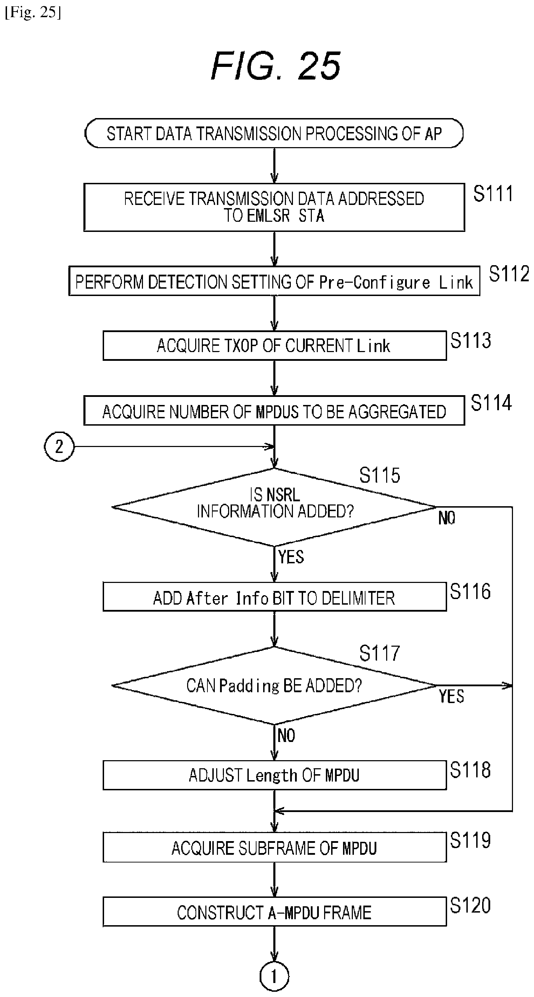

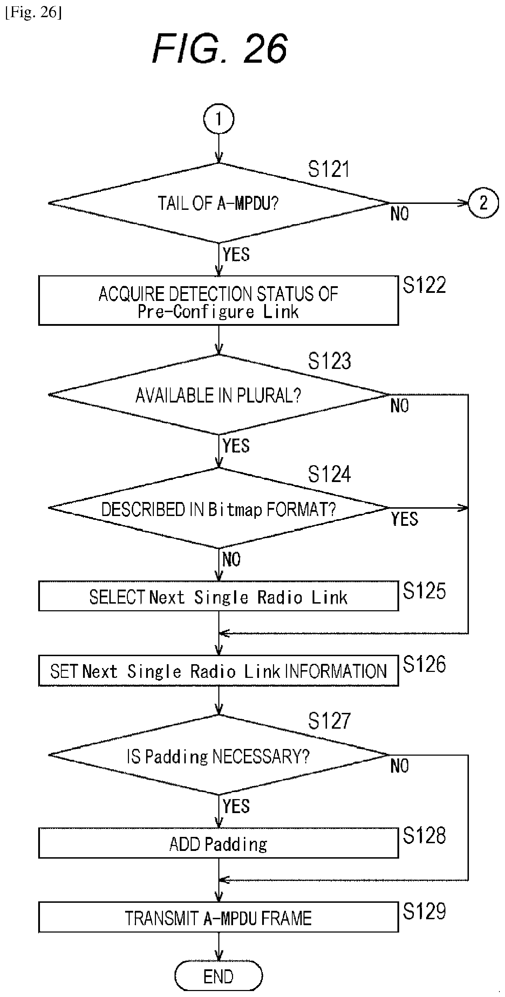

Figs. 25 and 26 are flowcharts explaining data transmission processing of the communication device (AP) on the data transmission side in the second embodiment of the present technology.

In step S111, the data construction unit 22 receives, from the equipment control module 13 via the data buffer 21, transmission data addressed to the EMLSR STA.

In step S112, the multi-link control unit 23 performs detection setting for learning the usage status of the EMLSR STA in the pre-configure link.

In step S113, the multi-link control unit 23 acquires the status of the transmission opportunity (TXOP) on the current link for data transmission, and specifies the transmittable duration using the acquired link.

In step S114, the multi-link control unit 23 acquires the number of A-MPDUs, which is the number of MPDUs to be aggregated.

In step S115, the multi-link control unit 23 determines whether or not to add next single radio link (NSRL) information of the present technology. In a case where it is determined in step S115 to add the next single radio link information, the process proceeds to step S116.

In step S116, the data construction unit 22 sets, as an after info bit, and adds, to the delimiter, a bit that is reserved in the past delimiter.

In step S117, the data construction unit 22 determines whether or not to be able to add the padding. In a case where it is determined in step S117 that the padding cannot be added, the process proceeds to step S118.

In step S118, the data construction unit 22 adjusts the length of the MPDU to include the next single radio link information into the frame. Thereafter, the process proceeds to step S119.

Furthermore, also in a case where it is determined in step S115 not to add the next single radio link information or in a case where it is determined in step S117 to be able to add the padding, the process proceeds to step S119.

In step S119, the data construction unit 22 acquires one MPDU subframe.

In step S120, the data construction unit 22 constructs an A-MPDU frame. Thereafter, the process proceeds to step S121 in Fig. 26.

In step S121, the data construction unit 22 determines whether or not to be a tail of the A-MPDU (frame) on the basis of the number of A-MPDUs. In a case where it is determined in step S121 that it is not the tail of the A-MPDU, the process returns to step S115, and the subsequent processing is repeated.

In a case where it is determined in step S121 that it is the tail of the A-MPDU, the process proceeds to step S122.

In step S122, the pre-configure link determination unit 31 acquires the detection status of the pre-configure link of itself.

In step S123, the multi-link control unit 23 determines whether or not a plurality of single radio links is available on the basis of the detection status of pre-configure link of itself. In a case where it is determined in step S123 that the plurality of single radio links can be used, the process proceeds to step S124.

In step S124, the multi-link control unit 23 determines whether or not to describe, in bitmap format, information notifying of use of the plurality of single radio links. In a case where it is determined in step S124 not to describe, in bitmap format, information notifying of use of the plurality of single radio links, the process proceeds to step S125.

In step S125, the multi-link control unit 23 selects one next single radio link. In this case, in step S126, the multi-link control unit 23 sets the next single radio link information describing the information indicating the selected link.

In a case where it is determined in step S123 that the plurality of links is not available, the process in steps S124 and S125 is skipped, and the process proceeds to step S126. In this case, in step S126, the multi-link control unit 23 sets the next single radio link information describing the information indicating one link.

In a case where it is determined in step S124 to describe, in bitmap format, the information notifying of the use of the plurality of single radio links, the process proceeds to step S126. In this case, the multi-link control unit 23 sets the next single radio link information in bitmap format in step S126.

In step S127, the data construction unit 22 determines whether or not padding for 4-byte alignment is necessary at the tail of the A-MPDU. In a case where it is determined in step S127 that padding is necessary, the process proceeds to step S128.

In step S128, the data construction unit 22 adds the padding so as to satisfy the alignment length.

In a case where it is determined in step S127 that the padding is not necessary, the process of step S128 is skipped, and the process proceeds to step S129.

In step S129, the multi-link control unit 23 controls the first data transmission block or the second data transmission block to transmit the constructed A-MPDU frame, and thereafter, the data transmission processing of the AP in Figs. 25 and 26 ends.

### <Processing of EMLSR STA>

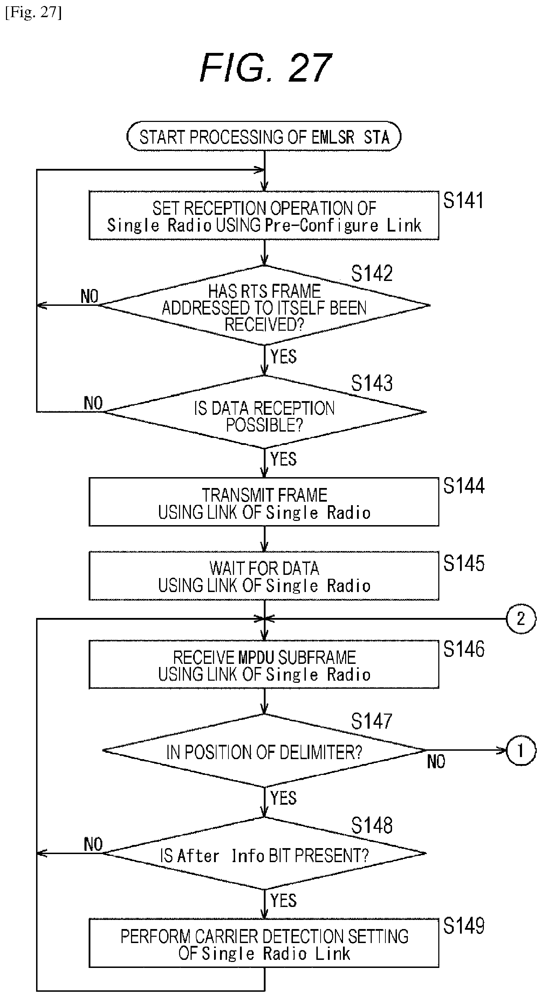

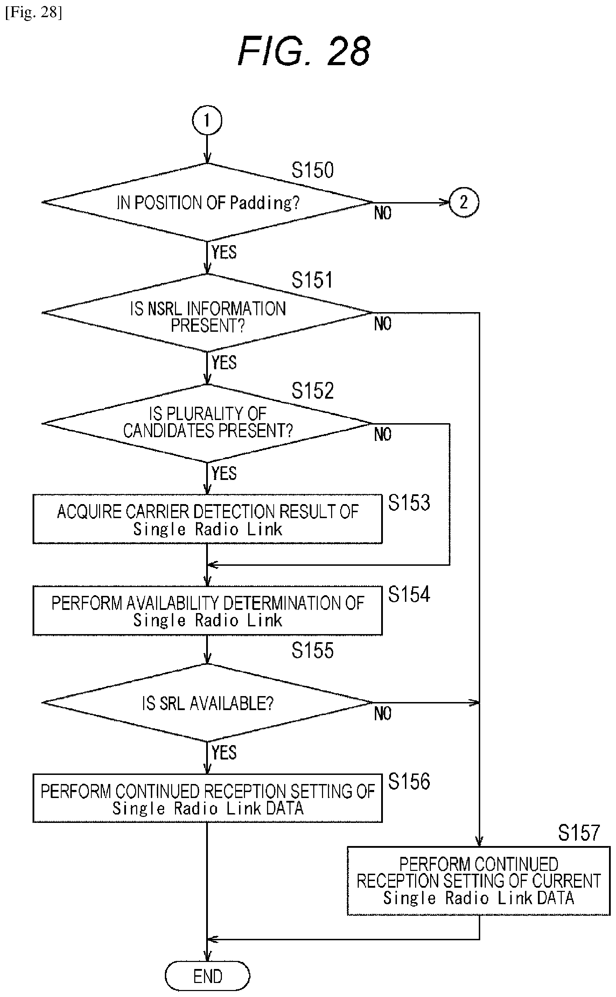

Figs. 27 and 28 are flowcharts explaining the data reception processing of EMLSR STA in the second embodiment of the present technology.

In step S141, by exchanging, for example, a predetermined frame with the communication device (AP) on the data transmission side, the single radio control unit 56 of the EMLSR STA operates a link defined as the pre-configure link, thereby setting single radio receiving operation.

In step S142, the single radio control unit 56 determines whether or not to have received a multi-user RTS frame (hereinafter, RTS frame) as a control frame addressed to itself in any pre-configure link. In a case where it is determined in step S142 to have not received the RTS frame addressed to itself, the process returns to step S141, and the subsequent processing is repeated.

In a case where it is determined in step S142 to have received the RTS frame addressed to itself, the process proceeds to step S143.

In step S143, the single radio control unit 56 determines whether or not to be capable of data reception using the link of single radio that has received the RTS frame. In a case where it is determined in step S143 that the data reception is not possible, the process returns to step S141, and the subsequent processing is repeated.

In a case where it is determined in step S143 that the data reception is possible, the process proceeds to step S144.

In step S144, the single radio control unit 56 transmits the control frame (CTS frame) using the link of the single radio that has received the RTS frame.

In step S145, the single radio control unit 56 waits for data using the link of single radio.

In step S146, the single radio data processing unit 52 receives the MPDU subframe by using the link of single radio.

In step S147, the single radio control unit 56 determines whether or not to be the position of the delimiter. In a case where it is determined in step S147 to be the position of the delimiter, the process proceeds to step S148.

In step S148, the single radio control unit 56 determines whether or not the after info bit is in the delimiter. In a case where it is determined in step S148 that the after info bit is in the delimiter, the process proceeds to step S149.

In step S149, the single radio data processing unit 52 performs setting for learning the usage status of the transmission path, such as carrier detection of single radio link. Thereafter, the process returns to step S146, and the subsequent processing is repeated.

Even in a case where it is determined in step S148 that the after info bit is not in the delimiter, the process returns to step S146, and the subsequent processing is repeated.

On the other hand, in a case where it is determined in step S147 not to be the position of the delimiter, the process proceeds to step S150 in Fig. 28.

In step S150, the single radio control unit 56 determines whether or not to be the position of padding. In a case where it is determined in step S150 not to be the position of padding, the process returns to step S146, and the subsequent processing is repeated.

In a case where it is determined in step S150 to be the position of padding, the process proceeds to step S151.

In step S151, the single radio control unit 56 determines whether or not the next single radio link (NSRL) information is in the padding. In a case where it is determined in step S151 that the next single radio link information is in the padding, the process proceeds to step S152.

In step S152, by referring to the next single radio link information, the single radio control unit 56 determines whether or not there is a plurality of candidates. In a case where it is determined in step S152 that there is a plurality of candidates such as the next single radio link information is described in bitmap format, for example, the process proceeds to step S153.

In step S153, the pre-configure link determination unit 64 acquires a carrier detection result of the single radio link of itself. Thereafter, the process proceeds to step S154.

Also in a case where it is determined in step S152 that there is not a plurality of candidates, the process proceeds to step S154.

In step S154, the single radio control unit 56 selects the optimum single radio link, and determines availability of the selected single radio link on the basis of the carrier detection result of the single radio link of itself. Note that in a case where not the bitmap format but a specific link is designated, availability of the designated single radio link is determined.

In step S155, the single radio control unit 56 determines whether or not the single radio link (SRL) is available. In a case where it is determined in step S155 that the single radio link is available, the process proceeds to step S156.

In step S156, a setting for continuously receiving data using available single radio link is performed.

Furthermore, in a case where it is determined in step S155 that single radio link is not available, the process proceeds to step S157.

In step S157, the single radio control unit 56 temporarily sets continuous reception of data using the current single radio link, and prepares for the next data transmission on the basis of a predetermined access control procedure.

After step S156 or S157, the data reception processing in Figs. 27 and 28 ends.

### <Effects of Second Embodiment>

As described above, in the second embodiment of the present technology, by notifying the STA of the EMLSR of the next single radio link information, it is possible to specify the link that the STA of the EMLSR waits for, and to reduce redundant information exchange.

In particular, by including the next single radio link information at the timing during transmission of the A-MPDU frame, it is possible to immediately notify the STA of the EMLSR on the data reception side of the latest status of the transmission path.

By including the next single radio link information in the delimiter and the padding of the A-MPDU frame, it is not necessary to use another frame for notification of an available link, and notification can be performed during data transmission.

Furthermore, by notifying the next single radio link information by using the A-control field of the MAC header, it is possible to immediately notify the accurate status of the latest transmission path at the return timing of a discretionary frame.

In a case where there is a plurality of available links (next single radio links), it is possible to give room for selection also to the data reception side by including the information in bitmap format, and it is possible to select a link that is reliably used.

Since it is possible to save the time required for exchanging a redundant RTS frame and a CTS frame for the data transmission sequence of the EMLSR of the past system, it is possible to effectively utilize the saved time for a transmission opportunity (TXOP) for data transmission.

Moreover, the number of aggregates of A-MPDU can be optimized in a limited TXOP on a certain link.

Furthermore, in a case where there is retransmission data or in a case where data needs to be continuously received, even in a case where all data transmission is not completed in the TXOP of one link, seamless data transmission can be performed by immediately switching to another link.

In this way, by continuously using the multi-link, real-time application data can be seamlessly transmitted.

### <<3. Third Embodiment (Combination of First Embodiment and Second Embodiment)>>

Next, as the third embodiment, an example in which the first embodiment and the second embodiment described above are combined will be described.

### <Configuration of System>

The system configuration of the third embodiment is similar to the system configuration of the first embodiment.Accordingly, hereinafter, the system configuration of the first embodiment described above with reference to Fig. 1 will also be used as the system configuration of the third embodiment.

### <Operation of AP and EMLSR STA in Third Embodiment of Present Technology>

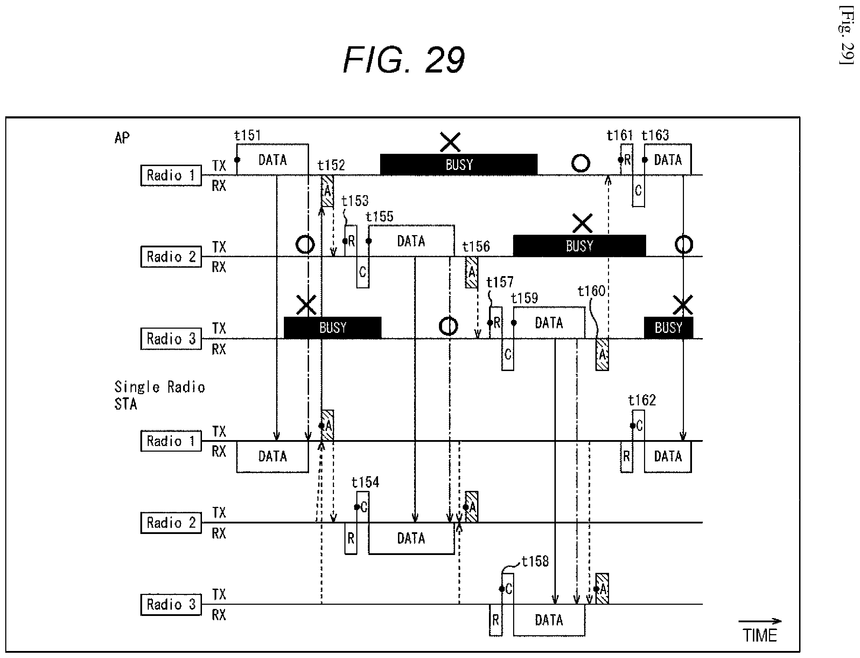

Fig. 29 is a view illustrating an operation sequence of AP or a communication device (AP in the figure) on the data transmission side and EMLSR STA in the third embodiment of the present technology.

Note that in Fig. 29, similarly to Fig. 18, the solid arrow represents transmission of control information included in a delimiter at the rear of a signal, and the one-dot chain line arrow represents transmission of control information included in padding at the tail of a signal.

The processing at timing t151 in Fig. 29 is the same as the processing at timing t101 in Fig. 18. That is, the AP acquires, during data transmission using Radio 1, the state of the link immediately before the end of transmission of the A-MPDU, and determines the link available in the next data transmission. The AP describes, and transmits, the next single radio link information, which is link information available for next data transmission, into the data being transmitted.

The EMLSR STA receiving data in Radio 1 determines an available link of itself on the basis of a detection result of the usage state of a pre-configure link during reception of the data or immediately after reception of the data. Note that the next single radio link information included in the data may also be referred to in the determination of the available link of itself. In a case where the EMLSR STA determines that, for example, Radio 2 and Radio 3 are available, at timing t152, the EMLSR STA transmits, to the AP, a block ACK frame including the available single radio link information indicating Radio 2 and Radio 3 as available links.

The AP having received the block ACK frame specifies the link (Radio 2) to transition next in consideration of the available single radio link information included in the block ACK frame and the next single radio link information of itself.

This allows the AP to obtain information on the link in which the EMLSR STA on the data reception side can reliably transition, and to more reliably perform the data transmission.

Similarly, also the EMLSR STA can specify the link (Radio 2) on which data transmission is to be continuously performed on the basis of the next single radio link information of the AP on the data transmission side and the available single radio link information of the EMLSR STA, and can wait for the RTS frame, for example, by using the link of Radio 2.

At timing t153, the AP transmits a multi-user RTS frame (hereinafter, RTS frame) as a control frame by using the link of Radio 2.

Upon receiving the RTS frame, the EMLSR STA returns a CTS frame to the AP at timing t154 similarly to the past method. Therefore, the AP can continue data transmission to the EMLSR STA using the link (Radio 2) where the RTS frame is received.

The AP having received the CTS frame starts data transmission at timing t155. The AP includes, and transmits, the next single radio link information, which is link information available for next data transmission, in the data being transmitted.

The EMLSR STA receiving data in Radio 2 determines an available link of itself during reception of the data or immediately after reception of the data. In a case where the EMLSR STA determines that, for example, Radio 1 and Radio 3 are available, at timing t156, the EMLSR STA transmits, to the AP, a block ACK frame including the available single radio link information indicating Radio 1 and Radio 3 as available links.

The AP having received the block ACK frame specifies the link (Radio 3) to transition next in consideration of the available single radio link information included in the block ACK frame and the next single radio link information of itself.

At timing t157, the AP transmits an RTS frame by using the link of Radio 3.

Upon receiving the RTS frame, the EMLSR STA returns a CTS frame to the AP at timing t158 similarly to the past method. Therefore, the AP can continue data transmission to the EMLSR STA using the link (Radio 3) where the RTS frame is received.

The AP having received the CTS frame starts data transmission at timing t159. The AP includes, and transmits, the next single radio link information, which is link information available for next data transmission, in the data being transmitted.

The EMLSR STA receiving data in Radio 2 determines an available link of itself during reception of the data or immediately after reception of the data. In a case where the EMLSR STA determines that, for example, Radio 1 and Radio 3 are available, at timing t160, the EMLSR STA transmits, to the AP, a block ACK frame including the available single radio link information indicating Radio 1 and Radio 3 as available links.

The AP having received the block ACK frame specifies the link (Radio 1) to transition next in consideration of the available single radio link information included in the block ACK frame and the next single radio link information of itself.

At timing t161, the AP transmits an RTS frame by using the link of Radio 1.

Upon receiving the RTS frame, the EMLSR STA returns a CTS frame to the AP at timing t162 similarly to the past method. Therefore, the AP can continue data transmission to the EMLSR STA using the link (Radio 1) where the RTS frame is received.

The AP having received the CTS frame starts data transmission at timing t163. The AP includes, and transmits, the next single radio link information, which is link information available for next data transmission, in the data being transmitted.

As described above, by sharing the link information available to both the data transmission side and the data reception side, it is possible to more reliably specify the link to transition.

Then, the AP can transmit, for example, an RTS frame on the link available to both. For example, by returning the CTS frame, the EMLSR STA can continue data transmission on the link where the RTS frame is received.

By repeating such operation, for example, even in a case where retransmission of undelivered data becomes necessary, it is possible to immediately perform the retransmission of the data using the next available link.

Note that although an example in which the RTS frame and the CTS frame are exchanged as the control information is described here, in a case where a reliable link is specified between the data transmission side and the data reception side, the data transmission may be performed without exchanging these control frames.

Based on the above description, details of the third embodiment of the present technology will be described below.

### <Configuration of Wireless Communication Device>

The device configuration of the third embodiment is similar to the device configuration of the first embodiment. Accordingly, hereinafter, the device configuration of the first embodiment described above with reference to Figs. 5, 6, and 7 will also be used as the device configuration of the third embodiment.

Note that in the configuration (Fig. 6) of the wireless communication module of the device operating as the communication device (AP) on the data transmission side of the third embodiment of the present technology, the processing of receiving the single radio block ACK frame, in particular, is performed by the first data reception block, for example, in a case where the single radio block ACK frame is received by using the link of Radio 1.

In this case, the waveform of the signal is detected by the multi-link RF detection unit 27-1, the baseband signal is extracted by the multi-link PHY reception unit 28-1 from the detected waveform, and a predetermined frame in the channel of the baseband signal is detected by the multi-link MAC determination unit 29-1. Through the above processing, the multi-link control unit 23 recognizes that the single radio block ACK frame has been received as one of the control frames.

Furthermore, in a case where the information of the available single link is included in the single radio block ACK frame, the pre-configure link determination unit 31 notifies the multi-link control unit 23 of that effect, and the multi-link control unit 23 specifies the link (radio) available to the EMLSR STA and controls communication on the specified link (radio).

In a case where the next single radio link information is included in the padding of the A-MPDU frame, the multi-link control unit 23 constructs the next single radio link information on the basis of the information on the available link supplied from the pre-configure link determination unit 31, replaces the padding, and transmits the next single radio link information.

Furthermore, in a case where information indicating that the next single radio link information is described in the padding is included in the final delimiter of the A-MPDU frame, the multi-link control unit 23 constructs information indicating that the next single radio link information is included in the padding, replaces the final delimiter, and transmits the information.

In particular, in the configuration (Fig. 7) of the wireless communication module of the device operating as the EMLSR STA of the third embodiment of the present technology, the processing of transmitting the single radio block ACK frame is executed by the data transmission block under the control of the single radio control unit 56.

That is, the transmission data is constructed as a control frame by the single radio MAC processing unit 53, converted into a baseband signal by the single radio PHY transmission unit 54, subjected to high-frequency processing by the single radio RF signal processing unit 55, and transmitted from the antenna.

The processing of receiving the A-MPDU frame is executed by the data reception block under the control of the single radio control unit 56.

That is, the single radio RF signal detection unit 69 detects the waveform of the received data portion from the signal received by the antenna, the single radio PHY reception unit 68 executes reception processing of a predetermined A-MPDU frame in the single radio channel with respect to the baseband signal extracted from the detected waveform, and the single radio MAC determination unit 67 analyzes delimiter information and separates the MPDU portion.

Here, in a case where the next single radio link information is included in the delimiter transmitted from the AP, the next single radio link information is supplied to the single radio control unit 56.

### <Fourth Configuration of Single Radio Block ACK Frame>

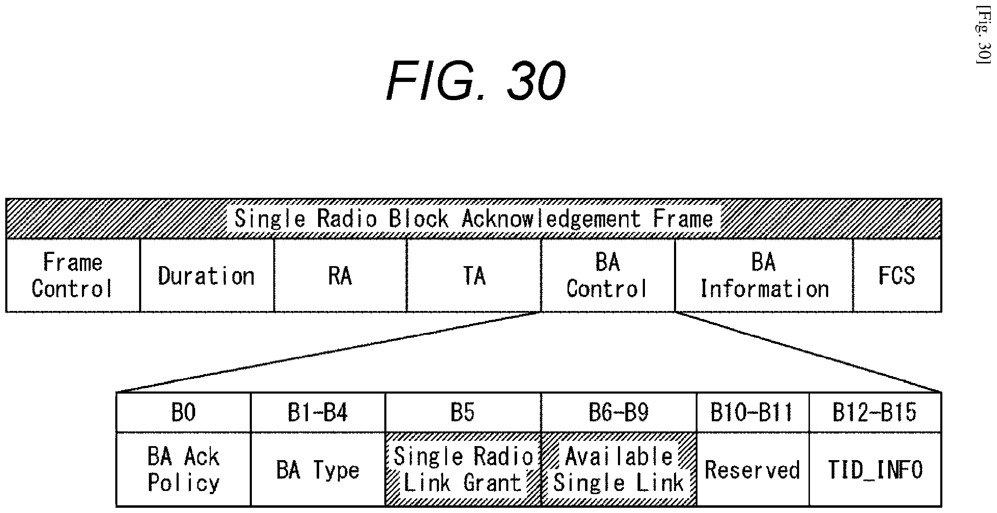

Fig. 30 is a view illustrating the fourth configuration example of the single radio block ACK frame.

The single radio block ACK frame in Fig. 30 is different from the single radio block ACK frame in Fig. 9 in the configuration of the BA control field.

The BA control field is configured to include a BA ACK policy bit (0th bit), a BA type bit (1st bit to 4th bit), a single radio link grant bit (5th bit), an available single link bit (6th bit to 9th bit), a reserved bit (10th bit and 11th bit), and a TID_INFO bit (12th bit to 15th bit).

The single radio link grant bit is information indicating necessity for the next single radio link notified from the AP on the data transmission side. Note that in a case where the block ACK frame has the minimum necessary configuration, the block ACK frame is only required to have the single radio link grant bit, but may include the available single link bit.

The available single link bit is available single radio link information indicating an available link.

That is, in a case where a plurality of links available for the next data frame is designated from the AP on the data transmission side by the available single link bit, it is possible to notify of one link where a link that can be agreed by the both as the available single radio link in consideration of the link available also in the EMLSR STA on the data reception side.

### <Processing of AP>

Since the data transmission processing of the AP in the third embodiment of the present technology is basically similar to the data transmission processing of the AP in the second embodiment described above with reference to Figs. 25 and 26, the description of it will be omitted.

### <Processing of STA>

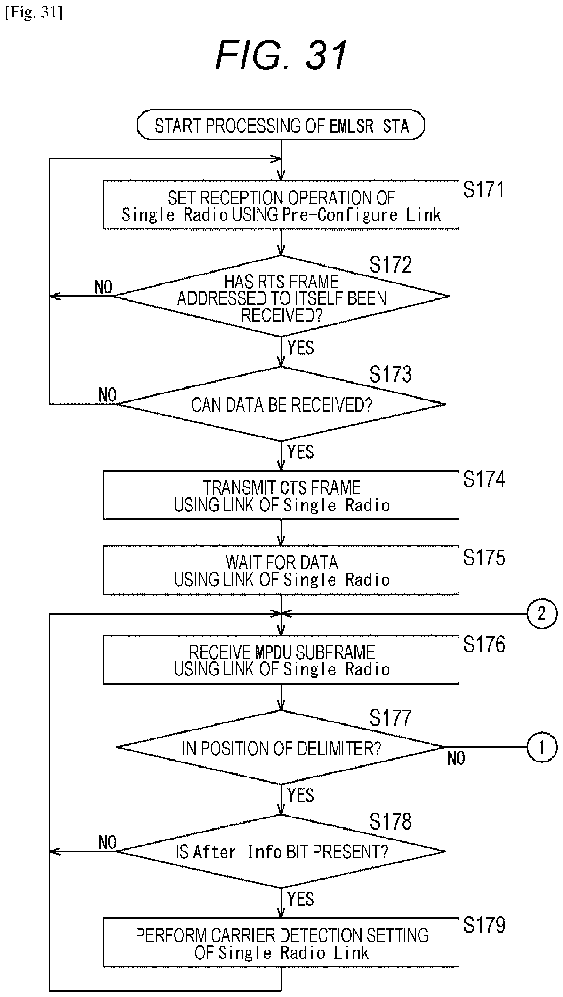

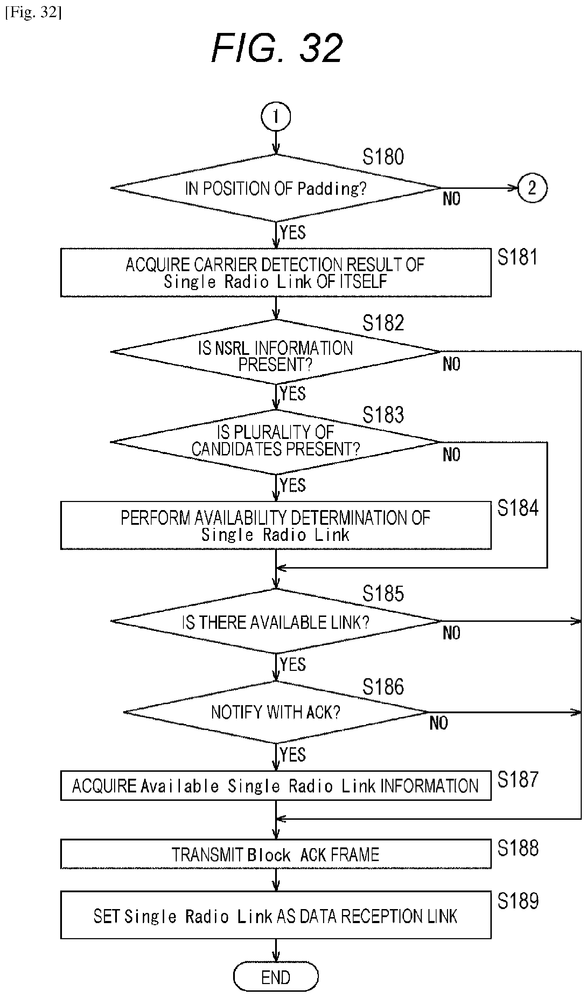

Figs. 31 and 32 are flowcharts explaining the data reception processing of EMLSR STA in the third embodiment of the present technology.

Note that the process in steps S171 to S180 in Figs. 31 and 32 is similar to the process in steps S141 to S150 in Figs. 27 and 28, and thus the description of it will be omitted.

In step S181 of Fig. 32, the pre-configure link determination unit 64 acquires the carrier detection result of the single radio link of itself.

In step S182, the single radio control unit 56 determines whether or not the next single radio link information is in the padding. In a case where it is determined in step S182 that the next single radio link information is in the padding, the process proceeds to step S183.

In step S183, by referring to the next single radio link information, the single radio control unit 56 determines whether or not there is a plurality of candidates. In a case where it is determined in step S183 that there is a plurality of candidates such as the next single radio link information is described in bitmap format, for example, the process proceeds to step S184.

In step S184, the pre-configure link determination unit 64 selects the optimum single radio link, and determines availability of the selected single radio link. Thereafter, the process proceeds to step S185.

Also in a case where it is determined in step S183 that there is not a plurality of candidates, the process proceeds to step S185.

In step S185, the pre-configure link determination unit 64 determines whether or not there is an available link. Note that in a case where not the bitmap format but a specific link is designated, availability of the designated single radio link is determined. In a case where it is determined in step S185 that there is an available link, the process proceeds to step S186.

In step S186, the single radio control unit 56 determines whether or not to include an available link in the ACK for notification. In a case where it is determined in step S186 to notify with ACK, the process proceeds to step S187.

In step S187, the single radio control unit 56 acquires the available single radio link information in order to be included in the ACK for notification. Thereafter, the process proceeds to step S188.

In a case where it is determined in step S182 that the next single radio link information is not in the padding, the process in steps S182 to S187 is skipped, and the process proceeds to step S188.

In a case where it is determined in step S185 that there is no available link, or in a case where it is determined in step S186 that the notification is not included in the ACK, the processing also proceeds to step S188.

In step S188, the single radio control unit 56 transmits the block ACK frame. Note that in a case where the available single radio link information is acquired in step S187, the block ACK frame to be transmitted includes the block ACK frame.

In step S189, the single radio control unit 56 sets the single radio link as a data reception link.

Note that in a case where an available link is set, data transmission may be waited for using a transitioned link having been set, or data transmission may be waited for using the currently used link. Alternatively, data transmission may be waited for by using a discretionary link. Thereafter, the data reception processing in Figs. 31 and 32 ends.

### <Effects of Third Embodiment>

As described above, in the third embodiment of the present technology, the technology in the first embodiment and the technology in the second embodiment are combined.

Therefore, effects similar to the effects of the first embodiment and the effects of the second embodiment described above can be obtained.

In addition, since the link information available to both the data transmission side and the data reception side is shared, it is possible to more reliably specify the link to transition.

### <<4. Fourth Embodiment (quick reserve single radio control frame)>>

Next, as the fourth embodiment, an example in which information for securing a transmission opportunity in advance is notified from the EMLSR STA on the data reception side in an available link will be described.

### <Configuration of System>

The system configuration of the fourth embodiment is similar to the system configuration of the first embodiment. Accordingly, hereinafter, the system configuration of the first embodiment described above with reference to Fig. 1 will also be used as the system configuration of the fourth embodiment.

### <Operation of EMLSR STA in Fourth Embodiment of Present Technology>

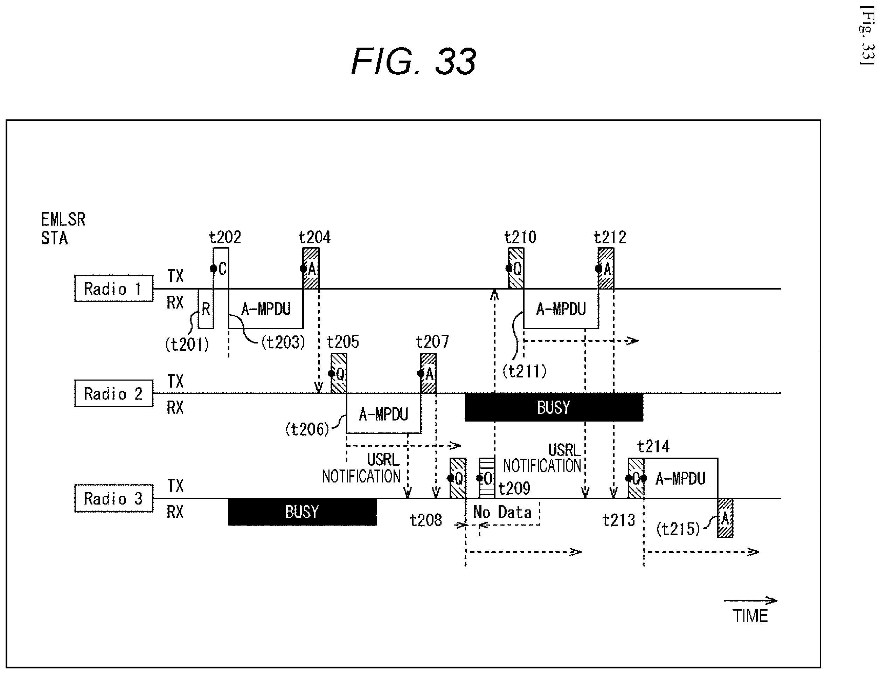

Fig. 33 is a view illustrating an operation sequence of EMLSR STA in the fourth embodiment of the present technology.

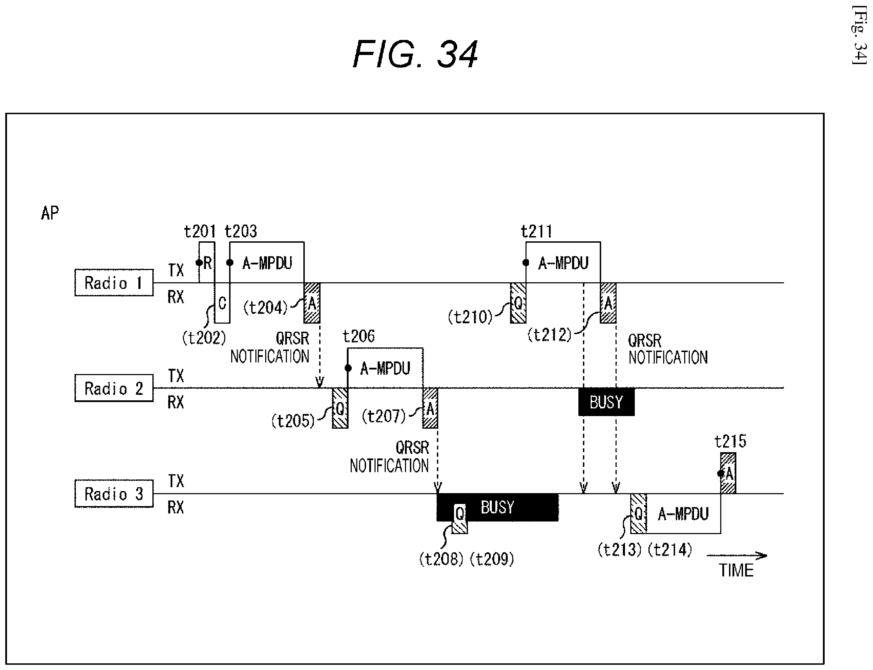

In Fig. 33, the operation timing of the AP is indicated in parentheses. Note that in the description of the operation of the EMLSR STA in Fig. 33, the operation timing of the communication device (AP) on the data transmission side illustrated in Fig. 34 is appropriately referred to.

At timing t201, the EMLSR STA receives the multi-user RTS frame (hereinafter, RTS frame) as a control frame transmitted by the AP using Radio 1. At timing t202, the EMLSR STA transmits the CTS frame to the AP by using Radio 1.

At timing t203, the EMLSR STA starts receiving the data transmitted by the AP using Radio 1.

After receiving the data, at timing t204, the EMLSR STA transmits a block ACK frame by using Radio 1.

At this time, in a case where it is desired to continue data reception, the EMLSR STA transitions, at timing t205, to the link (Radio 2) where a use opportunity is desired to be secured in advance, and transmits, by using Radio 2, a quick reserve single radio control frame (Q in the figure) including use reservation information for securing a use opportunity in advance in Radio 2. The link where a use opportunity is desired to be secured in advance is, that is, a link where securing the use opportunity in advance is indicated by use reservation information.

Note that prior to transmission of the quick reserve single radio control frame, quick reserve single radio information indicating that the EMLSR STA operates on Radio 2, which is a link where a use opportunity is desired to be secured in advance, may be added to the block ACK frame returned by using Radio 1, and may be notified to the AP that has transmitted the data.

Here, in a case where the AP on the data transmission side operates in the multi-link, since reception is possible in a discretionary link (radio), the AP can receive the quick reserve single radio control frame by using any link.

Therefore, since the operation of single radio by the EMLSR STA is continued by using the link (Radio 2) where the EMLSR STA desires to secure a use opportunity in advance, the AP on the data transmission side can transmit the data frame of the A-MPDU at timing t206 without exchanging the control frame.

Note that as described above, by receiving in advance the block ACK frame including the quick reserve single radio information, the AP becomes possible to learn in advance the link (radio) where the EMLSR STA operates with the single radio.

On the other hand, after transmitting the quick reserve single radio control frame, the EMLSR STA can receive the A-MPDU frame by using the same link as the link where the quick reserve single radio control frame is transmitted. Therefore, it is possible to shorten the time required for exchanging the control frames by the RTS frame and the CTS frame, which has been necessary in the past method.

Furthermore, in the A-MPDU frame transmitted from the AP on the data transmission side, a useful single radio link (USRL) information is included in the delimiter or the like of the tail MPDU.

By acquiring the useful single radio link information, the EMLSR STA can determine the link information of the single radio valid at the time point of acquiring the useful single radio link information. That is, by the useful single radio link information, the EMLSR STA can specify the link (radio) where the quick reserve single radio control frame should be transmitted.

After receiving the data, at timing t207, the EMLSR STA transmits the block ACK frame to the AP by using Radio 2.

After the operation using Radio 2, since, on the basis of the useful single radio link information, it can be learned to be able to transition to Radio 3 and continue data transmission, the EMLSR STA transmits the quick reserve single radio control frame using Radio 3 at timing t208.

However, immediately before the transmission by the AP on the data transmission side, in a case where another communication device starts data transmission by using Radio 3 and the AP is brought into the busy state, the AP cannot correctly receive the quick reserve single radio control frame. Accordingly, the A-MPDU frame, which is data, is not transmitted from the AP.

The EMLSR STA predefines open duration information in the above-described quick reserve single radio control frame. The open duration information is information indicating a valid period of the use opportunity.

In a case where the A-MPDU frame is not transmitted by the valid period indicated by the open duration information, the EMLSR STA generates an open reserve single radio control frame (O in the figure) indicating cancellation of use of Radio 3 at timing t209, and transmits the open reserve single radio control frame to the AP by using Radio 3. Therefore, it is possible to open the use opportunity of the link of Radio 3.

At this time, if another link (Radio 1) is available, the EMLSR STA transitions to Radio 1 and transmits the quick reserve single radio control frame at timing t210.

Due to this, since the operation of single radio by the EMLSR STA is continued on another link (Radio 1), the AP on the data transmission side can transmit the A-MPDU frame, which is the data frame, at timing t211 without exchanging the control frame.

Immediately after transmitting the quick reserve single radio control frame, the EMLSR STA receives the A-MPDU frame by using Radio 1, and transmits the block ACK frame by using Radio 1 at timing t212.

After receiving the A-MPDU frame, in a case of performing data transmission to the AP on the data transmission side, the EMLSR STA can transmit the quick reserve single radio control frame by using Radio 1 at timing t213, and also transmit the A-MPDU frame by using Radio 1 at timing t214 thereafter.

In this case, at timing t215 after data reception, the AP transmits the block ACK frame to the EMLSR STA by using Radio 1.

### <Operation of Communication Device (AP) on Data Transmission Side in Fourth Embodiment of Present Technology>

Fig. 34 is a view illustrating an operation sequence of the communication device (AP) on the data transmission side in the fourth embodiment of the present technology, corresponding to the operation sequence of EMLSR STA in Fig. 33.

In Fig. 34, the operation timing of the EMLSR STA is indicated in parentheses. Note that in the description of the operation of the AP in Fig. 34, the operation timing of the EMLSR STA illustrated in Fig. 33 is referred to.

At timing t201, as a control frame, the AP transmits a multi-user RTS frame (hereinafter, RTS frame) to the EMLSR STA using Radio 1. At timing t202, the AP receives, by using Radio 1, the CTS frame transmitted from the EMLSR STA.

At timing t203, the AP starts to transmit the A-MPDU frame, which is a data frame, to the EMLSR STA by using Radio 1.

After transmitting the data, the AP receives, by using Radio 1, the block ACK frame transmitted from the EMLSR STA at timing t204.

Here, in a case where the block ACK frame transmitted from the EMLSR STA includes information (quick reserve single radio information) on the link for transmitting the quick reserve single radio control frame, the AP learns that the data transmission continues to be performed by using the link (Radio 2).

Due to this, the AP on the data transmission side can receive, by using Radio 2 at timing t205, the quick reserve single radio control frame transmitted from the EMLSR STA, and can transmit the A-MPDU frame by using Radio 2 at timing t206.

Therefore, it is possible to immediately continue the data transmission without exchanging the control frame by the RTS frame and the CTS frame, which has been necessary in the past method. Therefore, overhead time can be shortened.

After transmitting the data, the AP receives, by using Radio 2, the block ACK frame transmitted from the EMLSR STA at timing t207.

Here, in a case where the block ACK frame transmitted from the EMLSR STA includes information (quick reserve single radio information) on the link for transmitting the quick reserve single radio control frame, the AP learns that the data transmission continues to be performed by using the link (Radio 3).

However, immediately before reception of the quick reserve single radio control frame, data transmission by another communication device may start, and the AP may be brought into the busy state. In this case, since the quick reserve single radio control frame transmitted from the EMLSR STA cannot be received, the AP cannot transmit the A-MPDU frame by using Radio 3.

On the other hand, since the EMLSR STA can also learn the situation where the transmission of the A-MPDU frame is not started, an open reserve single radio control frame (O in the figure) is transmitted by the EMLSR STA at timing t209. Then, at timing t210, the quick reserve single radio control Frame is transmitted by the EMLSR STA using another link (Radio 1).

Here, in a case where the AP on the data transmission side operates in the multi-link, since reception is possible in a discretionary link (radio), the AP can receive the quick reserve single radio control frame by using any link.

Therefore, since the operation of single radio by the EMLSR STA is continued by using another link (Radio 1), the AP on the data transmission side can transmit the A-MPDU frame using Radio 1 without exchanging the past control frame, at timing t211.

After transmitting the A-MPDU frame on the link (Radio 1), the AP receives the block ACK frame transmitted from the EMLSR STA at timing t212. Moreover, in a case where there is a desire for a link to be continuously used by the EMLSR STA, the EMLSR STA includes, in the block ACK frame, information (quick reserve single radio information) on the link for transmitting the quick reserve single radio control frame.

That is, since it can be learned on the basis of the quick reserve single radio information that the EMLSR STA still desires to use another link (Radio 3), the AP receives the quick reserve single radio control frame transmitted from the EMLSR STA by using Radio 3 at timing t213.

Then, in a case where the AP on the data transmission side does not have transmission data, the AP continues to receive the A-MPDU frame transmitted from the EMLSR STA at timing t214.

In this case, at timing t215, the AP transmits the block ACK frame, which is a response frame of reception acknowledgement corresponding to the A-MPDU frame transmitted from the EMLSR.

As described above, by transmission and reception of the quick reserve single radio control frame, the EMLSR STA can secure the use opportunity of the link (radio) to be continuously used for transmission.

That is, the device on the data reception side transitions to one of the pre-configure links that are available immediately after the end of the reception of the data addressed to itself, and transmits a control frame indicating that the use opportunity is secured in advance before the control frame is transmitted from the device on the data transmission side in a new link. Therefore, a link used as single radio can be secured in advance.

Note that in a case where the data transmission is not performed until a predetermined time elapses in a desired pre-configure link, a control frame for opening the link of single radio secured in advance is transmitted from the device on the data reception side.

That is, a surrounding communication device that has received the control frame that secures the use opportunity in advance and the control frame that opens the secured use opportunity can learn that reception of single radio is performed and can also learn that reception of single radio ends or is interrupted.

Moreover, in a case where one of the available pre-configure links is selected, the device that is transmitting data may include, in the data frame being transmitted, information indicating the radio to be used for the next single radio transmission.

Based on the above description, details of the fourth embodiment of the present technology will be described below.

### <Configuration of Wireless Communication Device>

The device configuration of the fourth embodiment is similar to the device configuration of the first embodiment. Accordingly, hereinafter, the device configuration of the first embodiment described above with reference to Figs. 5, 6, and 7 will also be used as the device configuration of the fourth embodiment.

Note that in the configuration (Fig. 6) of the wireless communication module of the device operating as the communication device (AP) on the data transmission side of the fourth embodiment of the present technology, the processing of receiving the quick reserve single radio control frame can be performed on any link as long as the transmission path is not in the busy state. For example, in a case where the quick reserve single radio control frame is received on the link of Radio 1, the reception is performed by the first data reception block.

In this case, the waveform of the signal is detected by the multi-link RF detection unit 27-1, the baseband signal is extracted by the multi-link PHY reception unit 28-1 from the detected waveform, and a predetermined frame in the channel of the baseband signal is detected by the multi-link MAC determination unit 29-1. Through the above processing, the multi-link control unit 23 recognizes that the quick reserve single radio control frame has been received as one of the control frames.

Furthermore, in a case where the information of quick reserve single radio is included in the block ACK frame, the pre-configure link determination unit 31 notifies the multi-link control unit 23 of that effect, and the multi-link control unit 23 specifies the link (radio) available to the EMLSR STA and controls communication on the link (radio).

In a case where the useful single radio link information is included in the final delimiter of the A-MPDU frame, the multi-link control unit 23 constructs this information on the basis of the information on the available link supplied from the pre-configure link determination unit 31, replaces the final delimiter, and transmits the information.

Furthermore, in the configuration (Fig. 7) of the wireless communication module of the device operating as the EMLSR STA of the fourth embodiment of the present technology, the processing of transmitting the quick reserve single radio control frame is executed by the data transmission block under the control of the single radio control unit 56.

That is, by the control by the single radio control unit 56, the transmission data is constructed as a control frame by the single radio MAC processing unit 53, converted into a baseband signal by the single radio PHY transmission unit 54, subjected to high-frequency processing by the single radio RF signal processing unit 55, and transmitted from the antenna.

The processing of receiving the A-MPDU frame is executed by the data reception block under the control of the single radio control unit 56.

That is, the single radio RF signal detection unit 69 detects the waveform of the received data portion from the signal received by the antenna, and the single radio PHY reception unit 68 executes reception processing of a predetermined A-MPDU frame in the single radio channel with respect to the baseband signal extracted from the detected waveform. Thereafter, the single radio MAC determination unit 67 analyzes delimiter information and separates the MPDU portion.

Here, in a case where the useful single radio link information is included in the delimiter transmitted from the AP, the useful single radio link information is supplied to the single radio control unit 56. The single radio control unit 56 performs, as necessary, control to determine a link for transmitting the quick reserve single radio control frame.

### <Configuration of Quick Reserve Single Radio Control Frame>

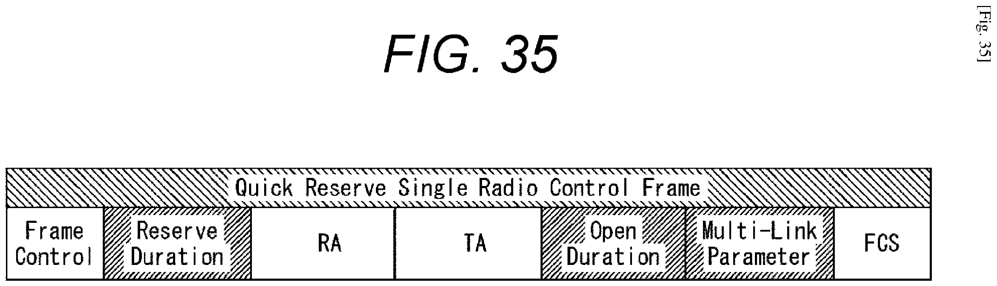

Fig. 35 is a view illustrating a configuration example of a quick reserve single radio control frame of the fourth embodiment of the present technology.

The quick reserve single radio control frame in Fig. 35 is configured to include frame control, reserve duration, an RA, a TA, open duration, a multi-link parameter, and an FCS.

The frame control is information indicating the type and format of the frame.

The reserve duration is information indicating the maximum available time in this link.

The RA is identification information for identifying a device on the reception side.

The TA is identification information for identifying a device on the transmission side.

The open duration is information indicating a valid period of the use opportunity indicating the period until open is determined without using this link.

The multi-link parameter is a parameter required for multi-link operation.

The FCS is a frame check sequence of error detection.

Note that in the quick reserve single radio control frame, the frame control or the TA is a basic parameter, and the open duration and the multi-link parameter are included in the quick reserve single radio control frame as necessary. Furthermore, the quick reserve single radio control frame may include other parameters.

Moreover, basically, identification information for identifying the RA and the TA of this control frame is described in the RA and the TA, but identification information for identifying the RA and the TA of the data frame to be transmitted next may be described. Furthermore, identification information of the RA and the TA of this control frame may be described in the RA and the TA, and identification information of the RA and the TA of the data frame to be transmitted next may be described in the multi-link parameter.

In a case where the identification information of the RA and the TA of the frame to be transmitted next is described in the multi-link parameter, as the identification in-formation of the RA and the TA of the frame to be transmitted next, for example, information indicating whether to have the same transmission direction as that of the RA and the TA or whether to have the reverse transmission direction may be described in the multi-link parameter. Furthermore, in the multi-link parameter, for example, identification information of the RA and the TA of the frame to be transmitted next may be described as it is. The description method is not particularly limited.

### <Configuration of Open Reserve Single Radio Control Frame>

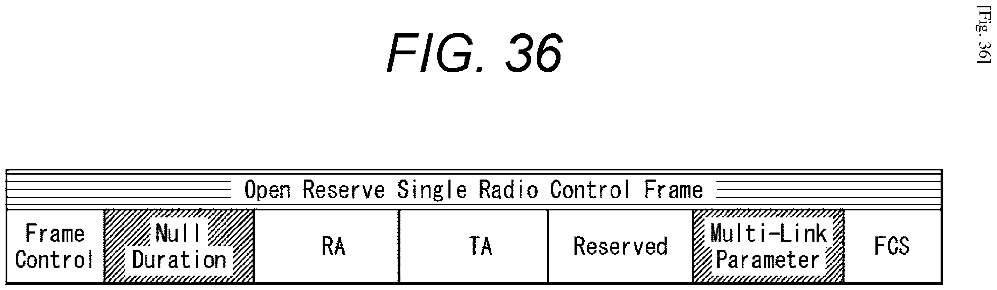

Fig. 36 is a view illustrating a configuration example of the open reserve single radio control frame.

The configuration of the open reserve single radio control frame in Fig. 36 is basically the same as the configuration of the quick reserve single radio control frame in Fig. 35, and the only different is that the reserve duration is replaced with null duration and the open duration is replaced with reserved.

The null duration is information indicating that this link is in an open state.

The reserved is a reserved area for future.

### <Configuration of Frame of Fourth Embodiment>

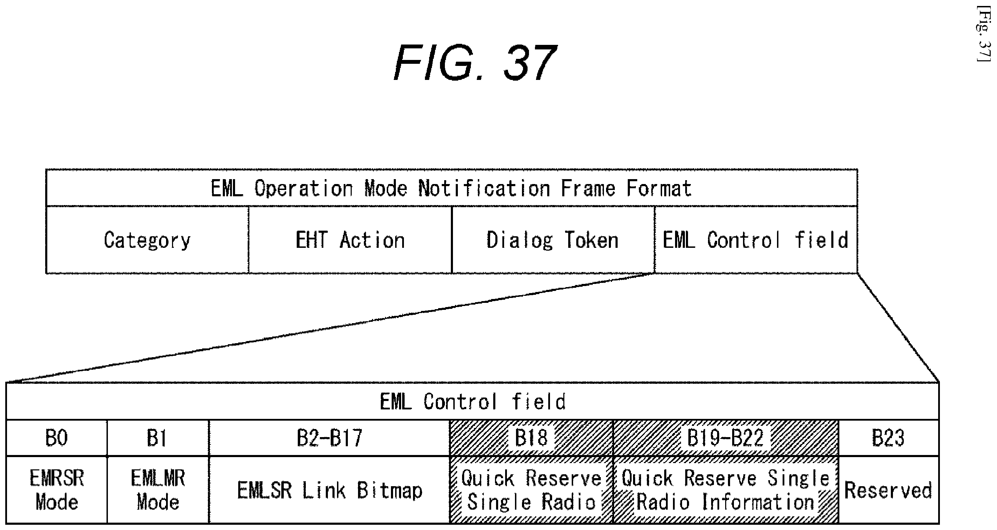

Fig. 37 is a view illustrating a configuration example of the frame of the fourth embodiment of the present technology.

The frame in Fig. 37 is a frame configured as an action frame or a management frame indicative of being compatible with operation of transmitting a quick reserve control frame in order to secure a use opportunity in advance.

The EML operation mode notification frame in Fig. 37 is different from the frame of Fig. 8 in terms of the configuration of the EML control field.

This EML control field is configured to include an EMLSR mode bit (0th bit), an EMLMR mode bit (1st bit), an EMLSR link bitmap bit (2nd bit to 17th bit), a quick reserve single radio bit (18th bit), a quick reserve single radio information bit (19th bit to 22nd bit), and a single radio BA bit (23rd bit).

The quick reserve single radio bit is a bit indicating whether or not transmission of a quick reserve control frame for securing in advance the use opportunity is possible.

The quick reserve single radio information bit is information indicating the link (radio) to be transmitted.

Note that other than this action frame, a quick reserve single radio bit indicating whether or not transmission of the quick reserve control frame is possible in order to secure the use opportunity in advance, and the quick reserve single radio information, which is information indicating the link (radio) to be transmitted, may be exchanged between the AP and the EMLSR STA as necessary.

### <Fourth Configuration of Single Radio Block ACK Frame>

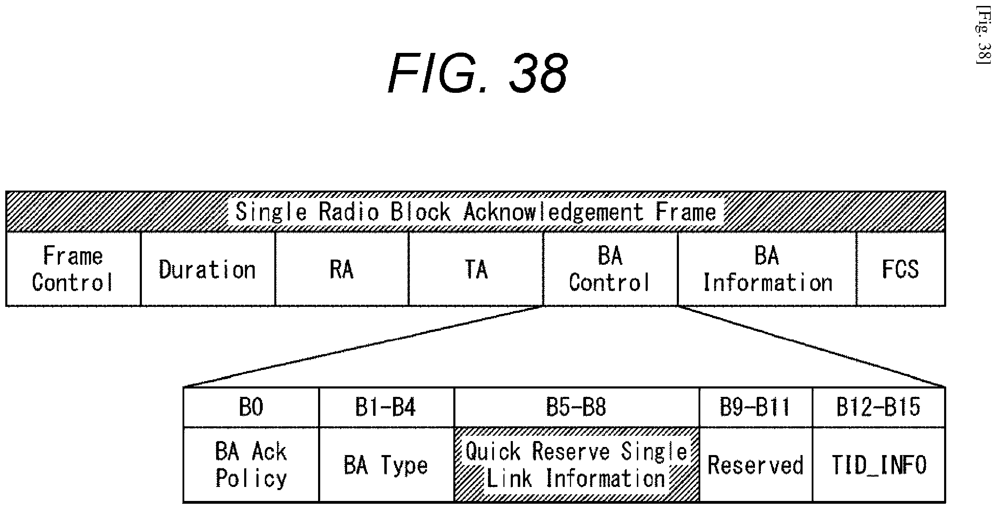

Fig. 38 is a view illustrating the fourth configuration example of the single radio block ACK frame.

The single radio block ACK frame in Fig. 38 is different from the single radio block ACK frame in Fig. 9 in the configuration of the BA control field.

The BA control field is configured to include a BA ACK policy bit (0th bit), a BA type bit (1st bit to 4th bit), a quick reserve single radio information bit (5th bit to 8th bit), a reserved bit (9th bit to 11th bit), and a TID_INFO bit (12th bit to 15th bit).

The available single link bit is information for designating the link for transmitting the quick reserve single radio control frame.

That is, the single radio block ACK frame in Fig. 38 is configured to be able to designate the link for transmitting the control frame by using the 5th bit to the 8th bit, which are the reserved bit of the BA control field, as the quick reserve single radio information bit with the format of the past block ACK frame remaining.

### <Configuration of A-MPDU Frame>

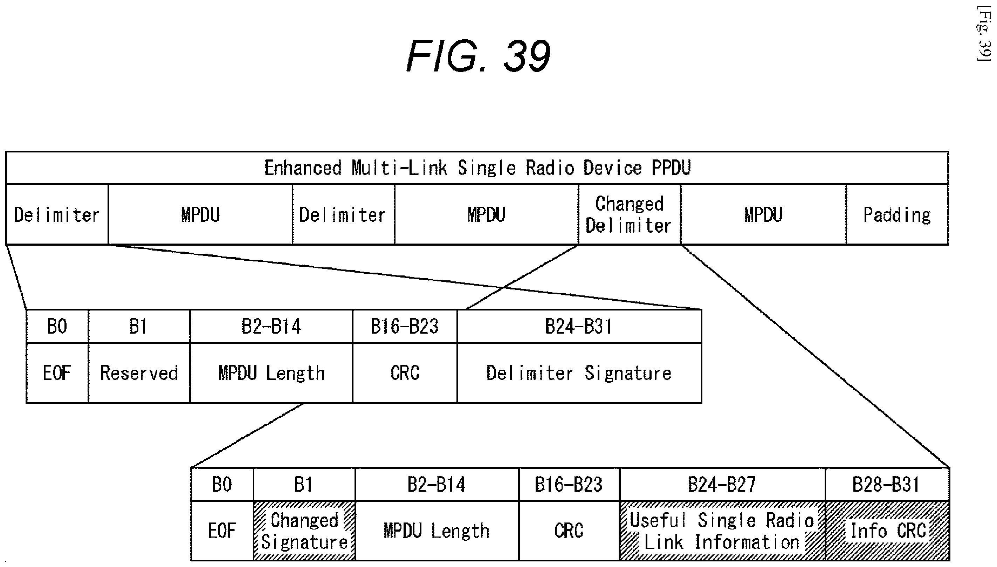

Fig. 39 is a view illustrating a configuration example of the A-MPDU frame of the fourth embodiment of the present technology.

Similarly to the A-MPDU frame in Fig. 20, the A-MPDU frame in Fig. 39 is configured by alternately aggregating a delimiter indicating a frame boundary and a MAC protocol data unit (MPDU) including actual data and adding padding to the tail.

However, the A-MPDU frame in Fig. 39 is different in the configuration of the delimiter (changed delimiter in the figure) for the final MPDU.

That is, similarly to the past, the head delimiter or the delimiter immediately preceding the final delimiter are configured to include an EOF bit (0th bit), a reserved bit (1st bit), an MPDU length bit (2nd bit to 14th bits), a CRC bit (16th bit to 23rd bit), and a delimiter signature bit (24th bit to 31st bit).

The changed delimiter is configured to include an EOF bit (0th bit), a changed signature bit (1st bit), an MPDU length bit (2nd bit to 14th bit), a CRC bit (16th bit to 23rd bit), a useful single radio link information bit (24th bit to 27th bit), and an info CRC (28th bit to 31st bit).

The changed signature bit is information indicating that useful single radio link information is included in a portion corresponding to delimiter signature of the past delimiter in the changed delimiter.

The useful single radio link information bit is information for notifying information on an available link.

The info CRC is information added as necessary to reliably transmit the useful single radio link information.

That is, because of the fact that the changed signature field is 1, the EMLSR STA having received data can learn that the useful single radio link information, which is additional information, is included in the final delimiter signature portion.

Note that although Fig. 39 illustrates an example in which the useful single radio link information bit is included in the final delimiter, the useful single radio link information bit may be included in another delimiter.

### <Processing of Communication Device (AP) on Data Transmission Side in Fourth Embodiment of Present Technology>

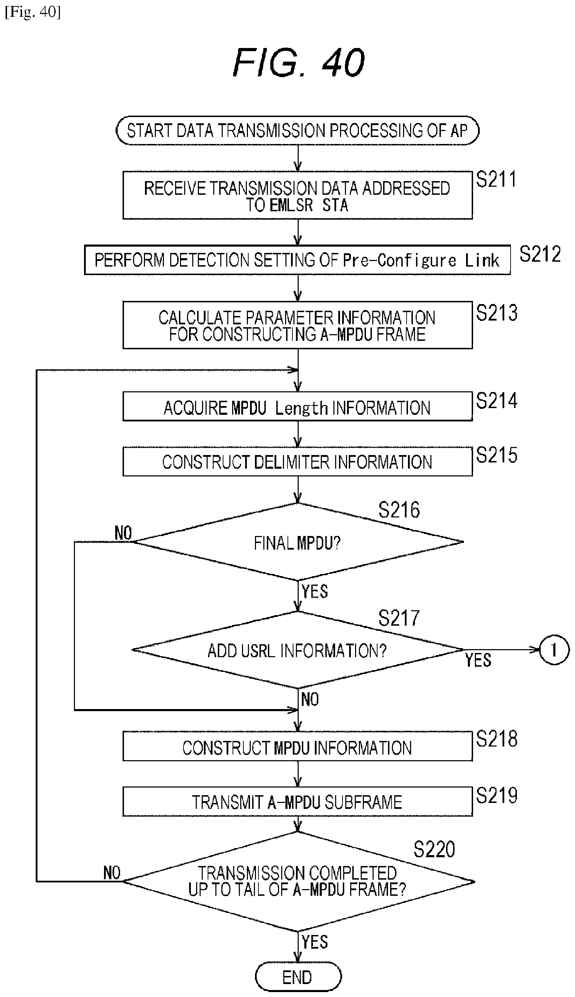

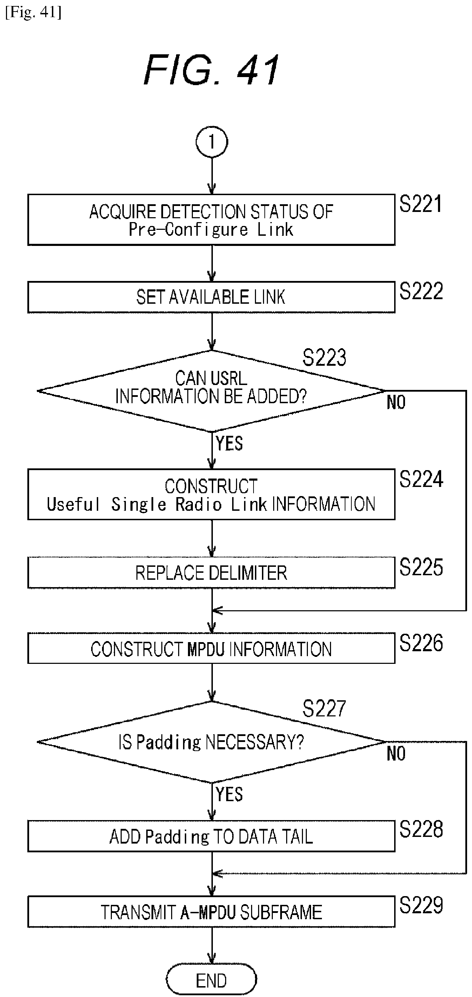

Figs. 40 and 41 are flowcharts explaining data transmission processing of the communication device (AP) on the data transmission side in the fourth embodiment of the present technology.

In step S211, the data construction unit 22 receives, from the equipment control module 13 via the data buffer 21, transmission data addressed to the EMLSR STA.

In step S212, the multi-link control unit 23 performs detection setting for learning the usage status of Single Radio STA in the pre-configure link.

In step S213, on the basis of the status of the transmission opportunity (TXOP) on the current link, the multi-link control unit 23 specifies the transmittable duration on the current link, and calculates parameter information for constructing the A-MPDU frame. The parameter information includes the number of possible aggregations as A-MPDUs.

In step S214, the data construction unit 22 acquires length information of each MPDU.

In step S215, the data construction unit 22 constructs delimiter information on the basis of the acquired length information.

In step S216, the data construction unit 22 determines whether or not the currently processed MPDU is the final MPDU constituting the A-MPDU. In a case where it is determined in step S216 that the MPDU is the final MPDU constituting the A-MPDU, the process proceeds to step S217.

In step S217, the data construction unit 22 determines whether or not to add usage single radio link (USRL) information. In a case where it is determined in step S217 that the usage single radio link information is not added, the process proceeds to step S218.

In a case where it is determined in step S216 that the MPDU is not the final MPDU constituting the A-MPDU, the processing also proceeds to step S218.

In step S218, the data construction unit 22 constructs the MPDU information. In step S219, the multi-link control unit 23 causes the first or second transmission block to sequentially perform transmission processing where the MPDU constructed by the data construction unit 22 is set as a subframe of the A-MPDU.

Thereafter, in step S220, the multi-link control unit 23 determines whether or not to have transmitted up to the tail of the A-MPDU frame. In a case where it is determined in step S220 to have transmitted up to the tail of the A-MPDU frame, the process ends.

In a case where it is determined in step S220 to have not transmitted up to the tail of the A-MPDU frame, the process returns to step S214, and the subsequent processing is repeated.

In a case where it is determined in step S217 to add the usage single radio link information, the process proceeds to step S221 in Fig. 41.

In step S221, the pre-configure link determination unit 31 acquires the detection status of the pre-configure link of itself.

In step S222, the pre-configure link determination unit 31 sets an available link from the strength of noise level or the like on the basis of the detection status of the pre-configure link or the like of itself.

In step S223, the multi-link control unit 23 determines whether or not the usage single radio link (USRL) information can be added. In a case where it is determined in step S223 to be able to add the usage single radio link information, the process proceeds to step S224.

In step S224, the data construction unit 22 constructs the usage single radio link information.

In step S225, the data construction unit 22 replaces the delimiter using the constructed usage single radio link information. Thereafter, the process proceeds to step S226.

In a case where it is determined in step S223 not to be able to add the usage single radio link information, the process in steps S224 and S225 is skipped, and the process proceeds to step S226.

In step S226, the data construction unit 22 constructs the MPDU information.

In step S227, the data construction unit 22 determines whether or not padding is necessary. In a case of not being aligned to 4 octets, it is determined in step S226 that padding is necessary, and the process proceeds to step S228.

In step S228, the data construction unit 22 adds padding to the tail of the data. Thereafter, the process proceeds to step S229.

In a case where it is determined in step S227 that padding is not necessary, the process in step S228 is skipped, and the process proceeds to step S229.

In step S229, the multi-link control unit 23 causes the first or second transmission block to sequentially perform transmission processing where the MPDU constructed by the data construction unit 22 is set as a subframe of the A-MPDU. Thereafter, the data transmission processing of the AP of Figs. 40 and 41 ends.

### <Processing of EMLSR STA>

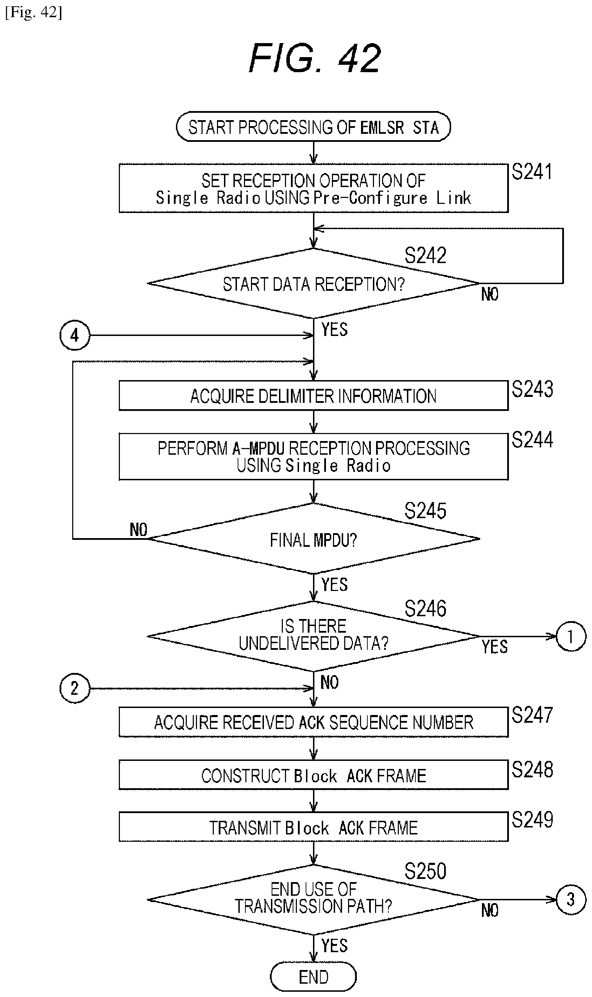

Figs. 42 to 43 are flowcharts explaining the data reception processing of EMLSR STA in the fourth embodiment of the present technology.

In step S241, by exchanging, for example, a predetermined action frame with the AP, the single radio control unit 56 of the EMLSR STA operates a link defined as the pre-configure link, thereby setting single radio receiving operation.

In step S242, the single radio control unit 56 determines whether or not to start data reception.

In step S242, the single radio control unit 56 waits until starting of data reception. In a case where the single radio control unit 56 transmits the CTS frame after receiving the control frame (RTS frame) in a discretionary pre-configure link, it is determined in step S242 to start that data reception, and the process proceeds to step S243.

In step S243, the single radio control unit 56 receives the A-MPDU frame and acquires the delimiter information.

In step S244, the single radio control unit 56 performs reception processing of the A-MPDU using single radio.

In step S245, every time receiving the subframe (MPDU) of the A-MPDU, the single radio control unit 56 determines whether or not it is the final MPDU. In a case where it is determined in step S245 that it is not the final MPDU, the process returns to step S243, and the subsequent processing is repeated.

In a case where it is determined in step S245 that it is the final MPDU, the process proceeds to step S246.

In step S246, it is determined whether or not there is undelivered data. In a case where it is determined in step S246 that there is no undelivered data, the process proceeds to step S247.

In step S247, the single radio control unit 56 acquires the ACK sequence number (S/N) information having been received.

In step S248, the data construction unit 22 constructs the block ACK frame on the basis of the received ACK sequence number information having been acquired.

In step S249, the data construction unit 22 transmits the constructed block ACK frame.

In step S250, the single radio control unit 56 determines whether or not to end the use of the transmission path. In a case where it is determined in step S250 to end the use of the transmission path, the data reception processing of the EMLSR STA in Figs. 42 to 44 ends.

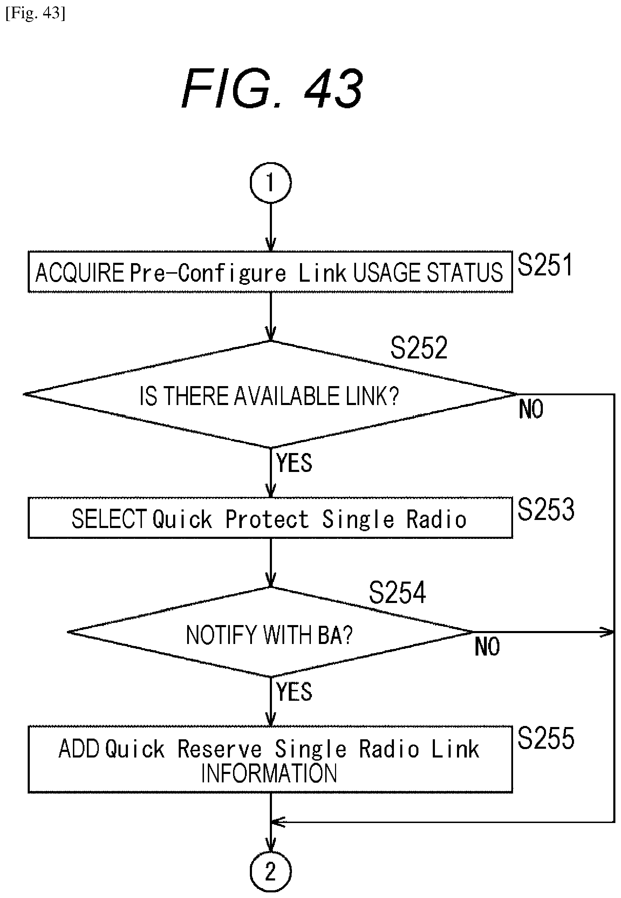

On the other hand, in a case where it is determined in step S246 that there is no undelivered data, the process proceeds to step S251 in Fig. 43.

In step S251, the pre-configure link determination unit 64 acquires the usage status of the pre-configure link.

In step S252, the pre-configure link determination unit 64 determines whether or not there is an available link on the basis of the reception field strength, noise level, and the like at the present time point of the pre-configure link. In a case where it is determined in step S252 that there is an available link, the process proceeds to step S253.

In step S253, the single radio control unit 56 selects the link that operates as quick reserve single radio.

In step S254, the single radio control unit 56 determines whether or not to make a notification by using the block ACK (BA). In a case where it is determined in step S254 that to make a notification using the BA, the process proceeds to step S255.

In step S255, the data construction unit 22 adds the quick reserve single radio link information to the BA. Thereafter, the process returns to step S247 in Fig. 42, and the subsequent processing is repeated.

In a case where it is determined in step S252 that there is no available link, or in a case where it is determined in step S254 not to make a notification using the BA, the process returns to step S247 in Fig. 42, and the subsequent processing is repeated.

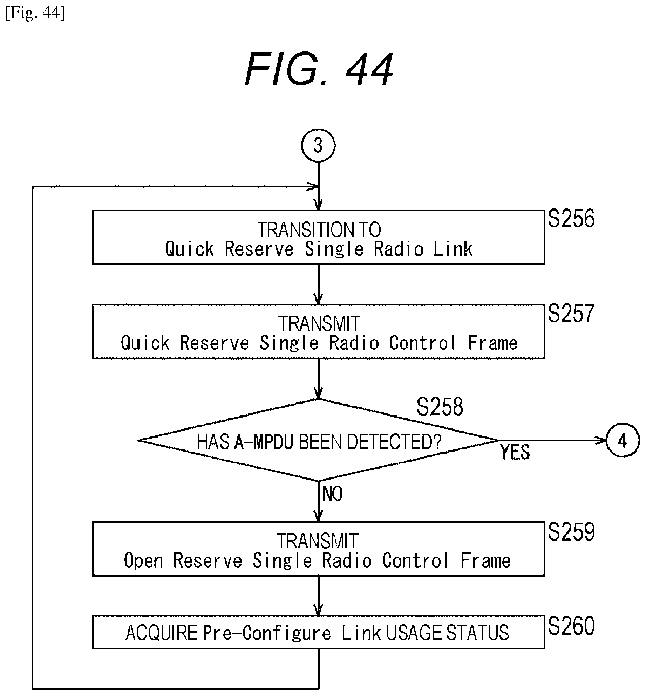

Furthermore, in a case where it is determined in step S250 not to end the use of the transmission path, the process proceeds to step S256 in Fig. 44.

In step S256, the single radio control unit 56 transitions to the link set as the quick reserve single radio link.

In step S257, the single radio control unit 56 transmits the quick reserve single radio control frame.

In step S258, it is determined whether or not to have detected the A-MPDU frame within an arrival time of predetermined open duration. In a case where it is determined in step S258 to have detected the A-MPDU frame within the arrival time of the predetermined open duration, the process returns to step S243 of Fig. 42, and the subsequent processing is repeated.

In a case where it is determined in step S258 not to have detected the A-MPDU frame within the arrival time of the predetermined open duration, the process proceeds to step S259.

In step S259, the single radio control unit 56 transmits the open reserve single radio control frame.

In step S260, the single radio control unit 56 acquires the usage status of the pre-configure link at that time point, and selects a new available quick reserve single radio link. Thereafter, the process returns to step S256, and the subsequent processing is repeated.

### <Effects of Fourth Embodiment>

As described above, in the fourth embodiment of the present technology, the control frame (quick reserve single radio control frame) for securing in advance a use opportunity is transmitted on the link to be used next by the EMLSR STA.

Therefore, another communication device can transmit and receive data before using an available link in the pre-configure link.

That is, since it is possible to notify in advance the surrounding communication device having received the control frame (quick reserve single radio control frame) for securing in advance a use opportunity of the fact that the EMLSR STA uses the transmission path, it is possible to secure a use opportunity of a restricted communication device.

Furthermore, in a case where data reception is not performed on the link where the control frame (quick reserve single radio control frame) for securing in advance a use opportunity is transmitted, the control frame (open single radio control frame) for opening the use opportunity is transmitted. Therefore, another communication device can be used on the link, and the transmission path is no longer unexpectedly occupied.

Furthermore, the control frame (quick reserve single radio control frame) for securing a use opportunity includes information allowing specification of the communication device of itself and information allowing specification of the transmission destination of the data, and includes information of the time for securing the required use opportunity. Therefore, it is possible to notify of the occupation time of the transmission path required between the communication devices.

The pre-configure link used in the EMLSR STA is selected from the information notifying the status of the link used in the EMLSR STA transmitted by the A-MPDU frame or the like from the AP on the data transmission side. Therefore, it is possible to select the reliable link between the communication devices that transmit and receive data.

In particular, use of the delimiter of the A-MPDU frame makes it possible to select an optimum link at that time point during transmission of the data frame.

Moreover, by describing, in the block ACK frame to be returned immediately after the data reception, the information on the link for transmitting the control frame (quick reserve single radio control frame) for securing the use opportunity, it is possible to specify the link where the EMLSR STA transitions.

That is, since both devices can share the information on the link for transitioning, it is possible to prevent another device from acquiring the use opportunity in the time required for link transition.

Due to this, by preferentially permitting transmission for restricted data transmission and reception in the EMLSR STA, it is possible to seamlessly use the transmission path at the time of multi-link operation.

### <<5. Others>>

### <Modifications>

Note that in the above description, data transmission between the AP that performs the multi-link multi-radio operation and the STA that performs the EMLSR operation has been described as an example. However, the data transmission may be performed between the STA that performs the multi-link multi-radio operation and the AP that performs the EMLSR operation.

That is, in the above description, an example in which the device on the data transmission side is the AP that performs the multi-link multi-radio operation has been described, but the device on the data transmission side may be the STA that performs the multi-link multi-radio operation, or moreover, may be the AP or the STA that performs the EMLSR operation.

Furthermore, in the above description, an example in which the device on the data reception side is the STA that performs the EMLSR operation has been described. However, the device on the data reception side may be the AP that performs the EMLSR operation, or may be the AP or the STA that performs the multi-link multi-radio operation.

### <Configuration Example of Computer>

The above-described series of processing can be executed by hardware or can be executed by software. In a case where the series of processing is executed by software, a program constituting the software is installed from a program recording medium to a computer incorporated in dedicated hardware, a general-purpose personal computer, or the like.

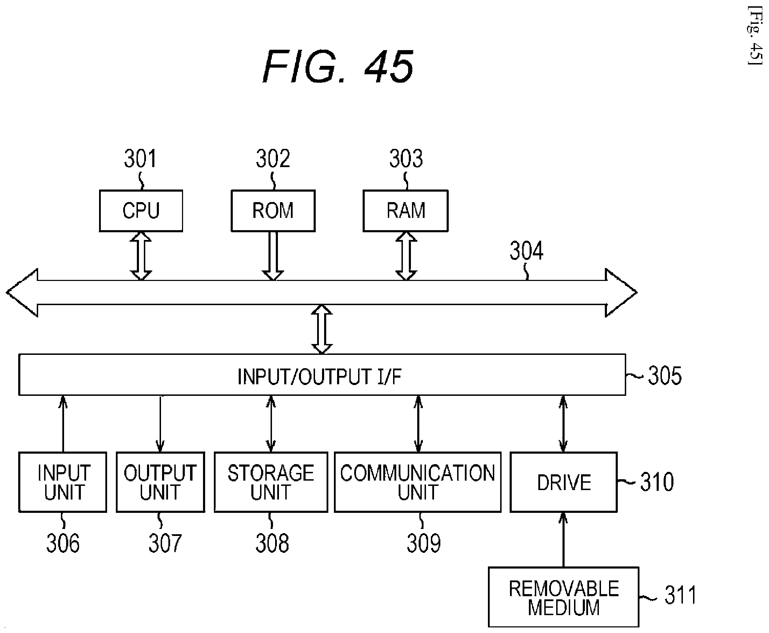

Fig. 45 is a block diagram illustrating a configuration example of the hardware of a computer that executes the above-described series of processing by a program.

A central processing unit (CPU) 301, a read only memory (ROM) 302, and a random access memory (RAM) 303 are mutually connected by a bus 304.

An input/output interface 305 is further connected to the bus 304. An input unit 306 including a keyboard and a mouse, and an output unit 307 including a display and a speaker are connected to the input/output interface 305. Furthermore, a storage unit 308 including a hard disk and a nonvolatile memory, a communication unit 309 including a network interface, and a drive 310 that drives a removable medium 311 are connected to the input/output interface 305.

In the computer configured as described above, for example, the CPU 301 loads a program stored in the storage unit 308 into the RAM 303 via the input/output interface 305 and the bus 304 and executes the program, thereby performing the above-described series of processing.

The program executed by the CPU 301 is provided, for example, by being recorded in the removable medium 311 or via a wired or wireless transmission medium such as a local area network, the Internet, or digital broadcasting, and is installed in the storage unit 308.

Note that the program executed by the computer may be a program in which processing is performed in time series along the order explained in the present description, or may be a program in which processing is performed in parallel or at a necessary timing such as when a call is made.

### <Application Examples>

The present technology can be applied to various products. For example, the wireless communication device 1 in Fig. 5 may be achieved as a mobile terminal such as a smartphone, a tablet personal computer (PC), a laptop PC, a portable game console, or a digital camera, a fixed terminal such as a television receiver, a printer, a digital scanner, or a network storage, or an in-vehicle terminal such as a car navigation device. Furthermore, the wireless communication device 1 may be achieved as a machine to machine communication (M2M) terminal such as a smart meter, a vending machine, a remote monitoring device, or a point of sale (POS) terminal. Moreover, the wireless communication device 1 may be a wireless communication module (for example, integrated circuit module including one die) to be mounted on these terminals.

On the other hand, for example, the wireless communication device 1 may be achieved as an AP (wireless base station) of a wireless LAN having a router function or not having a router function. Furthermore, the wireless communication device 1 may be achieved as a mobile wireless LAN router. Moreover, the wireless communication device 1 may be a wireless communication module (for example, integrated circuit module including one die) to be mounted on these devices.

### <Configuration Example of Smartphone>

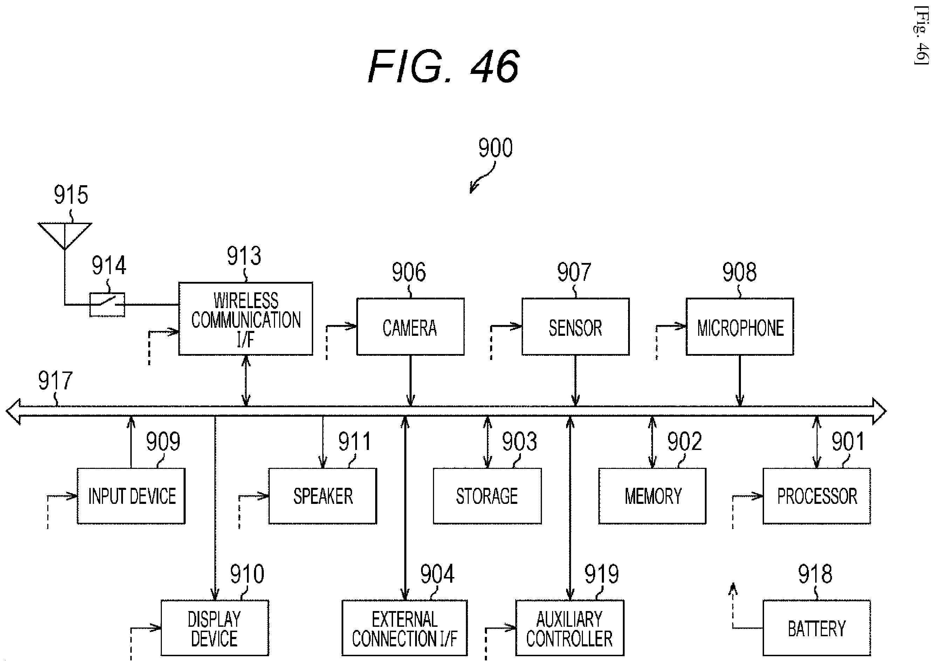

Fig. 46 is a block diagram illustrating a schematic configuration example of a smartphone to which the present technology is applied.

A smartphone 900 includes a processor 901, a memory 902, a storage 903, an external connection interface 904, a camera 906, a sensor 907, a microphone 908, an input device 909, and a display device 910. Furthermore, the smartphone 900 includes a speaker 911, a wireless communication interface 913, an antenna switch 914, an antenna 915, a bus 917, a battery 918, and an auxiliary controller 919.

The processor 901 may be, for example, a CPU or a system on chip (SoC), and restricts functions of an application layer and other layers of the smartphone 900.

The memory 902 includes a RAM and a ROM, and stores programs and data executed by the processor 901.

The storage 903 includes a storage medium such as a semiconductor memory or a hard disk.

The external connection interface 904 is an interface for connecting an external device such as a memory card or a universal serial bus (USB) device to the smartphone 900.

The camera 906 includes an imaging element such as, for example, a charge coupled device (CCD) or a complementary metal oxide semiconductor (CMOS), and generates a captured image.

The sensor 907 includes, for example, a sensor group such as a positioning sensor, a gyro sensor, a geomagnetic sensor, and an acceleration sensor.

The microphone 908 converts, into a sound signal, sound to be input to the smartphone 900.

The input device 909 includes, for example, a touch sensor that detects touching on the screen of the display device 910, a keypad, a keyboard, a button, or a switch, and receives operation or information input from the user.

The display device 910 has a screen such as a liquid crystal display (LCD) or an organic light emitting diode (OLED) display, and converts a sound signal output from the smartphone 900 into sound.

The wireless communication interface 913 supports one or more of wireless LAN standards such as IEEE 802.11a, 11b, 11g, 11ac, 11ad, 11ax, and 11be, and executes wireless communication.

The wireless communication interface 913 communicates with other devices via an AP of a wireless LAN in an infrastructure mode. Furthermore, the wireless communication interface 913 directly communicates with other devices in an ad hoc mode or a direct communication mode such as Wi-Fi Direct.

Note that in the Wi-Fi Direct, unlike the ad-hoc mode, one of two terminals operates as an AP, but communication is directly performed between those terminals.

The wireless communication interface 913 typically includes a baseband processor, a radio frequency (RF) circuit, and a power amplifier. The wireless communication interface 913 may be a one-chip module in which a memory that stores a communication control program, a processor that executes the program, and related circuits are integrated.

In addition to the wireless LAN method, the wireless communication interface 913 may support other types of wireless communication methods such as a near-field communication method, a proximity wireless communication method, and a cellular communication method.

The antenna switch 914 switches the connection destination of the antenna 915 among a plurality of circuits (for example, circuits for different wireless communication methods) included in the wireless communication interface 913.

The antenna 915 has a single or a plurality of antenna elements (for example, a plurality of antenna elements constituting a multiple input multiple output (MIMO) antenna), and is used for transmission and reception of wireless signals by the wireless communication interface 913.

Note that the smartphone 900 is not limited to the example of Fig. 46, and may include a plurality of antennas (for example, antenna for a wireless LAN, an antenna of a proximity wireless communication method, and the like). In that case, the antenna switch 914 may be omitted from the configuration of the smartphone 900.

The bus 917 interconnects the processor 901, the memory 902, the storage 903, the external connection interface 904, the camera 906, the sensor 907, the microphone 908, the input device 909, the display device 910, the speaker 911, the wireless communication interface 913, and the auxiliary controller 919.

The battery 918 supplies power to each block of the smartphone 900 illustrated in Fig. 46 via a power supply line partially indicated by the broken line in the figure. The auxiliary controller 919 operates minimum necessary functions of the smartphone 900, for example, in a sleep mode.

In the smartphone 900 illustrated in Fig. 46, the wireless communication module 15 described above with reference to Fig. 6 or 7 may be implemented in the wireless communication interface 913. Furthermore, at least some of these functions may be implemented in the processor 901 or the auxiliary controller 919.

Note that the smartphone 900 may operate as a wireless AP (software AP) by the processor 901 executing the AP function at an application level. Furthermore, the wireless communication interface 913 may have a wireless AP function.

Moreover, the smartphone 900 may include a biometric authentication unit (fingerprint authentication, palm shape authentication, sound authentication, blood vessel authentication, face authentication, iris authentication, and retina authentication). At that time, the wireless communication interface 913 on which the wireless communication module 15 described above with reference to Fig. 6 or 7 is implemented is configured to receive power supply from the same battery 918 as at least one of the display device 910, the speaker 911, and the biometric authentication unit.

Furthermore, in the smartphone 900, information is displayed from at least one of the display device 910 and the speaker 911 on the basis of communication with an external device by the wireless communication interface 913. At that time, a result of synchronization according to the present technology may be output as information from at least one of the display device 910 and the speaker 911.

### <Configuration Example of In-Vehicle Device>

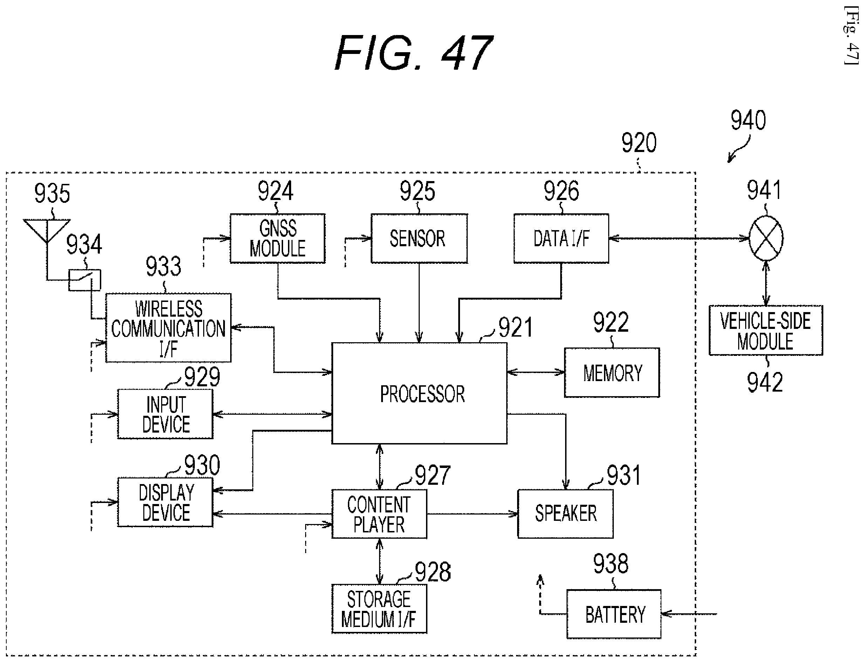

Fig. 47 is a block diagram illustrating an example of a schematic configuration of an in-vehicle device 920 to which the present technology is applied.

The in-vehicle device 920 is configured to include a processor 921, a memory 922, a global navigation satellite system (GNSS) module 924, a sensor 925, a data interface 926, a content player 927, and a storage medium interface 928. Furthermore, the in-vehicle device 920 is configured to include an input device 929, a display device 930, a speaker 931, a wireless communication interface 933, an antenna switch 934, an antenna 935, and a battery 938.

The processor 921 may be, for example, a CPU or an SoC, and controls a navigation function and other functions of the in-vehicle device 920. Furthermore, the processor 921 can also control a drive system of a vehicle such as a brake, an accelerator, or a steering on the basis of information obtained through communication based on the present technology.

The memory 922 includes a RAM and a ROM, and stores programs and data executed by the processor 921.

The GNSS module 924 measures the position (for example, latitude, longitude, and altitude) of the in-vehicle device 920 using the GNSS signal received from a GNSS satellite.

The sensor 925 includes, for example, a sensor group such as a gyro sensor, a geomagnetic sensor, and an atmospheric pressure sensor.

The data interface 926 is connected to an in-vehicle network 941 via a terminal not illustrated, for example, and acquires data generated on the vehicle side such as in-vehicle data.

The content player 927 reproduces content stored in a storage medium (for example, CD or DVD) inserted into the storage medium interface 928.

The input device 929 includes, for example, a touch sensor that detects touching on the screen of the display device 930, a button, or a switch, and receives operation or information input from the user.

The display device 930 has a screen such as an LCD or an OLED display, and displays a navigation function or an image of content to be reproduced.

The speaker 931 outputs sound of the navigation function or reproduced content.

Note that in the in-vehicle device 920, the navigation function and the function by the content player 927 are optional. The navigation function and the content player 927 may be removed from the configuration of the in-vehicle device 920.

The wireless communication interface 933 supports one or more of wireless LAN standards such as IEEE 802.11a, 11b, 11g, 11n, 11ac, 11ad, 11ax, and 11be, and executes wireless communication. The wireless communication interface 933 communicates with other devices via an AP of a wireless LAN in an infrastructure mode. Furthermore, the wireless communication interface 933 directly communicates with other devices in an ad hoc mode or a direct communication mode such as Wi-Fi Direct.

The wireless communication interface 933 typically includes a baseband processor, an RF circuit, and a power amplifier. The wireless communication interface 933 may be a one-chip module in which a memory that stores a communication control program, a processor that executes the program, or related circuits are integrated. In addition to the wireless LAN method, the wireless communication interface 933 may support other types of wireless communication methods such as a near-field communication method, a proximity wireless communication method, and a cellular communication method.

The antenna switch 934 switches the connection destination of the antenna 935 among a plurality of circuits included in the wireless communication interface 933.

The antenna 935 has a single or a plurality of antenna elements, and is used for transmission and reception of wireless signals by the wireless communication interface 933.

Note that the in-vehicle device 920 is not limited to the example of Fig. 47, and may include a plurality of antennas 935. In that case, the antenna switch 934 may be omitted from the configuration of the in-vehicle device 920.

The battery 938 supplies power to each block of the in-vehicle device 920 illustrated in Fig. 47 via a power supply line partially indicated by the broken line in the figure. Furthermore, at least some of these functions may be implemented in the processor 921.

Furthermore, the wireless communication interface 933 may operate as the wireless communication device 1 described above and provide wireless connection to a terminal possessed by the user boarding the vehicle.

Furthermore, the present technology may be achieved as an in-vehicle system (or vehicle) 940 including one or more blocks of the in-vehicle device 920 described above, the in-vehicle network 941, and a vehicle-side module 942. The vehicle-side module 942 generates vehicle-side data such as a vehicle speed, an engine speed, or failure information, and outputs the generated data to the in-vehicle network 941.

### <Configuration Example of Wireless AP>

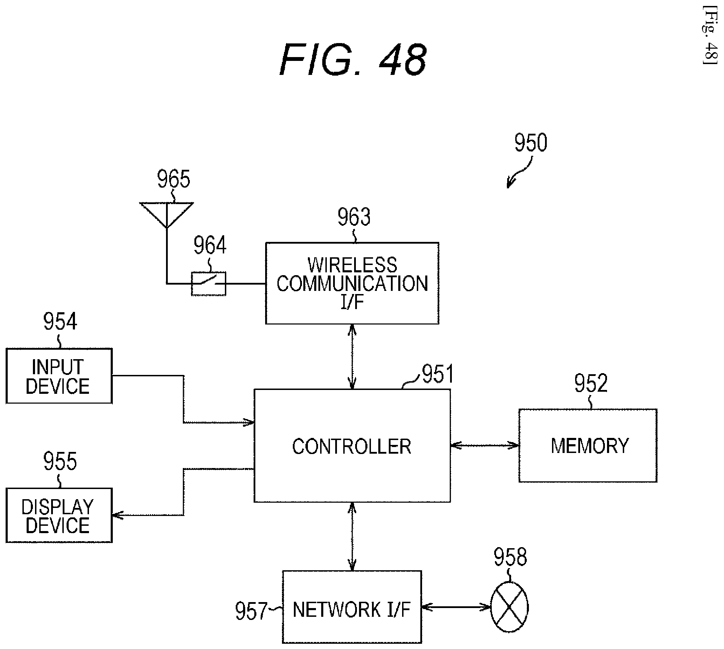

Fig. 48 is a block diagram illustrating an example of a schematic configuration of a wireless AP 950 to which the present technology is applied.

The wireless AP 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP), and operates various functions (for example, access restrictions, routing, encryption, firewalls, log management, and the like) of an Internet protocol (IP) layer and higher layers of the wireless AP 950.

The memory 952 includes a RAM and a ROM, and stores programs executed by the controller 951 and various control data (for example, terminal lists, routing tables, encryption keys, security setting, logs, and the like).

The input device 954 includes, for example, a button and a switch, and receives operation from the user.

The display device 955 includes an LED lamp, and displays an operation status of the wireless AP 950.

The network interface 957 is a wired communication interface for the wireless AP 950 to connect to a wired communication network 958. The network interface 957 may have a plurality of connection terminals. The wired communication network 958 may be a LAN such as Ethernet (registered trademark), or may be a wide area network (WAN).

The wireless communication interface 963 supports one or more of wireless LAN standards such as IEEE 802.11a, llb, Ilg, lln, llac, llad, llax, and llbe, and provides wireless connection as the AP to nearby terminals.

The wireless communication interface 963 typically includes a baseband processor, an RF circuit, and a power amplifier.

The wireless communication interface 963 may be a one-chip module in which a memory that stores a communication control program, a processor that executes the program, or related circuits are integrated.

The antenna switch 964 switches the connection destination of the antenna 965 among a plurality of circuits included in the wireless communication interface 963, and the antenna 965 has a single or a plurality of antenna elements, and is used for transmission and reception of wireless signals by the wireless communication interface 963.

In the wireless AP 950 illustrated in Fig. 48, the wireless communication module 15 described above with reference to Fig. 6 or 7 may also be implemented in the wireless communication interface 963. Furthermore, at least some of these functions may be implemented in the controller 951.

Note that the above-described embodiments illustrate an example for embodying the present technology, and the matters in the embodiments and the invention specifying matters in the claims have respective correspondence relationships. Similarly, the matters specifying the invention in the claims and the matters in the embodiments of the present technology denoted by the same names as them have respective correspondence relationships. However, the present technology is limited only by the claims, and can be embodied by making various modifications to the embodiments within the scope of the claims.

Furthermore, the processing procedure described in the above-described embodiments may be regarded as a method having a series of these procedures, and may
be regarded as a program for causing a computer to execute the series of these
procedures or a recording medium storing the program.

As this recording medium, for example, a compact disc (CD), a MiniDisc (MD), a digital versatile disc (DVD), a memory card, a Blu-ray (registered trademark) disc, or
the like can be used.

Note that in the present description, a system means a set of a plurality of configuration elements (devices, modules (components), and the like), and it does not matter whether or not all the configuration elements are in a same housing. Accordingly, a plurality of devices accommodated in separate housings and connected via a network and one device in which a plurality of modules is accommodated in one housing are both systems.

Furthermore, the effects described in the present description are merely examples and are not limited, and other effects may exist.

The embodiments of the present technology are not limited to the above-described embodiments, and various modifications can be made without departing from the scope of the claims.

For example, the present technology can have a configuration of cloud computing in which one function is shared and processed in cooperation by a plurality of devices via a network.

Furthermore, each step explained in the above-described flowcharts can be executed by one device or executed by a plurality of devices in a shared manner.

Moreover, in a case where one step includes a plurality of processing, the plurality of processing included in the one step can be executed by one device or executed by a plurality of devices in a shared manner.

### <Configuration Combination Examples>

The present technology can also have the following configurations.
(1) A wireless communication control device including:
   a communication control unit that performs control to receive first information from a wireless communication device via one link of a plurality of links preset with the wireless communication device, and to transmit second information indicating an available link of the plurality of links.
(2) The wireless communication control device according to (1), in which the communication control unit performs control to include, and transmit, the second information in a response frame of reception acknowledgement corresponding to a data frame.
(3) The wireless communication control device according to (2), in which the first information is a data frame, and the communication control unit performs control to include, and transmit, the second information in a response frame of the reception acknowledgement corresponding to
   the first information.
(4) The wireless communication control device according to (3), in which
   the communication control unit includes the second information in a reserved bit area of a response frame of the reception acknowledgement.
(5) The wireless communication control device according to (3), in which
   the communication control unit performs control to transmit the second information after a BA information area in a response frame of the reception acknowledgement.
(6) The wireless communication control device according to (3), in which
   in a case where there is a plurality of available links, the communication control unit includes the second information in a response frame of the reception acknowledgement in bitmap format.
(7) The wireless communication control device according to (3), in which
   in a case where there is a plurality of available links, the communication control unit selects one link and includes the second information in a response frame of the reception acknowledgement.
(8) The wireless communication control device according to any of (1) to (5), in which
   in a case where there is a plurality of available links, the communication control unit performs control to transmit information indicating a plurality of links as the second information.
(9) The wireless communication control device according to any one of (1) to (8) further including:
   a communication unit that sets, as a link used to receive the first information, a link indicated in the second information, and waits for the first information.
(10) The wireless communication control device according to any one of (1) to (9), in which
   in a case where there is undelivered data from the wireless communication device or data to be transmitted by the communication control unit itself, the communication control unit generates the second information.
(11) The wireless communication control device according to any one of (1) to (10) further including:
   a link usage status detection unit that detects a usage status of the plurality of links, in which
   the communication control unit generates the second information on the basis of the usage status of the plurality of links having been detected.
(12) The wireless communication control device according to (11), in which
   the first information generates the second information on the basis of third information, which is information on an available link of the wireless communication device.
(13) The wireless communication control device according to any one of (1) to (12), in which
   the communication control unit performs control to transmit information regarding a transmission capability of the second information prior to reception of the first information.
(14) The wireless communication control device according to any one of (1) to (13), in which
   the wireless communication control device is a device that performs operation compatible with extended multi-link single radio (EMLSR).
(15) A wireless communication control method, in which
   a wireless communication control device performs control to receive first information from a wireless communication device via one link of a plurality of links preset with the wireless communication device, and to transmit second information indicating an available link of the plurality of links.
(16) A program for causing a computer to function as
   a communication control unit that performs control to receive first information from a wireless communication device via one link of a plurality of links preset with the wireless communication device, and to transmit second information indicating an available link of the plurality of links.
(17) A wireless communication control device including:
   a communication control unit that performs control to transmit first information to a wireless communication device via one link of a plurality of links preset with the wireless communication device, acquires second information indicating an available link of the plurality of links, and specifies a link to be used for communication performed after reception of the second information on the basis of the second information.
(18) A wireless communication control method, in which
   a wireless communication control device performs control to transmit first information to a wireless communication device via one link of a plurality of links preset with the wireless communication device, acquires second information indicating an available link of the plurality of links, and specifies a link to be used for communication performed after reception of the second information on the basis of the second information.
(19) A program for causing a computer to function as
   a communication control unit that performs control to transmit first information to a wireless communication device via one link of a plurality of links preset with the wireless communication device, acquires second information indicating an available link of the plurality of links, and specifies a link to be used for communication performed after reception of the second information on the basis of the second information.

(1A) A wireless communication control device comprising:
   circuitry configured to perform control:
   to receive first information from a wireless communication device via one link of a plurality of links preset with the wireless communication device, and
   to transmit second information indicating an available link of the plurality of links.
(2A) The wireless communication control device according to (1A), wherein
   the circuitry performs the control according to a Wi-Fi wireless network protocol.
(3A) The wireless communication control device according to (1A) or (2A), wherein
   the first information is in a data frame, and
   the circuitry is configured to perform control to include the second information in a response frame of a reception acknowledgement associated with reception of the first information in the data frame, and to control transmission of the response frame.
(4A) The wireless communication control device according to any one of (1A) to (3A), wherein
   the circuitry is configured to include the second information in a predefined bit area of a response frame of the reception acknowledgement.
(5A) The wireless communication control device according to any one of (1A) to (4A), wherein
   the circuitry is configured to perform control to transmit the second information after a block acknowledge (BA) information area in a response frame of the reception acknowledgement.
(6A) The wireless communication control device according to any one of (1A) to (5A), wherein
   the circuitry is configured to, in a case where there is a plurality of available links, include the second information in a response frame of the reception acknowledgement in bitmap format.
(7A) The wireless communication control device according to any one of (1A) to (6A), wherein
   the circuitry is configured to, in a case where there is a plurality of available links, select one link and include the second information in a response frame of the reception acknowledgement.
(8A) The wireless communication control device according to any one of (1A) to (7A), wherein
   the circuitry is configured to, in a case where there is a plurality of available links, perform control to transmit information indicating a plurality of links as the second information.
(9A) The wireless communication control device according to any one of (1A) to (8A), further comprising:
   communication circuitry configured:
   to set, as a link used to receive a next occurrence of the first information, a link indicated in the second information, and
   to wait for the next occurrence of reception the first information.
(10A) The wireless communication control device according to any one of (1A) to (9A), wherein
   the circuitry is configured to, in a case where there is undelivered data from the wireless communication device or data to be transmitted by the wireless communication control device itself, generate the second information.
(11A) The wireless communication control device according to any one of (1A) to (10A), further comprising:
   a link usage status detector configured to detect a usage status of the plurality of links,
   wherein
   the circuitry is configured to generate the second information based on the usage status of the plurality of links having been detected by the detector.
(12A) The wireless communication control device according to any one of (1A) to (11A), wherein
   the circuitry generates the second information based on third information, which is information on an available link of the wireless communication device.
(13A) The wireless communication control device according to any one of (1A) to (12A), wherein
   the circuitry is configured to perform control to transmit information regarding a transmission capability of the second information prior to reception of the first information.
(14A) The wireless communication control device according to any one of (1A) to (13A), wherein
   the wireless communication control device is a device configured to perform operations compatible with extended multi-link single radio (EMLSR).
(15A) A wireless communication control method, comprising:
   performing control, using a processor of a wireless communication control device, to receive first information from a wireless communication device via one link of a plurality of links preset with the wireless communication device; and
   performing control, using the processor of the wireless communication control device, to transmit second information indicating an available link of the plurality of links.
(16A) A non-transitory computer-readable storage medium having stored thereon instructions that, when executed by one or more processors of a wireless communication control device, causes the one or more processors to perform a method comprising:
   performing control to receive first information from a wireless communication device via one link of a plurality of links preset with the wireless communication device; and performing control to transmit second information indicating an available link of the plurality of links.
(17A) A wireless communication control device comprising:
   circuitry configured to perform control to:
   transmit first information to a wireless communication device via one link of a plurality of links preset with the wireless communication device, acquire second information indicating an available link of the plurality of links, and specify a link to be used for communication performed after reception of the second information based on the second information.
(18A) A wireless communication control method, comprising:
   performing control, using a processor of a wireless communication control device, to transmit first information to a wireless communication device via one link of a plurality of links preset with the wireless communication device; performing control, using the processor of the wireless
   communication control device, to acquire second information indicating an available link of the plurality of links; and specifying, using the processor of the wireless communication control device, a link to be used for communication performed after reception of the second information based on the second information.
(19A) A non-transitory computer-readable storage medium having stored thereon instructions that, when executed by one or more processors of a wireless communication control device, causes the one or more processors to perform a method comprising: performing control to transmit first information to a wireless communication device via one link of a plurality of links preset with the wireless communication device;
   performing control to acquire second information indicating an available link of the plurality of links; and
   specifying a link to be used for communication performed after reception of the second information based on the second information.

It should be understood by those skilled in the art that various modifications, combinations, sub-combinations and alterations may occur depending on design requirements and other factors insofar as they are within the scope of the appended claims.

As will be appreciated by one skilled in the art, aspects of the present disclosure may be embodied as a system, method or computer program product. Accordingly, aspects of the present disclosure may take the form of an entirely hardware embodiment, an entirely software embodiment, including firmware, resident software, or micro-code, as examples, or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. The processor may be a programmed processor which executes a program stored in a memory. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

Further, as used herein, the term "circuitry" can refer to any or all of the following: (a) hardware-only circuit implementations (such as implementations in only analog and/or digital circuitry); (b) to combinations of circuits and software (and/or firmware), such as (as applicable): (i) a combination of processor(s) or (ii) portions of processor(s)/software (including digital signal processor(s)), software and memory(ies) that work together to cause an apparatus, such as a mobile phone or server, to perform various functions); and (c) to circuits, such as a microprocessor(s) or a portion of a microprocessor(s), that require software or firmware for operation, even if the software or firmware is not physically present. This definition of "circuitry" can apply to all uses of this term in this application, including in any claims. As a further example, as used in this application, the term "circuitry" can also cover an implementation of merely a processor (or multiple processors) or portion of a processor and its (or their) accompanying software and/or firmware.

### Reference Signs List

1 Wireless communication device
11 Internet connection module
12 Information input module
13 Equipment control module
14 Information output module
15 Wireless communication module
21 Data buffer
22 Data construction unit
23 Multi-link control unit
24 Multi-link MAC processing unit
25 Multi-link PHY processing unit
26 Multi-link RF signal processing unit
27 Multi-link RF detection unit
28 Multi-link PHY reception unit
29 Multi-link MAC determination unit
30 Data processing unit
31 Pre-configure link determination unit
51 Data buffer
52 Single radio data processing unit
53 Single radio MAC processing unit
54 Single radio PHY signal processing unit
55 Single radio RF signal processing unit
56 Single radio control unit
57 Single radio MAC determination unit
58 Single radio PHY reception unit
59 Single radio RF detection unit

## Claims

1. A wireless communication control device (1) comprising:
circuitry configured to perform control:
to receive first information in a data frame from a wireless communication device via one link of a plurality of links preset with the wireless communication device,
in a case where there is a plurality of available links of the plurality of links, to select one link of the plurality of available links,
to perform control to include second information indicating the selected available link of the plurality of links in a response frame of a reception acknowledgement associated with reception of the first information in the data frame,
to control transmission of the response frame, and
to set, as a link used to receive a next occurrence of the first information, the selected available link indicated in the second information, and
to wait for the next occurrence of reception the first information.

2. The wireless communication control device according to claim 1, wherein
the circuitry performs the control according to a Wi-Fi wireless network protocol.

3. The wireless communication control device according to claim 2, wherein
the circuitry is configured to include the second information in a predefined bit area of a response frame of the reception acknowledgement.

4. The wireless communication control device according to claim 1, wherein
the circuitry is configured to perform control to transmit the second information after a block acknowledge (BA) information area in a response frame of the reception acknowledgement.

5. The wireless communication control device according to claim 1, wherein
the circuitry is configured to, in a case where there is a plurality of available links, include the second information in a response frame of the reception acknowledgement in bitmap format.

6. The wireless communication control device according to claim 1, wherein
the circuitry is configured to, in a case where there is undelivered data from the wireless communication device or data to be transmitted by the wireless communication control device itself, generate the second information.

7. The wireless communication control device according to claim 1 further comprising:
a link usage status detection detector configured to detect a usage status of the plurality of links, wherein
the circuitry is configured to generate the second information based on the usage status of the plurality of links having been detected by the detector.

8. The wireless communication control device according to claim 7, wherein
the circuitry generates the second information based on third information, which is information on an available link of the wireless communication device.

9. The wireless communication control device according to claim 1, wherein
the circuitry is configured to perform control to transmit information regarding a transmission capability of the second information prior to reception of the first information.

10. A wireless communication control method, comprising:
performing control, using a processor of a wireless communication control device, to receive first information in a data frame from a wireless communication device via one link of a plurality of links preset with the wireless communication device;
in a case where there is a plurality of available links of the plurality of links, selecting one link of the plurality of available links;
performing control, using the processor of the wireless communication control device, to include second information indicating the selected available link of the plurality of links in a response frame of a reception acknowledgement associated with reception of the first information in the data frame;
performing control to transmit the response frame, and
setting, as a link used to receive a next occurrence of the first information, the selected available link indicated in the second information; and
waiting for the next occurrence of reception the first information.

11. A non-transitory computer-readable storage medium having stored thereon instructions that, when executed by one or more processors of a wireless communication control device, causes the one or more processors to perform a method comprising:
performing control to receive first information in a data frame from a wireless communication device via one link of a plurality of links preset with the wireless communication device;
in a case where there is a plurality of available links of the plurality of links, selecting one link of the plurality of available links;
performing control to include second information indicating the selected available link of the plurality of links in a response frame of a reception acknowledgement associated with reception of the first information in the data frame;
performing control to transmit the response frame,
setting, as a link used to receive a next occurrence of the first information, the selected available link indicated in the second information; and
waiting for the next occurrence of reception the first information.

12. A wireless communication control device comprising:
circuitry configured to perform control to:
transmit first information in a data frame to a wireless communication device via one link of a plurality of links preset with the wireless communication device,
acquire second information indicating a selected available link of the plurality of links in a response frame of a reception acknowledgement associated with reception of the first information in the data frame, and
specify the selected available link to be used for communication performed after reception of the second information based on the second information.

13. A wireless communication control method, comprising:
performing control, using a processor of a wireless communication control device, to transmit first information in a data frame to a wireless communication device via one link of a plurality of links preset with the wireless communication device;
performing control, using the processor of the wireless communication control device, to acquire second information indicating a selected available link of the plurality of links in a response frame of a reception acknowledgement associated with reception of the first information in the data frame; and
specifying, using the processor of the wireless communication control device, the selected available link to be used for communication performed after reception of the second information based on the second information.

14. A non-transitory computer-readable storage medium having stored thereon instructions that, when executed by one or more processors of a wireless communication control device, causes the one or more processors to perform a method comprising:
performing control to transmit first information in a data frame to a wireless communication device via one link of a plurality of links preset with the wireless communication device;
performing control to acquire second information indicating a selected available link of the plurality of links in a response frame of a reception acknowledgement associated with reception of the first information in the data frame; and
specifying the selected available link to be used for communication performed after reception of the second information based on the second information.

## Patentansprüche

1. Steuerungsvorrichtung (1) für drahtlose Kommunikation, umfassend:
eine Schaltungsanordnung, die konfiguriert ist, um eine Steuerung durchzuführen:
um erste Informationen in einem Datenrahmen von einer drahtlosen Kommunikationsvorrichtung über eine Verbindung einer Vielzahl von Verbindungen zu empfangen, die mit der drahtlosen Kommunikationsvorrichtung voreingestellt sind,
in einem Fall, in dem eine Vielzahl von verfügbaren Verbindungen der Vielzahl von Verbindungen vorhanden ist, um eine Verbindung der Vielzahl von verfügbaren Verbindungen auszuwählen,
um eine Steuerung durchzuführen, um zweite Informationen einzuschließen, die die ausgewählte verfügbare Verbindung der Vielzahl von Verbindungen in einem Antwortrahmen einer Empfangsbestätigung angeben, die mit dem Empfang der ersten Informationen in dem Datenrahmen in Zusammenhang steht,
um eine Übertragung des Antwortrahmens zu steuern, und
um als Verbindung, die zum Empfangen eines nächsten Auftretens der ersten Informationen verwendet wird, die in den zweiten Informationen angegebene ausgewählte verfügbare Verbindung festzulegen, und
auf das nächste Auftreten des Empfangs der ersten Informationen zu warten.

2. Steuerungsvorrichtung für drahtlose Kommunikation nach Anspruch 1, wobei
die Schaltungsanordnung die Steuerung gemäß einem Wi-Fi-Drahtlosnetzwerkprotokoll durchführt.

3. Steuerungsvorrichtung für drahtlose Kommunikation nach Anspruch 2, wobei
die Schaltungsanordnung konfiguriert ist, um die zweiten Informationen in einen vordefinierten Bitbereich eines Antwortrahmens der Empfangsbestätigung einzuschließen.

4. Steuerungsvorrichtung für drahtlose Kommunikation nach Anspruch 1, wobei
die Schaltungsanordnung konfiguriert ist, um eine Steuerung durchzuführen, um die zweiten Informationen nach einem Blockbestätigungsinformationsbereich (BA-Informationsbereich) in einem Antwortrahmen der Empfangsbestätigung zu übertragen.

5. Steuerungsvorrichtung für drahtlose Kommunikation nach Anspruch 1, wobei
die Schaltungsanordnung konfiguriert ist, um in einem Fall, in dem eine Vielzahl von verfügbaren Verbindungen vorhanden ist, die zweiten Informationen in einem Antwortrahmen der Empfangsbestätigung in Bitmap-Format einzuschließen.

6. Steuerungsvorrichtung für drahtlose Kommunikation nach Anspruch 1, wobei
die Schaltungsanordnung konfiguriert ist, um in einem Fall, in dem nicht übermittelte Daten von der drahtlosen Kommunikationsvorrichtung vorhanden oder Daten durch die Steuerungsvorrichtung für drahtlose Kommunikation selbst zu übertragen sind, die zweiten Informationen zu erzeugen.

7. Steuerungsvorrichtung für drahtlose Kommunikation nach Anspruch 1, ferner umfassend:
einen Verbindungsnutzungsstatus-Erfassungsdetektor, der konfiguriert ist, um einen Nutzungsstatus der Vielzahl von Verbindungen zu erfassen, wobei
die Schaltungsanordnung konfiguriert ist, um die zweiten Informationen basierend auf dem Nutzungsstatus der Vielzahl von Verbindungen zu erzeugen, der durch den Detektor erfasst worden ist.

8. Steuerungsvorrichtung für drahtlose Kommunikation nach Anspruch 7, wobei
die Schaltungsanordnung die zweiten Informationen basierend auf dritten Informationen erzeugt, bei denen es sich um Informationen über eine verfügbare Verbindung der drahtlosen Kommunikationsvorrichtung handelt.

9. Steuerungsvorrichtung für drahtlose Kommunikation nach Anspruch 1, wobei
die Schaltungsanordnung konfiguriert ist, um eine Steuerung durchzuführen, um Informationen bezüglich einer Übertragungsfähigkeit der zweiten Informationen vor dem Empfang der ersten Informationen zu übertragen.

10. Steuerungsverfahren für drahtlose Kommunikation, umfassend:
Durchführen einer Steuerung unter Verwendung eines Prozessors einer Steuerungsvorrichtung für drahtlose Kommunikation, um erste Informationen in einem Datenrahmen von einer drahtlosen Kommunikationsvorrichtung über eine Verbindung einer Vielzahl von Verbindungen zu empfangen, die mit der drahtlosen Kommunikationsvorrichtung voreingestellt sind;
in einem Fall, in dem eine Vielzahl von verfügbaren Verbindungen der Vielzahl von Verbindungen vorhanden ist, Auswählen einer Verbindung der Vielzahl von verfügbaren Verbindungen;
Durchführen einer Steuerung unter Verwendung des Prozessors der Steuerungsvorrichtung für drahtlose Kommunikation, um zweite Informationen einzuschließen, die die ausgewählte verfügbare Verbindung der Vielzahl von Verbindungen in einem Antwortrahmen einer Empfangsbestätigung angeben, die mit dem Empfang der ersten Informationen in dem Datenrahmen in Zusammenhang steht;
Durchführen einer Steuerung zum Übertragen des Antwortrahmens, und
Festlegen der ausgewählten verfügbaren Verbindung, die in den zweiten Informationen angegeben ist, als Verbindung, die verwendet wird, um ein nächstes Auftreten der ersten Informationen zu empfangen; und
Warten auf das nächste Auftreten des Empfangs der ersten Informationen.

11. Nichtflüchtiges computerlesbares Speichermedium, das darauf gespeicherte Anweisungen aufweist, die, wenn sie durch einen oder mehrere Prozessoren einer Steuerungsvorrichtung für drahtlose Kommunikation ausgeführt werden, den einen oder die mehreren Prozessoren veranlassen, ein Verfahren durchzuführen, umfassend:
Durchführen einer Steuerung, um erste Informationen in einem Datenrahmen von einer drahtlosen Kommunikationsvorrichtung über eine Verbindung einer Vielzahl von Verbindungen zu empfangen, die mit der drahtlosen Kommunikationsvorrichtung voreingestellt sind;
in einem Fall, in dem eine Vielzahl von verfügbaren Verbindungen der Vielzahl von Verbindungen vorhanden ist, Auswählen einer Verbindung der Vielzahl von verfügbaren Verbindungen;
Durchführen einer Steuerung, um zweite Informationen einzuschließen, die die ausgewählte verfügbare Verbindung der Vielzahl von Verbindungen in einem Antwortrahmen einer Empfangsbestätigung angeben, die mit dem Empfang der ersten Informationen in dem Datenrahmen in Zusammenhang steht;
Durchführen einer Steuerung zum Übertragen des Antwortrahmens,
Festlegen der ausgewählten verfügbaren Verbindung, die in den zweiten Informationen angegeben ist, als Verbindung, die verwendet wird, um ein nächstes Auftreten der ersten Informationen zu empfangen; und
Warten auf das nächste Auftreten des Empfangs der ersten Informationen.

12. Steuerungsvorrichtung für drahtlose Kommunikation, umfassend:
eine Schaltungsanordnung, die konfiguriert ist, um eine Steuerung durchzuführen zum:
Übertragen erster Informationen in einem Datenrahmen zu einer drahtlosen Kommunikationsvorrichtung über eine Verbindung einer Vielzahl von Verbindungen, die mit der drahtlosen Kommunikationsvorrichtung voreingestellt sind,
Erfassen zweiter Informationen, die eine ausgewählte verfügbare Verbindung der Vielzahl von Verbindungen in einem Antwortrahmen einer Empfangsbestätigung angeben, die mit dem Empfang der ersten Informationen in dem Datenrahmen in Zusammenhang steht, und
Spezifizieren der ausgewählten verfügbaren Verbindung, die für eine nach dem Empfang der zweiten Informationen durchgeführte Kommunikation basierend auf den zweiten Informationen verwendet werden soll.

13. Steuerungsverfahren für drahtlose Kommunikation, umfassend:
Durchführen einer Steuerung unter Verwendung eines Prozessors einer Steuerungsvorrichtung für drahtlose Kommunikation, um erste Informationen in einem Datenrahmen zu einer drahtlosen Kommunikationsvorrichtung über eine Verbindung einer Vielzahl von Verbindungen zu übertragen, die mit der drahtlosen Kommunikationsvorrichtung voreingestellt sind;
Durchführen einer Steuerung unter Verwendung des Prozessors der Steuerungsvorrichtung für drahtlose Kommunikation, um zweite Informationen zu erfassen, die eine ausgewählte verfügbare Verbindung der Vielzahl von Verbindungen in einem Antwortrahmen einer Empfangsbestätigung angeben, die mit dem Empfang der ersten Informationen in dem Datenrahmen in Zusammenhang steht; und
Spezifizieren, unter Verwendung des Prozessors der Steuerungsvorrichtung für drahtlose Kommunikation, der ausgewählten verfügbaren Verbindung, die für eine nach dem Empfang der zweiten Informationen durchgeführte Kommunikation verwendet werden soll, basierend auf den zweiten Informationen.

14. Nichtflüchtiges computerlesbares Speichermedium, das darauf gespeicherte Anweisungen aufweist, die, wenn sie durch einen oder mehrere Prozessoren einer Steuerungsvorrichtung für drahtlose Kommunikation ausgeführt werden, den einen oder die mehreren Prozessoren veranlassen, ein Verfahren durchzuführen, umfassend:
Durchführen einer Steuerung, um erste Informationen in einem Datenrahmen zu einer drahtlosen Kommunikationsvorrichtung über eine Verbindung einer Vielzahl von Verbindungen zu übertragen, die mit der drahtlosen Kommunikationsvorrichtung voreingestellt sind;
Durchführen einer Steuerung, um zweite Informationen zu erfassen, die eine ausgewählte verfügbare Verbindung der Vielzahl von Verbindungen in einem Antwortrahmen einer Empfangsbestätigung angeben, die mit dem Empfang der ersten Informationen in dem Datenrahmen in Zusammenhang steht; und
Spezifizieren der ausgewählten verfügbaren Verbindung, die für eine nach dem Empfang der zweiten Informationen durchgeführte Kommunikation basierend auf den zweiten Informationen verwendet werden soll.

## Revendications

1. Dispositif de commande de communication sans fil (1) comprenant :
un système de circuits configuré pour réaliser une commande :
pour recevoir de premières informations dans une trame de données à partir d'un dispositif de communication sans fil par l'intermédiaire d'une liaison d'une pluralité de liaisons prédéfinies avec le dispositif de communication sans fil,
dans un cas où il existe une pluralité de liaisons disponibles parmi la pluralité de liaisons, pour sélectionner une liaison parmi la pluralité de liaisons disponibles,
pour réaliser une commande afin d'inclure de deuxièmes informations indiquant la liaison disponible sélectionnée parmi la pluralité de liaisons dans une trame de réponse d'un accusé de réception de réception associé à la réception des premières informations dans la trame de données,
pour commander une transmission de la trame de réponse, et
pour définir, en tant que liaison utilisée pour recevoir une occurrence suivante des premières informations, la liaison disponible sélectionnée indiquée dans les deuxièmes informations, et
pour attendre la prochaine occurrence de réception des premières informations.

2. Dispositif de commande de communication sans fil selon la revendication 1, dans lequel
le système de circuits réalise la commande selon un protocole de réseau sans fil Wi-Fi.

3. Dispositif de commande de communication sans fil selon la revendication 2, dans lequel
le système de circuits est configuré pour inclure les deuxièmes informations dans une zone binaire prédéfinie d'une trame de réponse de l'accusé de réception de réception.

4. Dispositif de commande de communication sans fil selon la revendication 1, dans lequel
le système de circuits est configuré pour réaliser une commande pour transmettre les deuxièmes informations après une zone d'informations d'accusé de réception de bloc (BA) dans une trame de réponse de l'accusé de réception de réception.

5. Dispositif de commande de communication sans fil selon la revendication 1, dans lequel
le système de circuits est configuré pour, dans un cas où il existe une pluralité de liaisons disponibles, inclure les deuxièmes informations dans une trame de réponse de l'accusé de réception de réception en format de table de bits.

6. Dispositif de commande de communication sans fil selon la revendication 1, dans lequel
le système de circuits est configuré pour, dans un cas où il existe des données non distribuées à partir du dispositif de communication sans fil ou des données à transmettre par le dispositif de commande de communication sans fil lui-même, générer les deuxièmes informations.

7. Dispositif de commande de communication sans fil selon la revendication 1, comprenant en outre :
un détecteur de détection d'état d'utilisation de liaison configuré pour détecter un état d'utilisation de la pluralité de liaisons, dans lequel
le système de circuits est configuré pour générer les secondes informations en fonction de l'état d'utilisation de la pluralité de liaisons ayant été détectée par le détecteur.

8. Dispositif de commande de communication sans fil selon la revendication 7, dans lequel
le système de circuits génère les deuxièmes informations en fonction de troisièmes informations, qui sont des informations sur une liaison disponible du dispositif de communication sans fil.

9. Dispositif de commande de communication sans fil selon la revendication 1, dans lequel
le système de circuits est configuré pour réaliser une commande pour transmettre des informations concernant une capacité de transmission des deuxièmes informations avant la réception des premières informations.

10. Procédé de commande de communication sans fil, comprenant :
la réalisation d'une commande, à l'aide d'un processeur d'un dispositif de commande de communication sans fil, pour recevoir de premières informations dans une trame de données à partir d'un dispositif de communication sans fil par l'intermédiaire d'une liaison d'une pluralité de liaisons prédéfinies avec le dispositif de communication sans fil ;
dans un cas où il existe une pluralité de liaisons disponibles parmi la pluralité de liaisons, la sélection d'une liaison parmi la pluralité de liaisons disponibles ;
la réalisation d'une commande, à l'aide du processeur du dispositif de commande de communication sans fil, pour inclure de deuxièmes informations indiquant la liaison disponible sélectionnée parmi la pluralité de liaisons dans une trame de réponse d'un accusé de réception de réception associé à la réception des premières informations dans la trame de données ;
la réalisation d'une commande pour transmettre la trame de réponse, et
la définition, en tant que liaison utilisée pour recevoir une occurrence suivante des premières informations, de la liaison disponible sélectionnée indiquée dans les deuxièmes informations ; et
l'attente de l'occurrence suivante de réception des premières informations.

11. Support de stockage non transitoire lisible par ordinateur sur lequel sont stockées des instructions qui, lorsqu'elles sont exécutées par un ou plusieurs processeurs d'un dispositif de commande de communication sans fil, amènent le ou les processeurs à réaliser un procédé comprenant :
la réalisation d'une commande pour recevoir de premières informations dans une trame de données à partir d'un dispositif de communication sans fil par l'intermédiaire d'une liaison d'une pluralité de liaisons prédéfinies avec le dispositif de communication sans fil ;
dans un cas où il existe une pluralité de liaisons disponibles parmi la pluralité de liaisons, la sélection d'une liaison parmi la pluralité de liaisons disponibles ;
la réalisation d'une commande pour inclure de deuxièmes informations indiquant la liaison disponible sélectionnée parmi la pluralité de liaisons dans une trame de réponse d'un accusé de réception de réception associé à la réception des premières informations dans la trame de données ;
la réalisation d'une commande pour transmettre la trame de réponse,
la définition, en tant que liaison utilisée pour recevoir une occurrence suivante des premières informations, de la liaison disponible sélectionnée indiquée dans les deuxièmes informations ; et
l'attente de l'occurrence suivante de réception des premières informations.

12. Dispositif de commande de communication sans fil comprenant :
un système de circuits configuré pour réaliser une commande pour :
transmettre de premières informations dans une trame de données à un dispositif de communication sans fil par l'intermédiaire d'une liaison d'une pluralité de liaisons prédéfinies avec le dispositif de communication sans fil,
acquérir de deuxièmes informations indiquant une liaison disponible sélectionnée parmi la pluralité de liaisons dans une trame de réponse d'un accusé de réception de réception associé à la réception des premières informations dans la trame de données, et
spécifier la liaison disponible sélectionnée à utiliser pour une communication réalisée après la réception des deuxièmes informations en fonction des deuxièmes informations.

13. Procédé de commande de communication sans fil, comprenant :
la réalisation d'une commande, à l'aide d'un processeur d'un dispositif de commande de communication sans fil, pour transmettre de premières informations dans une trame de données à un dispositif de communication sans fil par l'intermédiaire d'une liaison d'une pluralité de liaisons prédéfinies avec le dispositif de communication sans fil ;
la réalisation d'une commande, à l'aide du processeur du dispositif de commande de communication sans fil, pour acquérir de deuxièmes informations indiquant une liaison disponible sélectionnée parmi la pluralité de liaisons dans une trame de réponse d'un accusé de réception de réception associé à la réception des premières informations dans la trame de données ; et
la spécification, à l'aide du processeur du dispositif de commande de communication sans fil, de la liaison disponible sélectionnée à utiliser pour une communication réalisée après réception des deuxièmes informations en fonction des deuxièmes informations.

14. Support de stockage non transitoire lisible par ordinateur sur lequel sont stockées des instructions qui, lorsqu'elles sont exécutées par un ou plusieurs processeurs d'un dispositif de commande de communication sans fil, amènent le ou les processeurs à réaliser un procédé comprenant :
la réalisation d'une commande pour transmettre de premières informations dans une trame de données à un dispositif de communication sans fil par l'intermédiaire d'une liaison d'une pluralité de liaisons prédéfinies avec le dispositif de communication sans fil ;
la réalisation d'une commande pour acquérir de deuxièmes informations indiquant une liaison disponible sélectionnée parmi la pluralité de liaisons dans une trame de réponse d'un accusé de réception de réception associé à la réception des premières informations dans la trame de données ; et
la spécification de la liaison disponible sélectionnée à utiliser pour une communication réalisée après réception des deuxièmes informations en fonction des deuxièmes informations.
